# EUROPEAN PATENT APPLICATION

(11) **EP 4 738 282 A1**
(43) Date of publication of application: **06.05.2026**
(21) Application number: 25212161.1
(22) Date of filing: 29.10.2025
(51) Int. Cl.: G06V 10/776, G06F 21/62, G06V 10/82, G06V 40/16

(54) **MEDIA ANALYSIS FOR REGION PREDICTION**

(30) Priority: 05.11.2024 US 202418937957
(71) Applicant: Block, Inc., Oakland, CA 94612 (US)
(72) Inventor: RAZA, Shahzad, Oakland (US); JABLONSKI, Mitchell, Oakland (US); MACHAK, Christina, Oakland (US); JOSHI, Aditya, Oakland (US)
(74) Representative: St Clair Jones, Gregory Arthur Langley

(57) **Abstract**

Systems and methods are disclosed for content analysis and/or processing. In some examples, a system receive content (e.g., an image) that includes a representation of an object (e.g., a person) in a scene. The system analyzes the content to detect a first portion of the content (e.g., subset of pixels) that represents the object. A second portion of the content represents the scene. The system obfuscates (e.g., masks, blurs, pixelates, replaces) the first portion of the content to generate obfuscated content. The obfuscated content retains the second portion of the content that represents the scene. The system analyzes the obfuscated content using at least one trained machine learning model to generate a prediction of a geographic region (e.g., at least a portion of a continent) that the scene is in. The system outputs an indicator of the prediction of the geographic region.

## Description

### TECHNICAL FIELD

Image sensors are devices that capture images of a scene. In an illustrative example, an image may include a depiction of a person in a scene. In some cases, certain systems can use images of users for a user profile, for identity verification, for biometric verification, for sharing in a social media context, or for other purposes.

### BRIEF DESCRIPTION OF THE DRAWINGS

The detailed description is set forth with reference to the accompanying figures. In the figures, the left-most digit(s) of a reference number identifies the figure in which the reference number first appears. The use of the same reference numbers in different figures indicates similar or identical items or features. Moreover, multiple instances of the same part are designated by a common prefix, in some cases separated from the instance number by a dash and/or parentheses. The drawings are not to scale.
FIG. 1 is a block diagram illustrating a process, performed by a content processing system, in which user data (e.g., including an image and a stated region) is received by platform server(s) from user device(s) and is analyzed using analysis engine(s) to generate a region prediction, in accordance with some examples;
FIG. 2 is a block diagram illustrating a process, performed by an analysis engine, of obfuscating an image and analyzing the obfuscated image to perform region prediction, in accordance with some examples;
FIG. 3 is a block diagram illustrating a process through which a region prediction is generated by analyzing an obfuscated image, including reasons for the region prediction, in accordance with some examples;
FIG. 4 is a block diagram illustrating a process through which a region prediction is generated by analyzing an obfuscated image, including reasons for the region prediction, in accordance with some examples;
FIG. 5 is a block diagram illustrating examples of different types of obfuscated images that can be generated by the obfuscation engine from an image, in accordance with some examples;
FIG. 6 is a block diagram illustrating a process, performed by an analysis engine, of obfuscating an image, analyzing the obfuscated image to perform region prediction, and using the region prediction for further decisions, in accordance with some examples;
FIG. 7 is a block diagram illustrating an example of a machine learning system for training, use of, and/or updating of one or more machine learning model(s) that are used for content processing, region prediction, and/or identity verification, in accordance with some examples;
FIG. 8 is a flow diagram illustrating a process for content analysis and/or processing, in accordance with some examples;
FIG. 9 is a flow diagram illustrating a process for image analysis and/or processing, in accordance with some examples;
FIG. 10 is a block diagram illustrating an example environment for providing an application and/or for customizing the application for different platforms, in accordance with some examples;
FIG. 11 is a block diagram illustrating an example environment including a service provider system which may be associated with the server(s) of FIG. 10, in accordance with some examples; and
FIG. 12 is a block diagram illustrating a system for performing techniques described herein, in accordance with some examples.

### DETAILED DESCRIPTION

Platforms that provide services to users rely heavily on security to maintain trust with users and to protect the platform from malicious parties. Security can be particularly important for a platform that provides payment services, transaction services, and/or asset management services for users. If security is compromised for such platforms, bad actors can transact on such platforms, users can lose access to their assets (e.g., fiat currency, cryptocurrency, securities, and/or other assets), can lose their assets, can lose the ability to make a purchase, can lose the ability to perform another type of transaction, and the like. A high level of security is also important to maintaining users' trust in a platform. Thus, maintaining and improving security is both technically important for platform systems and practically important to users of platforms.

In some cases, a platform can receive an image or other media content from a user, for instance for an image for the user's profile or account, for identity verification, for biometric verification, for other purposes, or a combination thereof. In some cases, a platform can also receive an indication, from the user, as to what region the user is located in, what region the user resides in, what country (region) the user is a citizen of, or another indication of geographic region. In some cases, a platform can receive another type of media content for such purposes, such as a video, a 3D representation of a scene (e.g., captured using a depth sensor and/or stereoscopic camera arrangement), another type of media content, or a combination thereof.

In an example, systems and methods are described for processing and analyzing media content to predict a geographic region that the media content depicts (or otherwise represents) the person as being within. For instance, a content processing system processes media content (e.g., an image, a video, a sound clip, sensor data, text, or the like) that depicts (or otherwise represents) the person in a scene to obfuscate (e.g., mask out, anonymize, pixelate, etc.) the depiction of the person. The resulting obfuscated media content still depicts (or otherwise represents) the scene, without clearly depicting (or otherwise representing) the person. The content processing system analyzes the obfuscated image using an artificial intelligence (AI) model, such as a trained machine learning (ML) model, to predict a geographic region that the scene is in. In some examples, the obfuscation of the media content improves the accuracy of the region prediction, for example by removing noise and/or by removing potential bias due to factors such as the skin tone, facial features, hair color, or other characteristics of the person, which is often not representative of where the person is actually located. In some examples, the obfuscation of the media content also improves security and privacy. For instance, because the obfuscated media content (not the media content its original form) is sent to the trained ML model, any data breach incident from the trained ML model onward cannot provide unauthorized access to the media content its original form, thereby protecting the person's privacy and security.

In some examples, a user may provide a second indication of geographic location, for instance by filling in a field with a stated region, selecting a specific region from a list of possible regions, uploading a document (e.g., driver's license, passport, government identification, employee identification) that lists a stated region, a transaction history such as a purchase history, or a combination thereof. In some examples, predicted geographic regions can be compared to other indications of geographic locations. In such examples, the prediction of the geographic region of the person can be used to detect suspicious activity, such as suspicious network activity and/or anomalies in network traffic that are indicative of a fraud attempt. For instance, a content processing system can compare the prediction of the geographic region to the second indication of geographic location to verify whether there is a correspondence (e.g., they match or are similar) or conflict (e.g., they do not match or correspond).

If the comparison indicates a mismatch or conflict between the prediction of the geographic region and the second indication of geographic location, the content processing system can automatically take various actions, including proactive remediation of network attacks. For instance, the content processing system can issue a warning (e.g., to a user device, a point of sale (POS) terminal, a platform server, and/or a network administrator) about suspicious activity, can request additional information (e.g., to validate or verify the indication of the geographic location and/or rebut the predicted geographic region) or actions (e.g., to turn on location sharing, to capture another image, to provide a live video, etc.), can disable a device (e.g., the user device, a point of sale (POS) terminal, and/or an affected platform server), disable functionality (e.g., disable the user's ability to withdraw assets, make a purchase, perform a transfer, or perform another transaction), deny access (e.g., to the account, to a website, to the platform), cancel a transaction (e.g., that involves the user), initiate a refund and/or return (e.g., for another user who purchased from the user), freeze assets (e.g., of the user), drop network packets (e.g., from the user device of the user), block a network address (e.g., of the user device of the user), or a combination thereof. These operations can be performed automatically, proactively, preemptively, dynamically, and/or in real-time or near real-time, before the user can perform any further suspicious activity. The content processing system can realize a technical improvement by improving security of such platforms and/or avoiding a delay involved in waiting on a network administrator to react to a network intrusion by automatically dropping suspicious packets and blocking traffic from suspicious source addresses based on an anomaly identified in association with the mismatch or conflict between the prediction of the geographic region and the second indication of geographic location.

If the comparison indicates a correspondence (e.g., match or similarity) between the prediction of the geographic region and the second indication of geographic location, the content processing system can automatically perform various actions, including, but not limited to, verifying the identity of the user, auto-filling a form with the geographic region, enabling a device, enabling a functionality, granting access, selecting a region-specific setting, or a combination thereof. Selecting the region-specific setting can include, for instance, selecting a region-specific currency (e.g., to show in a user interface), selecting a region-specific price (e.g., to show in a user interface), selecting a region-specific language (e.g., to show in a user interface), selecting a region-specific location (e.g., a store location, restaurant location, or other location of something other than the user that is selected to be as close to the user's region as possible). For instance, in some examples, the prediction of the geographic region and the second indication of geographic location can serve as two separate factors of authentication in a dual-factor authentication or multi-factor authentication system that automatically improves security in a low-complexity manner (e.g., from the user's perspective). In some examples, the content processing system can use the prediction of the geographic region for a number of the operations listed above even without first comparing to the second indication of geographic location (or even without first receiving the second indication of geographic location). That is, while in some examples, techniques described herein can be used for verification, in other example, techniques can be used for determinations or decision making without reference to another source of information.

In some examples, the content processing system can generate the obfuscated media content by first analyzing the media content to extract image features, such as corners, edges, blobs, or facial landmarks. The content processing system can employ an analysis engine (e.g., which may include one or more trained machine learning models) to process the media content through feature extraction, feature detection, feature recognition, feature tracking, object detection, object recognition, object tracking, facial detection, facial recognition, facial tracking, person detection, person recognition, person tracking, or a combination thereof. In some examples, the content processing system can employ the analysis engine to perform segmentation of the image, for instance including semantic segmentation, classification, or a combination thereof. In some examples, the content processing system applies the segmentation to segment the media content into a first portion of the media content (e.g., first subset of pixels in an image) that depicts or otherwise represents the person (or other object of interest) and a second portion of the media content (e.g., second subset of pixels in the image) that depicts or otherwise represents the scene (e.g., the environment, the background). The obfuscated media content represents a new kind of file that enables the content processing system to perform security analyses that it could not do otherwise, for instance to analyze the scene for geographic region prediction without introducing bias (or possible security and/or privacy issues) by also analyzing the person in the scene for the geographic region prediction.

Various aspects of the application will be described with respect to the figures.

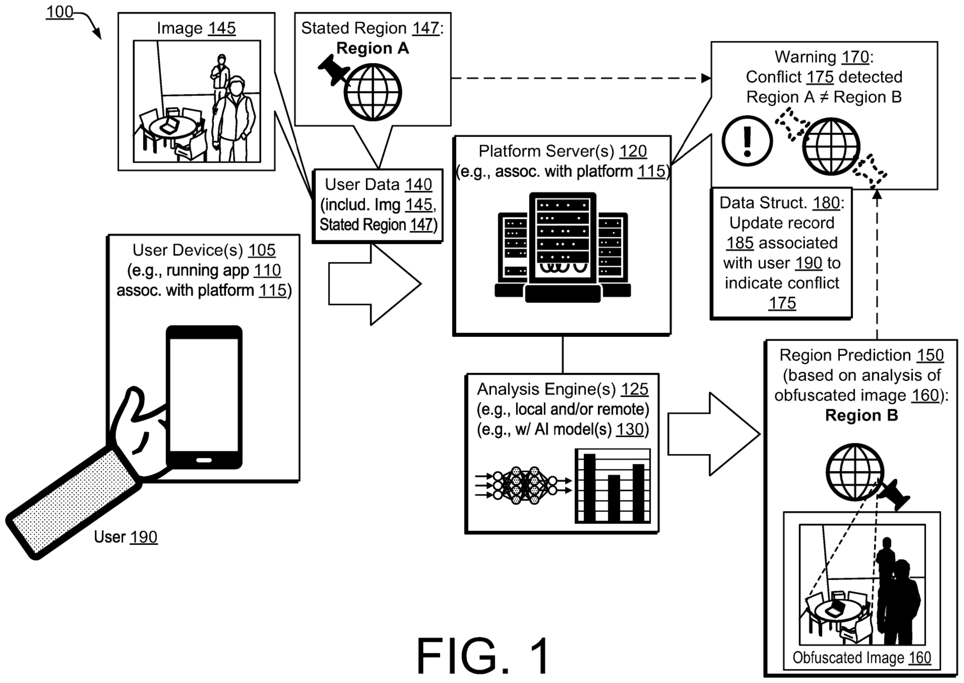

FIG. 1 is a block diagram illustrating a process 100, performed by a content processing system, in which user data 140 (e.g., including an image 145 and a stated region 147) is received by platform server(s) 120 from user device(s) 105 and is analyzed using analysis engine(s) 125 to generate a region prediction 150. Collection of user data 140 is performed only with consent of the user 190 (e.g., opt-in or opt-out) and in compliance with applicable laws and/or regulations. During the process 100, one or more user device(s) 105 of a user 190 can be running an application 110 associated with a platform 115. The user device(s) 105 can, in some cases as part of running the application 110, send user data 140 to one or more platform server(s) 120 associated with the platform 115. In some examples, the platform server(s) 120 can run the platform 115 to provide service(s) for the user device(s) 105 of the user 190 and/or other users. In some examples, the platform 115 is a platform associated with a payment service, a transaction service, an asset management service, and/or a financial service. In some examples, the platform 115 can provide services to the user device(s) 105 for managing (e.g., paying with, transferring, transacting with, investing) assets such as fiat currency, cryptocurrencies, securities (e.g., stocks, bonds), digital assets such as non-fungible tokens (NFTs), other types of assets, or combinations thereof.

The user data 140 that the user device(s) 105 send to the platform server(s) 120 include an image 145 and stated region 147. An example of the image 145 is illustrated as depicting two people in a room with a table surrounded by chairs, with a laptop on the table. One of the people is the user 190, while the other person is in the background. An example of the stated region 147 is illustrated and indicates that the user 190 is stated as being located in, residing in, being a citizen of, or otherwise being associated with Region A. In some examples, the user data 140 may include the image 145 as a profile image for the user's profile or account, for identity verification, for biometric verification, for other purposes, or a combination thereof. In some examples, the user data 140 may include the stated region 147 that the user 190 filled into a field (e.g., in a user interface on the user device(s) 105) with the stated region 147, selected from a list of possible regions, as part of an document (e.g., driver's license, passport, government identification, employee identification) that is uploaded as part of the user data 140 and that lists a stated region 147, or a combination thereof. In some examples, the user data 140 may include record(s) of one or more transaction(s) that the user 190 is involved in, such as a transaction history and/or purchase history. In some examples, such records of transaction(s) may include locations associated with the transaction(s) (e.g., locations at which the transaction(s) are stated to have taken place). In some examples, locations in records for one or more recent transactions (e.g., less than a threshold amount of time from a current time) may be used as the stated region 147. In some examples, an IP address or MAC address of the user device(s) 105 can be received from the user device(s) 105 with the user data 140, or can be detectable from the transmission of the user data 140 from the user device(s) 105. In some examples, the IP address or MAC address of the user device(s) 105 can be used as the stated region 147. In some examples, geolocation data and/or positioning data from a positioning receiver of the user device(s) 105. The positioning receiver may be a Global Navigation Satellite System (GNSS) receiver, such as a global positioning system (GPS) receiver. In some examples, the IP address or MAC address of the user device(s) 105 can be used as the stated region 147. Collection of device data (e.g., IP address, MAC address, geolocation data, positioning receiver data, and the like) is performed only with consent of the user 190 (e.g., opt-in or opt-out) and in compliance with applicable laws and/or regulations.

The platform server(s) 120 receive the user data 140, including the image 145 and/or the stated region 147. The platform server(s) 120 process the image 145 using one or more analysis engine(s) 125. In some examples, at least a subset of the analysis engine(s) 125 are part of the platform server(s) 120 and/or otherwise local to the platform server(s) 120. In some examples, at least a subset of the analysis engine(s) 125 are remote from the platform server(s) 120, for instance with the platform server(s) 120 connecting to the analysis engine(s) 125 over a network (e.g., through the Internet). The analysis engine(s) 125 can include, train, use, and/or update one or more artificial intelligence model(s) 130 (e.g., machine learning model(s)).

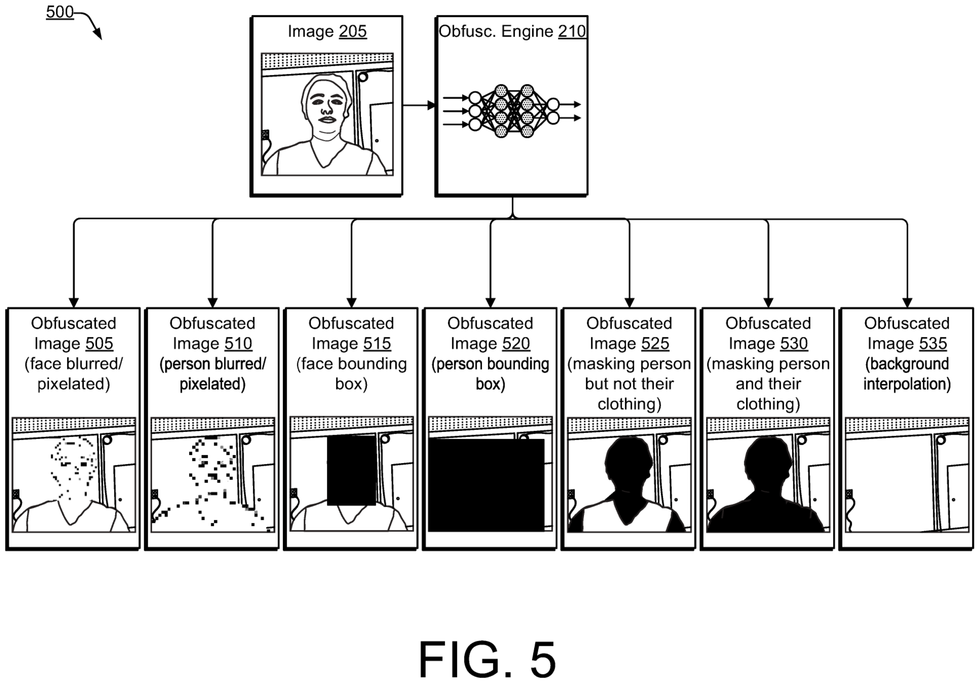

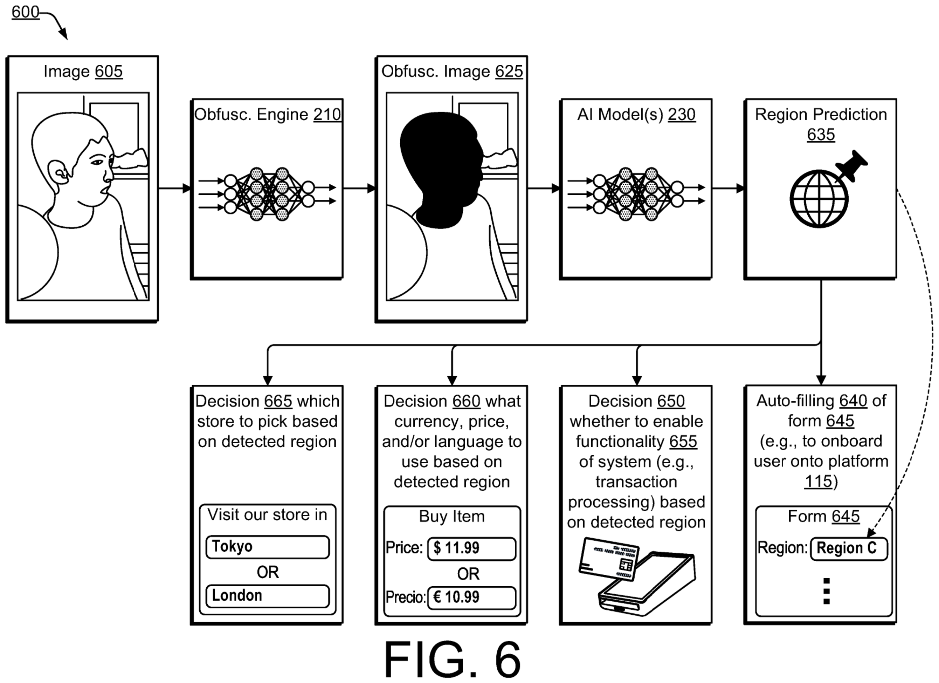

The analysis engine(s) 125 process the image 145 that depicts the user 190 (and another person) in a scene to obfuscate (e.g., mask out, blur, or replace) the depiction of the user 190 and/or the other person. The resulting obfuscated image 160 still depicts the scene, without depicting (or at least without clearly depicting) the user 190 and/or the other person. In some examples, the analysis engine(s) 125 process the image 145 using the AI model(s) 130 to generate the obfuscated image 160, for instance using the AI model(s) 130 for feature extraction, feature detection, feature recognition, feature tracking, object detection, object recognition, object tracking, facial detection, facial recognition, facial tracking, person detection, person recognition, person tracking, segmentation, classification, or a combination thereof. In some examples, the analysis engine(s) 125 can obfuscate a portion of a user (e.g., one or more eyes, nose, ears, mouth, face, hair, hands, arms, legs, feet, torso, body, or combinations thereof) or all of the a user. For instance, the obfuscated image 525 in FIG. 5 and the obfuscated image 625 of FIG. 6 are examples of such partial obfuscation of a user.

In some examples, analysis engine(s) 125 instead or additionally obfuscates other object(s) that are non-human in the image 145, such as objects that include personally identifiable information (PII), objects that include sensitive information, or any other objects of interest. In this way, such objects are then obfuscated in the obfuscated image 160 so that PII and/or sensitive information is not present in the obfuscated image 160. For example, the screen of the laptop in the image 145 is illustrated as masked out (obfuscated) in the obfuscated image 160, for instance to obfuscate PII and/or sensitive information that may have been displayed on the screen of the laptop and visible in the image 145.

The analysis engine(s) 125 analyze the obfuscated image 160 using the AI model(s) 130 to generate a region prediction 150 predicting a geographic region that the scene is in. Geographic region, as used with respect to the region prediction 150 and/or the stated region 147, can refer to hemisphere, one or more continents, one or more subcontinents (e.g., each being a portion of a continent), one or more countries, one or more counties, one or more cities, one or more provinces, one or more territories, one or more streets, one or more blocks, one or more neighborhoods, one or more street corners, one or more addresses, one or more buildings, one or more portions of a building, one or more rooms, or a combination thereof. In an illustrative example, the stated region 147 and/or the region prediction 150 refers to at least a portion of a continent, such as the northern, eastern, southern, or western portion(s) of Asia, Africa, North America, South America, Antarctica, Europe, or Australia. In the example illustrated in FIG. 1, the region prediction 150 states that the analysis of the obfuscated image 160 indicates that the user 190 is in Region B as depicted in the image 145 (e.g., from the depiction of the scene in the obfuscated image 160).

In some examples, the region prediction 150 can predict where the image 145 was captured in. In some examples, the analysis engine(s) 125 can also use metadata of the image 145 as clues for the region prediction 150. In some examples, the analysis engine(s) 125 can treat metadata of the image 145 as a stated region 147.

In some examples, the obfuscation of the media content improves the accuracy of the region prediction by removing potential bias due to factors such as the skin tone, facial features, hair color, or other characteristics of the person, which is often not representative of where the person is actually located. For instance, many regions across the world have many immigrants and/or tourists from other regions. Obfuscating the user 190 (and/or other people) in the image 145 can help ensure that the analysis engine(s) 125 accurately predicts the region based on the scene, not based on how the user 190 and/or other people in the image look. Similarly, obfuscating certain objects, such as the laptop screen of the image 145 or other objects that display PII or sensitive information, can also improve the accuracy of the region prediction by removing potential bias. For instance, if the laptop screen or a document includes a name of a specific region displayed or written on them, this might cause undue bias for the analysis engine(s) 125 to predict that specific region in the region prediction 150, even though the laptop screen or a document might only include the name of the specific region because a person (e.g., the user 190) was reading about the specific region (e.g., while being located in a different region).

In some examples, the obfuscation of the image 145 improves security and privacy. For instance, because the obfuscated image 160 (not the image 145 its original form) is sent from the platform server(s) 120 to the analysis engine(s) 125, any data breach incident between the platform server(s) 120 and the analysis engine(s) 125, or after the analysis engine(s) 125, cannot provide unauthorized access to the image 145 its original form, thereby protecting the privacy and security of the user 190. For instance, in some examples, any data breach of the obfuscated image 160 would not expose the appearance of the user 190, the appearance of any other person in the image 145 (such as the other person in the image 145), or any PII or sensitive information on any objects in the image 145 (such as the laptop in the image 145).

In such examples, the platform server(s) 120 and/or the analysis engine(s) 125 can use the region prediction 150, the stated region 147, and/or other contextual information to detect suspicious activity, such as suspicious network activity and/or anomalies in network traffic that are indicative of a fraud attempt. For instance, a content platform server(s) 120 and/or the analysis engine(s) 125 can compare the region prediction 150 to the stated region 147 to verify whether the region prediction 150 and the stated region 147 correspond (e.g., match or similarity) or conflict (do not correspond or match).

As noted previously, the stated region 147 is illustrated in FIG. 1 as indicating that the user 190 is in Region A, while the region prediction 150 indicates that the user 190 is in Region B (based on the analysis of the obfuscated image 160). This comparison thus indicates a conflict 175 or mismatch between the region prediction 150 (which indicates Region B) and the stated region 147 (which indicates Region A).

In response to detecting the conflict 175, the platform server(s) 120 and/or the analysis engine(s) 125 can automatically take one or more actions. For instance, the platform server(s) 120 and/or the analysis engine(s) 125 can automatically issue a warning 170 (e.g., to a user device, a point of sale (POS) terminal, a platform server, and/or a network administrator) about suspicious activity, can disable or deactivate a device (e.g., the user device(s) 105, a point of sale (POS) terminal, and/or an affected platform server of the platform server(s) 120), disable or deactivate functionality (e.g., disable the ability of the user 190 to withdraw assets, make a purchase, perform a transfer, or perform another transaction), deny the user 190 access (e.g., to the account of the user 190, to an account of another user, to a website, to the platform 115), update a record 185 (e.g., corresponding to the user 190 and/or the user device(s) 10 in a database 180 or other data structure (e.g., to associate an indicator of the region prediction 150 with an identifier of the user 190 or user device(s) 105 in the record 185), cancel a transaction (e.g., that involves the user 190), initiate a refund and/or return (e.g., for another user who purchased from the user 190 or otherwise transacted with the user 190), freeze assets (e.g., of the user 190), drop network packets (e.g., from the user device(s) 105 of the user 190), block a network address (e.g., of the user device(s) 105 of the user 190), or a combination thereof. These operations can be performed automatically, proactively, preemptively, remedially, dynamically, and/or in real-time or near real-time, to prevent the user 190 from performing any further suspicious activity, fraudulent activity, or malicious activity. The platform server(s) 120 and/or the analysis engine(s) 125 can realize a technical improvement by avoiding a delay involved in waiting on a network administrator or other entity from reacting to the suspicious activity by automatically taking action based on detection of the conflict 175 between the region prediction 150 and the stated region 147.

In some examples (not depicted in FIG. 1), the comparison of the region prediction 150 and the stated region 147 can instead indicate a correspondence (e.g., match or similarity) between the region prediction 150 and the stated region 147. For instance, in an illustrative example, region prediction 150 and the stated region 147 could both indicate Region A, Region B, or another region. In some examples, in response to the platform server(s) 120 and/or the analysis engine(s) 125 detecting a correspondence (e.g., match or similarity) between the region prediction 150 and the stated region 147, the platform server(s) 120 and/or the analysis engine(s) 125 can automatically take one or more actions. For instance, the platform server(s) 120 and/or the analysis engine(s) 125 can automatically verify the identity of the user (e.g., as a form of dual-factor authentication or multi-factor authentication), auto-fill a form with the geographic region (e.g., enter the geographic region into a field of the form on behalf of the user 190), enable or activate a device (e.g., the user device(s) 105, a point of sale (POS) terminal), enable or activate a functionality (e.g., enable the ability of the user 190 to withdraw assets, make a purchase, perform a transfer, or perform another transaction), grant the user 190 access (e.g., to the account of the user 190, to an account of another user, to a website, to the platform 115), select a region-specific setting, or a combination thereof. Selecting the region-specific setting can include, for instance, selecting a region-specific currency for a transaction (e.g., to show in a user interface), selecting a region-specific price for a transaction (e.g., to show in a user interface), selecting a region-specific language (e.g., to show in a user interface), selecting a region-specific location (e.g., a store location, restaurant location, or other location of something other than the user 190 that is selected to be as close to the user's region as possible).

In some examples, the image 145 may refer to media content more generally. For instance, such media content may be, and/or may include, an image, a video, an audio clip, a text string (e.g., document), other type(s) of media, or a combination thereof. In some examples, the obfuscated image 160 can refer to obfuscated media content (e.g., an obfuscated variant of the media content). If the media content is a video, then each video frame (also referred to as an image frame) can be treated as an image (e.g., image 145) and obfuscated as described herein. In some examples, if the media content is a video, the analysis engine(s) 125 (e.g., AI model(s) 130) can use feature recognition, feature tracking, object recognition, object tracking, facial recognition, facial tracking, person recognition, and/or person tracking to track the person(s) and/or object(s) to be obfuscated across different video frames. For instance, this can help the analysis engine(s) 125 to ensure that person(s) and/or object(s) continue to be obfuscated consistently. This can also help the analysis engine(s) 125 make obfuscating more efficient, for instance if the person(s) and/or object(s) have remained in the same position from one video frame to the next, or have moved a small amount (e.g., less than a threshold distance) (e.g., just a few pixels) from one video frame to the next.

In some examples, if the media content is an audio clip, the analysis engine(s) 125 (e.g., AI model(s) 130) can use speech detection, speech recognition, and/or speech separation techniques to detect, recognize, and/or separate speech from one or more person(s) to be obfuscated. In some examples, obfuscation of speech can include removal of speech, deletion of speech,, garbling of speech, attenuation of speech, reduction in volume of speech, change (e.g., increase or decrease) in tone of speech, change (e.g., increase or decrease) in pitch of speech, change (e.g., increase or decrease) in frequency of speech, change (e.g., increase or decrease) in wavelength of speech, or a combination thereof.

The content processing system that performs the process 100 includes the user device(s) 105, the platform server(s) 120, the analysis engine(s) 125, or a combination thereof.

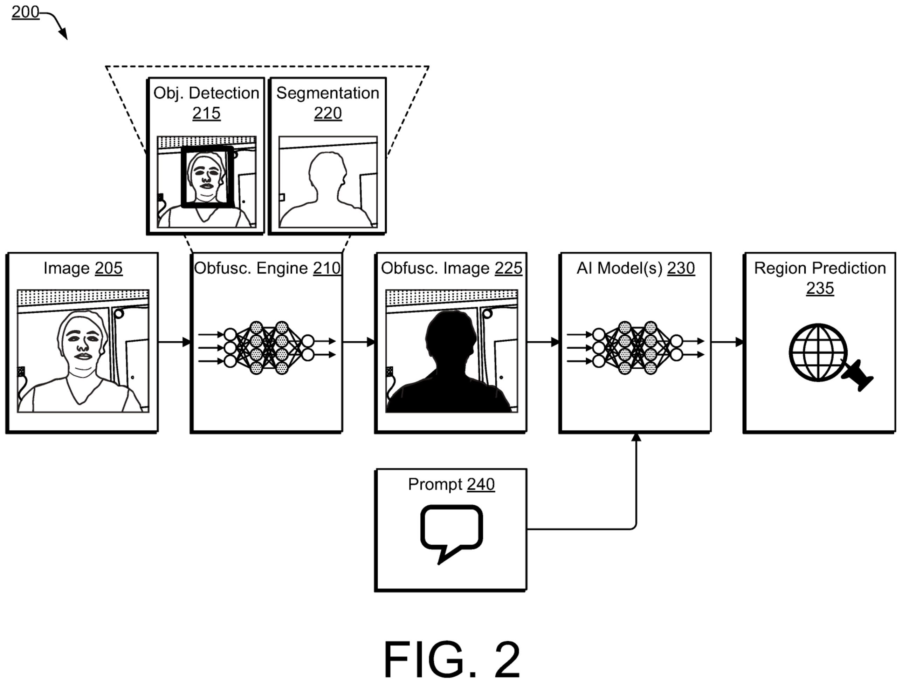

FIG. 2 is a block diagram illustrating a process 200, performed by an analysis engine, of obfuscating an image 205 and analyzing the obfuscated image 225 to perform region prediction 235. The analysis engine that performs the process 200 can be an example of the analysis engine(s) 125, and includes an obfuscation engine 210 and artificial intelligence (AI) model(s) 230.

The analysis engine receives an image 205. The image 205 can be an example of the image 145, or vice versa. The image 205 is illustrated as depicting a person in a scene. The scene illustrated in the image 205 is a room. A door, a wall with exposed wiring, a ceiling, and a power outlet with a power cord plugged into one socket are illustrated in the room (e.g., the scene) illustrated in the image 205.

The obfuscation engine 210 receives the image 205 and performs object detection 215 to detect the person's face, the person, and/or other object(s) of interest in the image 205. In some examples, object detection 215 can include feature extraction of features from the image 205 such as corners, edges, blobs, and/or facial landmarks. In some examples, object detection 215 can include feature detection, feature recognition, feature tracking, object detection, object recognition, object tracking, facial detection, facial recognition, facial tracking, person detection, person recognition, person tracking, or a combination thereof. In some examples, the obfuscation engine 210 performs the object detection 215 using one more ML model(s), such as the AI model(s) 130. For instance, the object detection 215 is illustrated in FIG. 2 as having a bounding box around the face of the person in the image 205, for instance representing the object detection 215 performing facial detection and/or person detection. In some examples, the obfuscation engine 210 includes, or has access to, at least one ML model that is trained to perform the object detection 215, and that performs the object detection 215. In some examples, object detection 215 can include aligning features of the object (e.g., face, person) (e.g., to be upright and straight), normalizing of the object (e.g., aligning and/or cropping around the object and/or resizing to a uniform size), representing of the object (e.g., as a set of vectors and/or tensors), and verifying (e.g., low loss, error, or distance below a threshold where an object is detected).

The obfuscation engine 210 performs segmentation 220 on the image 205, based on the object detection 215. The segmentation 220 can include semantic segmentation, classification, or a combination thereof. In some examples, segmentation 220 can segment or classify different subsets of the image 205 (e.g., subsets of pixels of the image 205) based on occupancy (e.g., free or occupied), by material type (e.g., person, plant, sky, floor, wall, door, metal, stone, wood, etc.), by whether a given pixel is part of a depiction of a person (e.g., the user 190) or not, by whether a given pixel is part of a depiction of an object of interest (e.g., the laptop in the image 145) or not, or a combination thereof. For instance, the segmentation 220 is illustrated in FIG. 2 as showing boundaries (e.g., edges) of the subsets of the image 205 that depict the person, the wall, the ceiling, the door, and the power outlet, respectively. In some examples, the obfuscation engine 210 includes, or has access to, at least one ML model that is trained to perform the segmentation 220, and that performs the segmentation 220.

The obfuscation engine 210 uses the object detection 215 and/or the segmentation 220 to apply obfuscation to the image 205 to generate an obfuscated image 225. For instance, in some examples, the obfuscation engine 210 can obfuscate the face, person, and/or object that is detected via the object detection 215. In some examples, the obfuscation engine 210 can obfuscate the face, person, and/or object that is segmented as being a face, person, or object of interest via the segmentation 220. In some examples, the obfuscation performed by the obfuscation engine 210 includes masking, such as replacing all of the pixels that depicted the person, the person's face, or an object of interest in the image 205 being replaced with pixels of a uniform color or pattern. The uniform color or pattern is illustrated as black in FIG. 2, but can alternately be white, transparent (e.g., via an alpha channel), red, green, blue, or another color or pattern. The obfuscated image 225 is illustrated FIG. 2 as having all of the pixels that depicted the person (in the image 205) being masked (e.g., replaced uniformly with black pixels). The obfuscated image 225 can be an example of the obfuscated image 160, or vice versa. In some examples, the obfuscation engine 210 can obfuscate (e.g., mask out) pixels depicting the person's face, the person's clothes, the person's hair, the person's accessories (e.g., glasses, jewelry, hats), the rest of the person, or a combination thereof.

The analysis engine inputs the obfuscated image 225 into AI model(s) 230 of the analysis engine to generate a region prediction 235 based on the obfuscated image 225. In some examples, the AI model(s) 230 can be, or can include, a large language model (LLM) that is capable of ingesting and processing a image data and/or a prompt 240. In some examples the prompt 240 to the AI model(s) 230 can include, for example, a question such as "what region was this image taken in?" In some examples, the prompt 240 to the AI model(s) 230 can include, for example, a command such as "please identify what region this image was taken in." Such a prompt 240 can help instruct the ML model model(s) 230 to generate the region prediction 235. In some examples, the prompt 240 to the AI model(s) 230 can include a question or command requesting that the AI model(s) 230 and/or region prediction 235 also output additional information, such as one or more reason(s) for the region prediction 235, a confidence score associated with the region prediction 235, and/or a boolean indicator of whether or not the region prediction 235 predict a predetermined region of interest. In some examples, the predetermined region of interest can be, for instance, a region that has had a history or trend of suspicious activity, fraudulent activity, or malicious activity, so as to flag such a region prediction 235 as potentially suspicious for another reason (e.g., beyond just a conflict 175). In some examples, the predetermined region of interest can be, for instance, a stated region (e.g., the stated region 147) so as to include the comparison (e.g., the check of whether or not there is a conflict 175) within the region prediction 305.

In some examples, the prompt 240 can be enhanced with data from a data store (e.g., a database or other data structure) via retrieval-augmented generation (RAG). For instance, in some examples, the prompt 240 may reference a specific region (e.g., "was this image taken in Region A?"). In some examples, the analysis engine can retrieve additional information about the specific region (e.g., Region A) and enhance the prompt 240 by adding the additional information about the specific region to the prompt 240, to generate an enhanced variant of the prompt 240. For instance, the additional information about the specific region can include information about architectural styles that are common in the specific region, furniture that is common in the specific region, flora that is common in the specific region, fauna that is common in the specific region, art styles that are common in the specific region, and the like. The AI model(s) 230 thus receives the enhanced variant of the 240 rather than the prompt 240 in its original form, and can use this additional information to inform the generation of the region prediction 235, for instance by knowing to check the obfuscated image 225 for architectural styles, furniture, flora, fauna, art styles, and/or other elements that are common to the specific region as indicators of whether the scene depicted in the obfuscated image 225 is in the specific region or not.

In some examples, the image (e.g., image 145, image 205) does not include a depiction of a person or object to be obscured, whether by accident (e.g., the user aimed the camera incorrectly and did not include themselves or the object in the image) or intentionally (e.g., the platform server(s) 120 requested that the user device(s) 105 submit an image of the scene around them, or of the street outdoors). In such cases, the analysis engine can skip over the obfuscation by the obfuscation engine 210 and analyze the image(s) directly in their original form (or with pre-processing changes such as resizing or resampling). In such cases, the object detection 215 and/or segmentation 220 can still be performed, for instance to ensure that no person or object of interest (e.g., object with PII or sensitive information) is depicted.

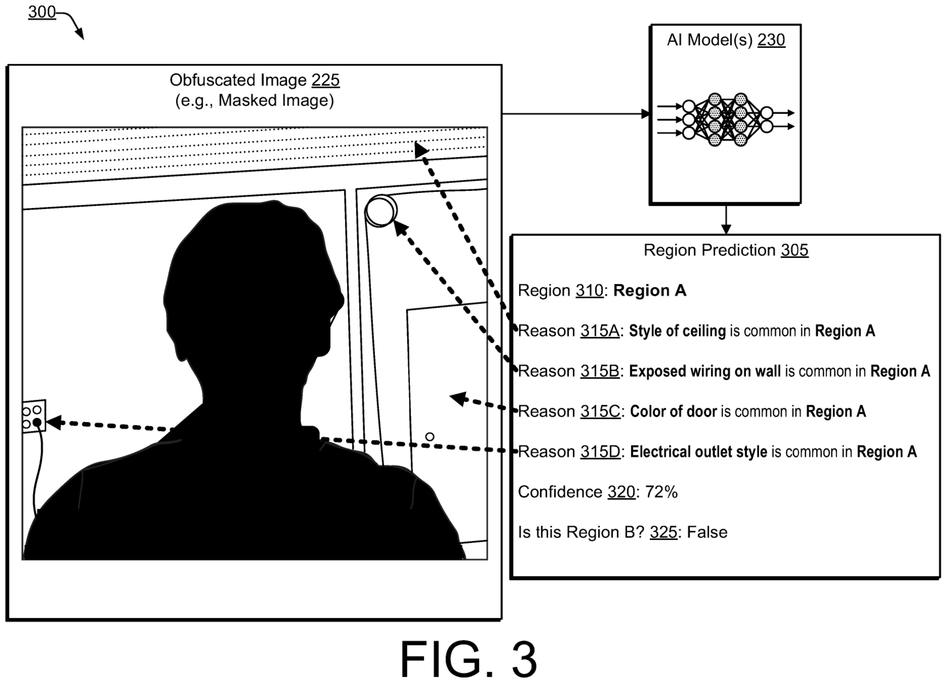

FIG. 3 is a block diagram illustrating a process 300 through which a region prediction 305 is generated by analyzing an obfuscated image 225, including reasons 315A-315D for the region prediction 305. The scene depicted in the obfuscated image 225 is a room that includes a door, a wall with exposed wiring, a ceiling, and a power outlet with a power cord plugged into one socket. A person is masked out in the obfuscated image 225.

The region prediction 305 generated by the model(s) 230 is an example of the region prediction 150 and/or the region prediction 235. The region prediction 305 identifies the region 310 as being Region A. The region prediction 305 provides four reasons 315A-315D for predicting the region 310 as Region A. The first reason 315A is that the style of the ceiling in the obfuscated image 225 is a style of ceiling that is common in Region A. The ceiling in the obfuscated image 225 is illustrated in dotted lines running across the ceiling, for instance representing rivets in corrugated metal sheeting or edges between wooden boards. The second reason 315B is that the presence of exposed wiring on the wall in the obfuscated image 225 is a common architectural element in Region A. For instance, a coil of wire is illustrated as mounted on the wall, with respective lengths of wire extending along the wall in a downward direction and a rightward direction relative to coil, respectively. The third reason 315C is that the color of the door in the obfuscated image 225 is a common door color in Region A. The fourth reason 315D is that the style of electrical outlets in the obfuscated image 225 is a common style of electrical outlets in Region A.

The region prediction 305 indicates that the confidence 320 for the region prediction 305 (identifying the region 310 as being Region A) is 72%. The region prediction 305 also includes a boolean indicator 325 identifying whether the region 310 is predetermined region of interest Region B. The boolean indicator 325 is indicated as being false, since Region A (the region 310) is not Region B (the predetermined region of interest).

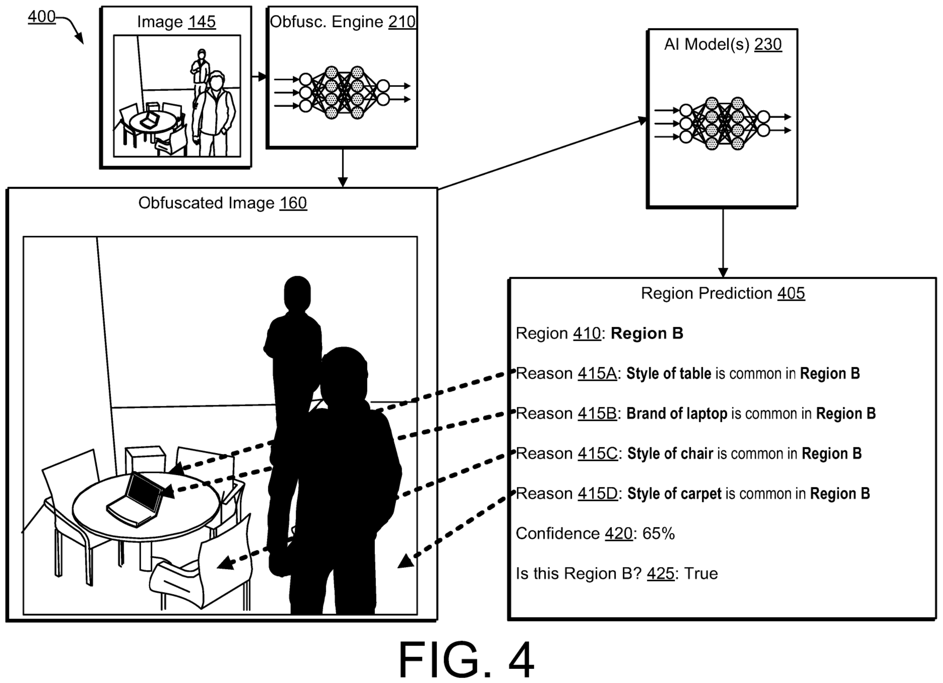

FIG. 4 is a block diagram illustrating a process 400 through which a region prediction 405 is generated by analyzing an obfuscated image 160, including reasons 415A-415D for the region prediction 405. The scene depicted in the obfuscated image 160 is a room that includes two people in a room with a table surrounded by chairs, with a laptop on the table. The two people and the screen of the laptop are masked out in the obfuscated image 160.

The region prediction 405 generated by the model(s) 230 is an example of the region prediction 150 and/or the region prediction 235. The region prediction 405 identifies the region 410 as being Region B. The region prediction 405 provides four reasons 415A-415D for predicting the region 410 as Region B. The first reason 415A is that the style of the table in the obfuscated image 160 is a style of table (e.g., structure, material, decoration) that is common in Region B. The table in the obfuscated image 160 is circular. The second reason 415B is that the brand of the laptop in the obfuscated image 160 is a common brand of laptop in Region B. The brand of the laptop may be visible on a portion of the laptop other than the screen, which is obfuscated in the obfuscated image 160. The third reason 415C is that the style of chair (e.g., structure, material, decoration) in the obfuscated image 160 is a style of chair in Region B. The fourth reason 415D is that the style (e.g., pattern, material) of carpet in the obfuscated image 160 is a common style of carpets in Region B.

The region prediction 405 indicates that the confidence 420 for the region prediction 405 (identifying the region 410 as being Region B) is 65%. The region prediction 405 also includes a boolean indicator 425 identifying whether the region 410 is predetermined region of interest Region B. The boolean indicator 425 is indicated as being true, since Region B (the region 410) is Region B (the predetermined region of interest).

FIG. 5 is a block diagram illustrating examples 500 of different types of obfuscated images that can be generated by the obfuscation engine 210 from an image 205. For instance, in some examples, the obfuscation engine 210 can obfuscate the image 205 by blurring or pixelating the face(s) of person(s) in the image 205, as in the obfuscated image 505. In some examples, the obfuscation engine 210 can obfuscate the image 205 by blurring or pixelating the entirety of any person(s) (and/or objects of interest) in the image 205, as in the obfuscated image 510. Blurring or pixelating can protect privacy and help avoid bias from certain features that are difficult to distinguish in a blurred or pixelated image (e.g., facial features, hair style, etc.), but can still retain some bias from features that might still be visible in a blurred or pixelated image (e.g., skin color or skin tone).

In some examples, the obfuscation engine 210 can obfuscate the image 205 by overlaying a filled-in bounding box over the face(s) of person(s) in the image 205, as in the obfuscated image 515. In some examples, the obfuscation engine 210 can obfuscate the image 205 by overlaying a filled-in bounding box over the entirety of any person(s) (and/or objects of interest) in the image 205, as in the obfuscated image 520. Overlaying a filled-in bounding box can protect privacy and help avoid bias, and can be more computationally efficient than pixel-by-pixel masking (as in the obfuscated image 525 or the obfuscated image 530), but can also mask parts of the scene that might be useful in generating a region prediction (e.g., region prediction 150, region prediction 235, region prediction 305, region prediction 405).

In some examples, the obfuscation engine 210 can obfuscate the image 205 by masking all pixels that depict (e.g., per the object detection 215 and/or the segmentation 220) portions of the person (e.g., the user's skin, eyes, lips, hair, and/or any other portions of the person) in the image 205 without masking the person's clothing, as in the obfuscated image 525. In some examples, the obfuscation engine 210 can obfuscate the image 205 by masking all pixels that depict (e.g., per the object detection 215 and/or the segmentation 220) portions of the person (e.g., the user's skin, eyes, lips, hair, and/or any other portions of the person), including the person's clothing, in the image 205, as in the obfuscated image 530. Pixel-by-pixel masking can protect privacy and avoid bias without masking parts of the scene that might be useful in generating a region prediction (as in the obfuscated image 515 or the obfuscated image 520).

In some examples, the obfuscation engine 210 can obfuscate the image 205 further by masking all pixels that depict (e.g., per the object detection 215 and/or the segmentation 220) portions of the person, and by masking additional areas (e.g., circles, squares) at random around the edges of the masked area to also obscure the shape of the person, to further remove bias and improve security and/or privacy.

In some examples, the obfuscation engine 210 can obfuscate the image 205 by replacing the pixels that depict the person in the image 205 with an estimate, approximation, and/or prediction of the scene behind the person, as in the obfuscated image 535. For instance, in some examples, the estimate, approximation, and/or prediction of the scene behind the person can be generated using interpolation based on the areas of the scene around the person in the image 205. In some examples, the estimate, approximation, and/or prediction of the scene behind the person can be generated using a trained ML model (e.g., AI model(s) 130) based on the areas of the scene around the person in the image 205. Replacing the depiction of the person (or object of interest) with estimate, approximation, and/or prediction of the scene can protect privacy and help avoid bias, and in some examples can generate a more cohesive image of the scene to improve region prediction, for instance improving confidence. On the other hand, in some examples, the estimate, approximation, and/or prediction of the scene can be unreliable, inaccurate, or misleading, (e.g., especially if generated by an ML model that is prone to hallucinations) which can reduce certainty and/or confidence in the region prediction.

FIG. 6 is a block diagram illustrating a process 600, performed by an analysis engine, of obfuscating an image 605, analyzing the obfuscated image 625 to perform region prediction 635, and using the region prediction 635 for further decisions. The analysis engine that performs the process 600 is an example of the analysis engine that performs the process 200 and/or the analysis engine(s) 125, or vice versa. An image 605 that depicts a person in a room is processed by the obfuscation engine 210 to generate an obfuscated image 625. In the obfuscated image 625, the person's head is masked, but the persons's clothes are not masked, as in the obfuscated image 525. The obfuscated image 625 is analyzed by the model(s) 230 to generate a region prediction 635. The region prediction 635 can be an example of the device(s) 105 and/or the region prediction 235, or vice versa.

In the process 600, the analysis engine uses the region prediction 635 for further actions. For instance, in some examples, the analysis engine uses the region prediction 635 to perform auto-filling 640 of a form 645, such as a form 645 used for onboarding a user (e.g., user 190, such as a customer or merchant) onto the platform 115. An example of the form 645 is illustrated, with a "region" field automatically filled in (via the auto-filling 640) with "Region C."

In some examples, the analysis engine uses the region prediction 635 to make a decision 650 as to whether to enable and/or activate certain functionality 655 in a system, such as whether to enable and/or activate the ability to initiate and/or process a transaction at a POS terminal or other system, or whether to enable and/or activate the ability to scan a barcode using a barcode scanner of a POS terminal or other system.

In some examples, the analysis engine uses the region prediction 635 to make a decision 660 as to which of a set of region-specific settings and/or user interface elements to use in a user interface. For instance, the decision 660 can decide, based on the region prediction 635, which region-specific currency to use, which region-specific price to use, which region-specific language to use, or a combination thereof. An example user interface is illustrated with two alternatives. The first alternative states "Price: $11.99," while the second alternative states "Precio: € 10.99." The first alternative is written in the English language ("Price"), uses US Dollars ($) as currency, and lists the price as a numeric amount (11.99) that is higher than the numeric amount of the price in the second alternative (10.99). The second alternative is written in the Spanish language ("Precio"), uses Euros (€) as currency, and lists the price as a numeric amount (10.99) that is lower than the numeric amount of the price in the first alternative (11.99).

In some examples, the analysis engine uses the region prediction 635 to make a decision 665 to select a location of something other than the user based on which location (or locations) is in, or closest to, the region prediction 635. This decision 665 can be used to modify a user interface to display to the user. For instance, depending on whether the region prediction 635 is closer to Japan or Europe, the decision 665 can set the user interface to state "visit our store in Toyko" (e.g., if the region prediction 635 is Japan) or "visit our store in London" (e.g., if the obfuscated image 625 is Europe), respectively.

In some examples, the image 605 may include people, pets, or other objects. In some examples, the image 605 may not include people, pets, or other objects and may depict scenes. In some examples, the image 605 may be captured in real-time via a device of a user. In some examples, in addition to, or as an alternative of, an image, a video, a sound clip, or the like may be used for techniques described herein.

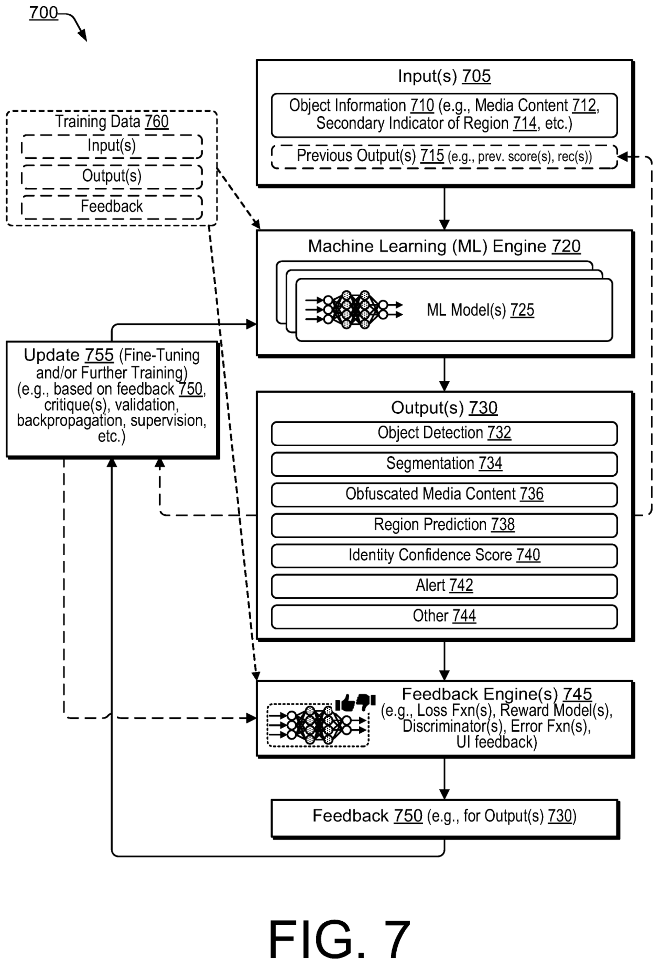

FIG. 7 is a block diagram illustrating an example of a machine learning system 700 for training, use of, and/or updating of one or more machine learning model(s) 725 that are used for content processing, region prediction, and/or identity verification. The machine learning (ML) system 700 includes an ML engine 720 that generates, trains, uses, and/or updates one or more ML model(s) 725. In some examples, the analysis engine(s) 125, the AI model(s) 130, the obfuscation engine 210, and/or AI model(s) 230 include the ML system 700, the ML engine 720, the ML model(s) 725, and/or the feedback engine(s) 745, or vice versa.

The ML model(s) 725 can include, for instance, one or more neural network(s) (NN(s)), one or more convolutional NN(s) (CNN(s)), one or more time delay NN(s) (TDNN(s)), one or more deep network(s) (DN(s)), one or more autoencoder(s) (AE(s)), one or more variational autoencoder(s) (VAE(s)), one or more deep belief net(s) (DBN(s)), one or more recurrent NN(s) (RNN(s)), one or more generative adversarial network(s) (GAN(s)), one or more conditional GAN(s) (cGAN(s)), one or more feed-forward network(s), one or more network(s) having fully connected layers, one or more support vector machine(s) (SVM(s)), one or more random forest(s) (RF), one or more computer vision (CV) system(s), one or more autoregressive (AR) model(s), one or more Sequenceto-Sequence (Seq2Seq) model(s), one or more large language model(s) (LLM(s)), one or more deep learning system(s), one or more classifier(s), one or more transformer(s), or a combination thereof. In examples where the ML model(s) 725 include LLMs, the LLMs can include, for instance, a Generative Pre-Trained Transformer (GPT) (e.g., GPT-2, GPT-3, GPT-3.5, GPT-4, etc.), DaVinci or a variant thereof, an LLM using Massachusetts Institute of Technology (MIT)^{®} langchain, Pathways Language Model (PaLM), Large Language Model Meta^{®} AI (LLaMA), Language Model for Dialogue Applications (LaMDA), Bidirectional Encoder Representations from Transformers (BERT), Falcon (e.g., 40B, 7B, 1B), Orca, Phi-1, StableLM, variant(s) of any of the previously-listed LLMs, or a combination thereof.

Within FIG. 7, a graphic representing the ML model(s) 725 illustrates a set of circles connected to one another. Each of the circles can represent a node, a neuron, a perceptron, a layer, a portion thereof, or a combination thereof. The circles are arranged in columns. The leftmost column of white circles represent an input layer. The rightmost column of white circles represent an output layer. Two columns of shaded circled between the leftmost column of white circles and the rightmost column of white circles each represent hidden layers. An ML model can include more or fewer hidden layers than the two illustrated, but includes at least one hidden layer. In some examples, the layers and/or nodes represent interconnected filters, and information associated with the filters is shared among the different layers with each layer retaining information as the information is processed. The lines between nodes can represent node-to-node interconnections along which information is shared. The lines between nodes can also represent weights (e.g., numeric weights) between nodes, which can be tuned, updated, added, and/or removed as the ML model(s) 725 are trained and/or updated. In some cases, certain nodes (e.g., nodes of a hidden layer) can transform the information of each input node by applying activation functions (e.g., filters) to this information, for instance applying convolutional functions, downscaling, upscaling, data transformation, and/or any other suitable functions.

In some examples, the ML model(s) 725 can include a feed-forward network, in which case there are no feedback connections where outputs of the network are fed back into itself. In some cases, the ML model(s) 725 can include a recurrent neural network, which can have loops that allow information to be carried across nodes while reading in input. In some cases, the network can include a convolutional neural network, which may not link every node in one layer to every other node in the next layer.

One or more input(s) 705 can be provided to the ML model(s) 725. The ML model(s) 725 can be trained by the ML engine 720 (e.g., based on training data 760) to generate one or more output(s) 730. In some examples, the input(s) 705 include object information 710 about an object. The object information 710 can include media content 712 depicting the object in a scene, a secondary indicator of region 714 of the object, and/or other contextual information about a object and/or region. The object can refer to a person, such as the user 190. The object can refer to an animal. The object can refer to a non-human object and/or a non-living object, such as the laptop in the image 145 or an object with PII and/or sensitive information. The object information 710 can include, for instance, the user data 140. The media content 712 can include, for instance, the image 145, the image 205, the image 605, a video, a depth-based representation, another form of media content, or a combination thereof. The secondary indicator of region 714 can include, for instance, the stated region 147.

The output(s) 730 that ML model(s) 725 generate by processing the input(s) 705 (e.g., the object information 710 and/or the previous output(s) 715) can include object detection 732 (e.g., object detection 215), segmentation 734 (e.g., segmentation 220), obfuscated media content 736, a region prediction 738, an identity confidence score 740, an alert 742, other 744 type(s) of output data, or a combination thereof. Examples of the obfuscated media content 736 include the obfuscated image 160, the obfuscated image 225, the obfuscated image 505, the obfuscated image 510, the obfuscated image 515, the obfuscated image 520, the obfuscated image 525, the obfuscated image 530, the obfuscated image 535, and the obfuscated image 625. Examples of the region prediction 738 include the region prediction 150, the region prediction 235, the region prediction 305, the region prediction 405, and the region prediction 635. The identity confidence score 740 can identify a level of confidence, based on the region prediction 738 and the secondary indicator of region 714 (e.g., a comparison thereof indicating a correspondence or a conflict 175), and/or other context (e.g., the other input(s) 705, previous output(s) 715, and/or the other output(s) 730), that the identify of the object (e.g., the person) is accurate. The alert 742 can include a warning (e.g., the warning 170) of a conflict (e.g., conflict 175) or mismatch between the region prediction 738 and the secondary indicator of region 714. The alert 742 can be a notification of any of the output(s) 730. In some examples, the alert 742 can be at least partially generated (e.g., written) using a LLM of the ML model(s) 725. In some examples, the identity confidence score 740, the alert 742, and/or the other 744 type(s) of output data can include a determination as to whether or not an account of a user (e.g., user data 140, object information 710) is optimal, acceptable, suitable, or compliant with one or more rules for another task, such as a fraud check, an identity verification (IDV), an authentication and/or authorization for a transaction, an authentication and/or authorization for a transfer, an authentication and/or authorization for accessing an account, an authentication and/or authorization for accessing a website, an authentication and/or authorization for accessing an application, a dual-factor authentication, a multi-factor authentication, a credit check, a credit report check, a credit score, or a combination thereof.

In some examples, multiple images of the same person or object may be analyzed as part of the media content 712, whether as separate still images or as video frames of a video. In such cases, the identity confidence score 740 can also factor in similarity (or difference) between the different depictions of the object (e.g., person) between the different images. If the ML model(s) 725 predicts that the depictions of the object (e.g., person) in the different images depict different objects (e.g., people), the identity confidence score 740 can drop due to higher likelihood of the images depicting different objects/people, the images being manipulated, or the images being generated using artificial intelligence. If the ML model(s) 725 predicts that the depictions of the object (e.g., person) in the different images depict the same object (e.g., person), the identity confidence score 740 can increase due to higher likelihood of the images depicting the same object or person, and of the images being genuine. In some examples, the platform server(s) 120 can request that the user 190 take photos of themselves from different angles to include in the user data 140 (e.g., media content 712), as images from different angles are more difficult to convincingly fake.

In some examples, the identity confidence score 740 can also be used to identify a confidence level in whether the media content 712 are authentic (e.g., captured using a camera or other sensor and unaltered), manipulated, or generated using a generative artificial intelligence (AI) image generation model, such as a deepfake. For instance, if the ML model(s) 725 detect, via object detection 732 and/or segmentation 734, instances of visual artifacts prevalent in images generated using generative AI image generation models, such as garbled text, hands with incorrect amounts of fingers, and the like.

In some examples, the ML system repeats the process illustrated in FIG. 7 multiple times to generate the output(s) 730 in multiple passes, using some of the output(s) 730 from earlier passes as some of the input(s) 705 in later passes (e.g., as some of the previous output(s) 715). For instance, in a first illustrative example, in a first pass, the ML model(s) 725 can perform object detection 732 on the media content 712. In a second pass, the ML model(s) 725 can perform segmentation 734 on the media content 712, for instance based on the object detection 732 from the first pass (as previous output(s) 715). In a third pass, the ML model(s) 725 can process the media content 712 to generate the obfuscated media content 736, for instance based on the object detection 732 from the first pass and/or the segmentation 734 from the second pass (as previous output(s) 715). In a fourth pass, the ML model(s) 725 can analyze the obfuscated media content 736 to generate the region prediction 738, in some cases with certain previous output(s) 715 (from previous passes or otherwise) also processed. In a fifth pass, the ML model(s) 725 can compare the region prediction 738 (from the fourth pass, as previous output(s) 715) to the secondary indicator of region 714, and/or to other context data (e.g., other previous output(s) 715 from previous passes or otherwise). In a sixth pass, the ML model(s) 725 can generate an alert 742 based on the region prediction 738 (from the fourth pass, as previous output(s) 715), the identity confidence score 740 (from the fifth pass, as previous output(s) 715), and/or any other previous output(s) 715.

In some examples, the region prediction 738 can include a prediction of a specific regions with a confidence score (Region A 92%). In some examples, the region prediction 738 can include multiple probabilities of individual listed regions (Region A 89%, Region B 10%, Region C 1%). In some examples, the region prediction 738 can be Boolean or conditional answer, such as a true (e.g., correct, yes) or false (e.g., incorrect, no) answer to a question such as "is this Region A?" (e.g., as in boolean indicator 325 or boolean indicator 425).In some examples, the ML system includes one or more feedback engine(s) 745 that generate and/or provide feedback 750 about the output(s) 730. In some examples, the feedback 750 indicates how well the output(s) 730 align to corresponding expected output(s), how well the output(s) 730 serve their intended purpose, or a combination thereof. In some examples, the feedback engine(s) 745 include loss function(s), reward model(s) (e.g., other ML model(s) that are used to score the output(s) 730), discriminator(s), error function(s) (e.g., in back-propagation), user interface feedback received via a user interface from a user, or a combination thereof. In some examples, the feedback 750 can include one or more alignment score(s) that score a level of alignment between the output(s) 730 and the expected output(s) and/or intended purpose.

The ML engine 720 of the ML system can update (further train) the ML model(s) 725 based on the feedback 750 to perform an update 755 (e.g., further training) of the ML model(s) 725 based on the feedback 750. In some examples, the feedback 750 includes positive feedback, for instance indicating that the output(s) 730 closely align with expected output(s) and/or that the output(s) 730 serve their intended purpose. In some examples, the feedback 750 includes negative feedback, for instance indicating a mismatch between the output(s) 730 and the expected output(s), and/or that the output(s) 730 do not serve their intended purpose. For instance, high amounts of loss and/or error (e.g., exceeding a threshold) can be interpreted as negative feedback, while low amounts of loss and/or error (e.g., less than a threshold) can be interpreted as positive feedback. Similarly, high amounts of alignment (e.g., exceeding a threshold) can be interpreted as positive feedback, while low amounts of alignment (e.g., less than a threshold) can be interpreted as negative feedback.

In response to positive feedback in the feedback 750, the ML engine 720 can perform the update 755 to update the ML model(s) 725 to strengthen and/or reinforce weights (and/or connections and/or hyperparameters) associated with generation of the output(s) 730 to encourage the ML engine 720 to generate similar output(s) 730 given similar input(s) 705. In this way, the update 755 can improve the ML model(s) 725 itself by improving the accuracy of the ML model(s) 725 in generating output(s) 730 that are similarly accurate given similar input(s) 705. In response to negative feedback in the feedback 750, the ML engine 720 can perform the update 755 to update the ML model(s) 725 to weaken and/or remove weights (and/or connections and/or hyperparameters) associated with generation of the output(s) 730 to discourage the ML engine 720 from generating similar output(s) 730 given similar input(s) 705. In this way, the update 755 can improve the ML model(s) 725 itself by improving the accuracy of the ML model(s) 725 in generating output(s) 730 are more accurate given similar input(s) 705. In some examples, for instance, the update 755 can improve the accuracy of the ML model(s) 725 in generating output(s) 730 by reducing false positive(s) and/or false negative(s) in the output(s) 730.

For instance, here, if the object detection 732 and/or segmentation 734 are used to successfully generate the obfuscated media content 736, this success can be interpreted as feedback 750 that is positive (e.g., positive feedback). If the object detection 732 and/or segmentation 734 fail to successfully generate the obfuscated media content 736, this failure or lack of success can be interpreted as feedback 750 that is negative (e.g., negative feedback). Either way, the update 755 can improve the machine learning system 700 and the overall system by improving the consistency with which the object detection 732, segmentation 734, and/or obfuscated media content 736 is successful and/or accurate.

Similarly, if the obfuscated media content 736 is used to successfully generate the region prediction 738, this success can be interpreted as feedback 750 that is positive (e.g., positive feedback). If the obfuscated media content 736 fails to successfully generate the region prediction 738, this failure or lack of success can be interpreted as feedback 750 that is negative (e.g., negative feedback). Either way, the update 755 can improve the machine learning system 700 and the overall system by improving the consistency with which the obfuscated media content 736 and/or region prediction 738 is successful and/or accurate.

Similarly, if the region prediction 738 is used to successfully generate the identity confidence score 740 and/or a decision (e.g., decision 650, decision 660, decision 665) and/or the alert 742, this success can be interpreted as feedback 750 that is positive (e.g., positive feedback). If the region prediction 738 fails to successfully generate the identity confidence score 740 and/or a decision (e.g., decision 650, decision 660, decision 665) and/or the alert 742, this failure or lack of success can be interpreted as feedback 750 that is negative (e.g., negative feedback). Either way, the update 755 can improve the machine learning system 700 and the overall system by improving the consistency with which the region prediction 738, the identity confidence score 740, the decision (e.g., decision 650, decision 660, decision 665), and/or the alert 742 is successful and/or accurate.

In some examples, the ML engine 720 can also perform an initial training of the ML model(s) 725 before the ML model(s) 725 are used to generate the output(s) 730 based on the input(s) 705. During the initial training, the ML engine 720 can train the ML model(s) 725 based on training data 760. In some examples, the training data 760 includes examples of input(s) (of any input types discussed with respect to the input(s) 705), output(s) (of any output types discussed with respect to the output(s) 730), and/or feedback (of any feedback types discussed with respect to the feedback 750). In some cases, positive feedback in the training data 760 can be used to perform positive training, to encourage the ML model(s) 725 to generate output(s) similar to the output(s) in the training data given input of the corresponding input(s) in the training data. In some cases, negative feedback in the training data 760 can be used to perform negative training, to discourage the ML model(s) 725 from generate output(s) similar to the output(s) in the training data given input of the corresponding input(s) in the training data. In some examples, the training of the ML model(s) 725 (e.g., the initial training with the training data 760, update(s) 755 based on the feedback 750, and/or other modification(s)) can include fine-turning of the ML model(s) 725, retraining of the ML model(s) 725, or a combination thereof.

In some examples, the ML model(s) 725 can include an ensemble of multiple ML models, and the ML engine 720 can curate and manage the ML model(s) 725 in the ensemble. The ensemble can include ML model(s) 725 that are different from one another to produce different respective outputs, which the ML engine 720 can average (e.g., mean, median, and/or mode) to identify the output(s) 730. In some examples, the ML engine 720 can calculate the standard deviation of the respective outputs of the different ML model(s) 725 in the ensemble to identify a level of confidence in the output(s) 730. In some examples, the standard deviation can have an inverse relationship with confidence. For instance, if the respective outputs of the different ML model(s) 725 are very different from one another (and thus have a high standard deviation above a threshold), the confidence that the output(s) 730 are accurate may be low (e.g., below a threshold). On the other hand, if the respective outputs of the different ML model(s) 725 are equal or very similar to one another (and thus have a low standard deviation below a threshold), the confidence that the output(s) 730 are accurate may be high (e.g., above a threshold). In some examples, different ML models(s) 725 in the ensemble can include different types of models. For instance, in some examples, an ensemble can include a NN and a SVM that are both trained to process the input(s) 705 to generate at least a subset of the output(s) 730. In some examples, the ensemble may include different ML model(s) 725 that are trained to process different inputs of the input(s) 705 and/or to generate different outputs of the output(s) 730. For instance, in some examples, a first model (or set of models) can process the input(s) 705 to perform the object detection 732, a second model (or set of models) can process the input(s) 705 to perform the segmentation 734, a third model (or set of models) can process the input(s) 705 to generate the obfuscated media content 736, a fourth model (or set of models) can process the input(s) 705 to generate the region prediction 738, a fifth model (or set of models) can process the input(s) 705 to generate the identity confidence score 740, and a sixth model (or set of models) can process the input(s) 705 to generate the alert 742. In some examples, the ML engine 720 can choose specific ML model(s) 725 to be included in the ensemble because the chosen ML model(s) 725 are effective at accurately processing particular types of input(s) 705, are effective at accurately generating particular types of output(s) 730, are generally accurate, process input(s) 705 quickly, generate output(s) 730 quickly, are computationally efficient, have higher or lower degrees of uncertainty than other models in the ensemble, or a combination thereof

In some examples, one or more of the ML model(s) 725 can be initialized with weights, connections, and/or hyperparameters that are selected randomly. This can be referred to as random initialization. These weights, connections, and/or hyperparameters are modified over time through training (e.g., initial training with the training data 760 and/or update(s) 755 based on the feedback 750), but the random initialization can still influence the way the ML model(s) 725 process data, and thus can still cause different ML model(s) 725 (with different random initializations) to produce different output(s) 730. Thus, in some examples, different ML model(s) 725 in an ensemble can have different random initializations.

As an ML model (of the ML model(s) 725) is trained (e.g., along the initial training with the training data 760, update(s) 755 based on the feedback 750, and/or other modification(s)), different versions of the ML model at different stages of training can be referred to as checkpoints. In some examples, after each new update to a model (e.g., update 755) generates a new checkpoint for the model, the ML engine 720 tests the new checkpoint (e.g., against testing data and/or validation data where the correct output(s) are known) to identify whether the new checkpoint improves over older checkpoints or not, and/or if the new checkpoint introduces new errors (e.g., false positive(s) and/or false negative(s)). This testing can be referred to as checkpoint benchmark scoring. In some examples, in checkpoint benchmark scoring, the ML engine 720 produces a benchmark score for one or more checkpoint(s) of one or more ML model(s) 725, and keeps the checkpoint(s) that have the best (e.g., highest or lowest) benchmark scores in the ensemble. In some examples, if a new checkpoint is worse than an older checkpoint, the ML engine 720 can revert to the older checkpoint. The benchmark score for a can represent a level of accuracy of the checkpoint and/or number of errors (e.g., false positive or false negative) by the checkpoint during the testing (e.g., against the testing data and/or the validation data). In some examples, an ensemble of the ML model(s) 725 can include multiple checkpoints of the same ML model.

In some examples, the ML model(s) 725 can be modified, either through the initial training (with the training data 760), an update 755 based on the feedback 750, or another modification to introduce randomness, variability, and/or uncertainty into an ensemble of the ML model(s) 725. In some examples, such modification(s) to the ML model(s) 725 can include dropout (e.g., Monte Carlo dropout), in which one or more weights or connections are selected at random and removed. In some examples, dropout can also be performed during inference, for instance to modify the output(s) 730 generated by the ML model(s) 725. The term Bayesian Machine Learning (BML) can refer to random dropout, random initialization, and/or other randomization-based modifications to the ML model(s) 725. In some examples, the modification(s) to the ML model(s) 725 can include a hyperparameter search and/or adjustment of hyperparameters. The hyperparameter search can involve training and/or updating different ML models 725 with different values for hyperparameters and evaluating the relative performance of the ML models 725 (e.g., against (e.g., against testing data and/or validation data where the correct output(s) are known) to identify which of the ML models 725 performs best. Hyperparameters can include, for instance, temperature (e.g., influencing level creativity and/or randomness), top P (e.g., influencing level creativity and/or randomness), frequency penalty (e.g., to prevent repetitive language between one of the output(s) 730 and another), presence penalty (e.g., to encourage the ML model(s) 725 to introduce new data in the output(s) 730), other parameters or settings, or a combination thereof.

In some examples, the ML engine 720 can perform retrieval-augmented generation (RAG) using the model(s) 725. For instance, in some examples, the ML engine 720 can pre-process the input(s) 705 by retrieving additional information from one or more data store(s) (e.g., any of the databases and/or other data structures discussed herein) and using the additional information to enhance the input(s) 705 before the input(s) 705 are processed by the ML model(s) 725 to generate the output(s) 730. For instance, in some examples, the enhanced versions of the input(s) 705 can include the additional information that the ML engine 720 retrieved from the from one or more data store(s). In some examples, this RAG process provides the ML model(s) 725 with more relevant information, allowing the ML model(s) 725 to generate more accurate and/or personalized output(s) 730.

In some examples, the content processing system can also be used for other functions. For instance, in some examples, the ML model(s) 725 can use the object detection 732 and/or the segmentation 734 to detect how many of an object are present in a photo, for instance to help a merchant take inventory. In some examples, the ML model(s) 725 can predict what price a product should be based on training data, which may include objects as well as their prices.

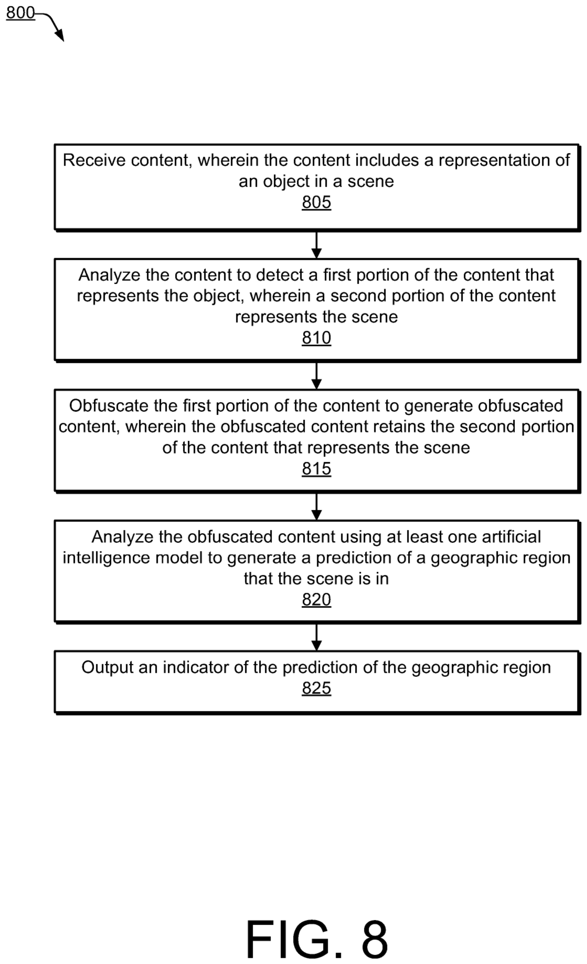

FIG. 8 is a flow diagram illustrating a process 800 for content analysis and/or processing. The process 800 can be performed by, and/or using, a content processing system. The content processing system can include, for instance, the content processing system that performs the process 100 of FIG. 1, the user device(s) 105, the platform server(s) 120, the analysis engine(s) 125, the AI model(s) 130, the analysis engine that performs the process 200, the obfuscation engine 210, the AI model(s) 230, the analysis engine that performs the process 600, the ML system 700, the ML engine 720, the ML model(s) 725, the feedback engine(s) 745, the content processing system that performs the process 900, the environment 1000 for application interface customization, the environment 1100, the system 1200, a system, an apparatus, a point of sale (POS) system or terminal, a transaction instrument reader device, a processor that performs instructions stored in a (optionally non-transitory) computer-readable storage medium, any subsystems or components of any of the above-listed systems, any other computing systems discussed herein, or a combination thereof.

At operation 805, the content processing system (or a subsystem thereof) is configured to, and can, receive content. The content includes a representation of an object in a scene. The content can be, can include, and/or can be referred to as media content. Examples of the content include the image 145, the image 205, the image 605, the media content 712, a video, a depth-based representation, another form of media content, or a combination thereof. Examples of the object include the user 190, the people in the image 145, the laptop screen in the image 145, the person in the image 205, the man in the image 605, and the object in the media content 712. In some examples, the content may be a "selfie" image that the user captures of themselves.

In some examples, the object includes at least a portion of a person (e.g., the user 190, the people in the image 145, the laptop screen in the image 145, the person in the image 205, the man in the image 605). In some examples, the object includes at least a portion of a face of a person. In some examples, the object includes personally identifiable information (PII) associated with a person, such as PII on the screen of the laptop in the image 145. In some examples, the object includes sensitive information associated with a person, such as sensitive information on the screen of the laptop in the image 145.

At operation 810, the content processing system (or a subsystem thereof) is configured to, and can, analyze the content (e.g., via the analysis engine(s) 125, the obfuscation engine 210, the object detection 215, the segmentation 220, the object detection 732, and/or the segmentation 734) to detect a first portion of the content that represents the object. A second portion of the content represents the scene. The first portion of the content can be referred to as a first portion or first part of the content, and can refer to a first area within the content. The second portion of the content can be referred to as a second portion or second part of the content, and can refer to a second area within the content. In examples where the content is an image or includes an image (e.g., as a video frame of a video), the first portion of the content can include a first subset of the set of all pixels in the image that depict the object, and the second portion of the content can include a second subset of the set of all pixels in the image that depict the scene.

In some examples, the object is in the foreground of the content, and the scene (e.g., environment) is in the background of the content. In some examples, the first portion of the content represents the foreground (e.g., including the object). In some examples, the second portion of content represents the background (e.g., the scene and/or the environment, but not the object).

In some examples, analyzing the content to detect the first portion of the content that represents the object (as in operation 810) includes processing the content using a second AI model (e.g., second trained machine learning model) that detects the first portion of the content that represents the object (e.g., the ML model(s) 725 that perform object detection 215, segmentation 220, object detection 732, and/or segmentation 734). In some examples, the content processing system (or a subsystem thereof) is configured to, and can, receive further information (e.g., feedback 750) indicating a level of accuracy of the detection of the first portion (by the second AI model and/or second trained machine learning model). In some examples, the content processing system can update (e.g., via update 755) the second AI model (e.g., second trained machine learning model) based on the further information to improve an accuracy of the second trained machine learning model at object detection.

At operation 815, the content processing system (or a subsystem thereof) is configured to, and can, obfuscate (e.g., via the analysis engine(s) 125, the obfuscation engine 210 and/or the ML model(s) 725 that generate the obfuscated media content 736) the first portion of the content to generate obfuscated content. The obfuscated content retains the second portion of the content that represents the scene. Examples of the obfuscated content include the obfuscated image 160, the obfuscated image 225, the obfuscated image 505, the obfuscated image 510, the obfuscated image 515, the obfuscated image 520, the obfuscated image 525, the obfuscated image 530, the obfuscated image 535, the obfuscated image 625, and the obfuscated media content 736.

In some examples, obfuscating the first portion of the content (as in operation 815) includes masking the first portion of the content, as in the obfuscated image 160, the obfuscated image 225, the obfuscated image 525, and/or the obfuscated image 530. In some examples, obfuscating the first portion of the content (as in operation 815) includes at least one of blurring the first portion of the content or pixelating the first portion of the content, as in the obfuscated image 505 and/or the obfuscated image 510. In some examples, obfuscating the first portion of the content (as in operation 815) includes interpolating based on the second portion of the content to replace the first portion of the content, as in the obfuscated image 535.

In some examples, obfuscating the first portion of the content (as in operation 815) includes processing the content using a second trained machine learning model that obfuscates the first portion of the content that represents the object (e.g., the AI model(s) 230, the ML model(s) 725 that generate the obfuscated media content 736). In some examples, the content processing system (or a subsystem thereof) is configured to, and can, receive further information (e.g., feedback 750) indicating a level of accuracy of the obfuscated content (by the second trained machine learning model). In some examples, the content processing system can update (e.g., via update 755) the second trained machine learning model based on the further information to improve an accuracy of the second trained machine learning model at generating obfuscated content.

At operation 820, the content processing system (or a subsystem thereof) is configured to, and can, analyze the obfuscated content using at least one artificial intelligence (AI) model to generate a prediction of a geographic region that the scene is in. The geographic region is at least a portion of a continent. The prediction of a geographic region that the scene is in can be referred to as a region prediction. Examples of the prediction of a geographic region that the scene is in (the region prediction) include the region prediction 150, the region prediction 235, the region prediction 305, the region prediction 405, the region prediction 635, the region prediction 738, and/or other region predictions discussed herein. In some examples, the artificial intelligence model is a trained machine learning model. Examples of the artificial intelligence model (and/or the trained machine learning model) include the AI model(s) 130, ML model(s) of the obfuscation engine 210, the AI model(s) 230, the ML model(s) 725, other ML model(s) discussed herein, or a combination thereof.

At operation 825, the content processing system (or a subsystem thereof) is configured to, and can, output an indicator of the prediction of the geographic region. Examples of the indicator include the region prediction 150, the warning 170, the region prediction 235, the region prediction 305, the region prediction 405, the region prediction 635, the auto-filling 640, the decision 650, the decision 660, the decision 665, the region prediction 738, the identity confidence score 740, the alert 742, or a combination thereof.

In some examples, the content processing system (or a subsystem thereof) is configured to, and can, receive further information (e.g., feedback 750) indicating a level of accuracy of the prediction of the geographic region. The content processing system (or a subsystem thereof) can update (e.g., via update 755) the at least one trained machine learning model based on the further information to improve an accuracy of the trained machine learning model at geographic region prediction.

In some examples, the content processing system (or a subsystem thereof) is configured to, and can, compare the prediction of the geographic region with a second indicator of geographic region of the object to identify a conflict (e.g., conflict 175) between the prediction and the second indicator. In some examples, the indicator of the prediction of the geographic region (of operation 825) is an indicator of the conflict (e.g., is the warning 170 of the conflict 175, or an identity confidence score 740 indicative of the conflict 175, or an alert 742 indicative of the conflict 175). In some examples, the content processing system (or a subsystem thereof) is configured to, and can, automatically disable access to at least one of an asset or a function of a device in response to identifying the conflict (e.g., disable the ability of the user 190 to withdraw assets, make a purchase, perform a transfer, or perform another transaction; or deny access to the account of the user 190, to an account of another user, to a website, to the platform 115).

In some examples (e.g., where the object is a user), the content processing system (or a subsystem thereof) is configured to, and can, process the prediction of the geographic region and a second indicator of geographic region of the object (e.g., stated region 147, secondary indicator of region 714) using a second AI model (e.g,, second trained machine learning model) (e.g., ML model(s) 725 that generates the identity confidence score 740 and/or the alert 742) to determine a level of confidence in an identity of a user (e.g., identity confidence score 740). The content processing system can use the level of confidence in the identity of the user for at least one of a fraud check, an identity verification, or a transaction authorization. In some examples, content processing system can use the level of confidence in the identity of the user for a determination as to whether or not an account of a user (e.g., user data 140, object information 710) is optimal, acceptable, suitable, or compliant with one or more rules for another task, such as a fraud check, an identity verification (IDV), an authentication and/or authorization for a transaction, an authentication and/or authorization for a transfer, an authentication and/or authorization for accessing an account, an authentication and/or authorization for accessing a website, an authentication and/or authorization for accessing an application, a dual-factor authentication, a multi-factor authentication, a credit check, a credit report check, a credit score, or a combination thereof. In some examples, the content processing system (or a subsystem thereof) is configured to, and can receiving further information about the identity of the user (e.g., feedback 750). The content processing system can update (e.g., via update 755) the second AI model (e.g,, second trained machine learning model) based on the further information to improve an accuracy of the second AI model (e.g,, second trained machine learning model) at identity determination.

In some examples, outputting the indicator of the prediction of the geographic region (as in operation 825) includes associating the indicator of the prediction of the geographic region with an identifier of the object (e.g., record 185) in a data structure (e.g., database 180 or another type of data store). In some examples, outputting the indicator of the prediction of the geographic region (as in operation 825) includes using the prediction of the geographic region (e.g., retrieved from the record 185 of the database 180 or other data structure, or otherwise) to make a decision, wherein the decision includes at least one of a decision for which region to input for a region field of a form (e.g., auto-filling 640 of the form 645), a decision whether a functionality of a device is to be enabled (e.g., decision 650), a decision as to what currency to use in association with a transaction (e.g., decision 660), a decision as to what price to use in association with a transaction (e.g., decision 660), a decision as to what language to use for a string of text (e.g., decision 660), or a decision as to which of a set of locations to select (e.g., decision 665).

In some examples, the prediction of the geographic region can predict where the content was captured. In some examples, the content processing system can use metadata of the content as clues for generating the prediction of the geographic region. In some examples, the content processing system can treat the metadata of the content as a second indicator of geographic region (e.g., stated region 147, secondary indicator of region 714).

In some examples, the prediction of the geographic region of the object (of operation 820) can be used to detect suspicious activity, such as suspicious network activity and/or anomalies in network traffic that are indicative of a fraud attempt. For instance, the content processing system can compare the prediction of the geographic region to the second indication of geographic location to verify whether they correspond (e.g., match or are similar) or conflict (do not match or correspond).

In some examples, the content may be, and/or may include, an image, a video, an audio clip, a text string (e.g., document), other type(s) of media, or a combination thereof. If the content is a video, then the content processing system (or a subsystem thereof) is configured to, and can, treat each video frame (also referred to as an image frame) as an image and obfuscate the video frames as described herein regarding obfuscation of images. In some examples, if the content is a video, the content processing system (or a subsystem thereof) is configured to, and can, use feature recognition, feature tracking, object recognition, object tracking, facial recognition, facial tracking, person recognition, and/or person tracking to track the object to be obfuscated across different video frames. For instance, this can help the content processing system (or a subsystem thereof) to ensure that object continues to be obfuscated consistently. This can also help the content processing system (or a subsystem thereof) make obfuscating more efficient, for instance if the object have remained in the same position from one video frame to the next, or have moved a small amount (e.g., less than a threshold distance) (e.g., just a few pixels) from one video frame to the next.

In some examples, if the media content is an audio clip, and the object is a person, the content processing system (or a subsystem thereof) is configured to, and can, use speech detection, speech recognition, and/or speech separation techniques to detect, recognize, and/or separate speech from one or more person(s) to be obfuscated. In some examples, obfuscation of speech can include removal of speech, deletion of speech, garbling of speech, attenuation of speech, reduction in volume of speech, change (e.g., increase or decrease) in tone of speech, change (e.g., increase or decrease) in pitch of speech, change (e.g., increase or decrease) in frequency of speech, change (e.g., increase or decrease) in wavelength of speech, or a combination thereof.

If the comparison indicates a mismatch or conflict between the prediction of the geographic region and the second indication of geographic location, the content processing system can automatically take various actions, including proactive remediation of network attacks. For instance, the content processing system can issue a warning (e.g., warning 170 to a user device, a point of sale (POS) terminal, a platform server, and/or a network administrator) about suspicious activity, can disable a device (e.g., the user device, a point of sale (POS) terminal, and/or an affected platform server), disable functionality (e.g., disable the user's ability to withdraw assets, make a purchase, perform a transfer, or perform another transaction), deny access (e.g., to the account, to a website, to the platform), update a record 185 (e.g., corresponding to the user 190 and/or the user device(s) 10 in a database 180 or other data structure (e.g., to associate an indicator of the region prediction 150 with an identifier of the user 190 or user device(s) 105 in the record 185), cancel a transaction (e.g., that involves the user), initiate a refund and/or return (e.g., for another user who purchased from the user), freeze assets (e.g., of the user), drop network packets (e.g., from the user device of the user), block a network address (e.g., of the user device of the user), or a combination thereof. These operations can be performed automatically, proactively, preemptively, dynamically, and/or in real-time or near real-time, before the user can perform any further suspicious activity. The content processing system can realize a technical improvement by avoiding a delay involved in waiting on a network administrator to react to a network intrusion by automatically dropping suspicious packets and blocking traffic from suspicious source addresses based on an anomaly identified in association with the mismatch or conflict between the prediction of the geographic region and the second indication of geographic location.

If the comparison indicates a correspondence (e.g., match or similarity) between the prediction of the geographic region and the second indication of geographic location, the content processing system can automatically take various actions, including verifying the identity of the user, auto-filling a form with the geographic region, enabling a device, enabling a functionality, granting access, selecting a region-specific setting, or a combination thereof. Selecting the region-specific setting can include, for instance, selecting a region-specific currency (e.g., to show in a user interface), selecting a region-specific price (e.g., to show in a user interface), selecting a region-specific language (e.g., to show in a user interface), selecting a region-specific location (e.g., a store location, restaurant location, or other location of something other than the user that is selected to be as close to the user's region as possible). For instance, in some examples, the prediction of the geographic region and the second indication of geographic location can serve as two separate factors of authentication in a dual-factor authentication or multi-factor authentication system that automatically improves security in a low-complexity manner (e.g., from the user's perspective). In some examples, the content processing system can use the prediction of the geographic region for a number of the operations listed above even without first comparing to the second indication of geographic location (or even without first receiving the second indication of geographic location).

In some examples, the content processing system can generate the obfuscated media content by first analyzing the media content to extract image features, such as corners, edges, blobs, or facial landmarks. The content processing system can employ an analysis engine (e.g., which may include one or more AI models and/or trained machine learning models) to process the media content through feature extraction, feature detection, feature recognition, feature tracking, object detection, object recognition, object tracking, facial detection, facial recognition, facial tracking, person detection, person recognition, person tracking, or a combination thereof. In some examples, the content processing system can employ the analysis engine to perform segmentation of the image, for instance including semantic segmentation, classification, or a combination thereof. In some examples, the content processing system apply the segmentation to segment the media content into a first portion of the content (e.g., first subset of pixels in an image) that depicts or otherwise represents the person (or other object of interest) and a second portion of the content (e.g., second subset of pixels in the image) that depicts or otherwise represents the scene (e.g., the environment, the background). The obfuscated media content represents a new kind of file that enables the content processing system to perform security analyses that it could not do otherwise, for instance to analyze the scene for geographic region prediction without introducing bias (or possible security and/or privacy issues) by also analyzing the person in the scene for the geographic region prediction.

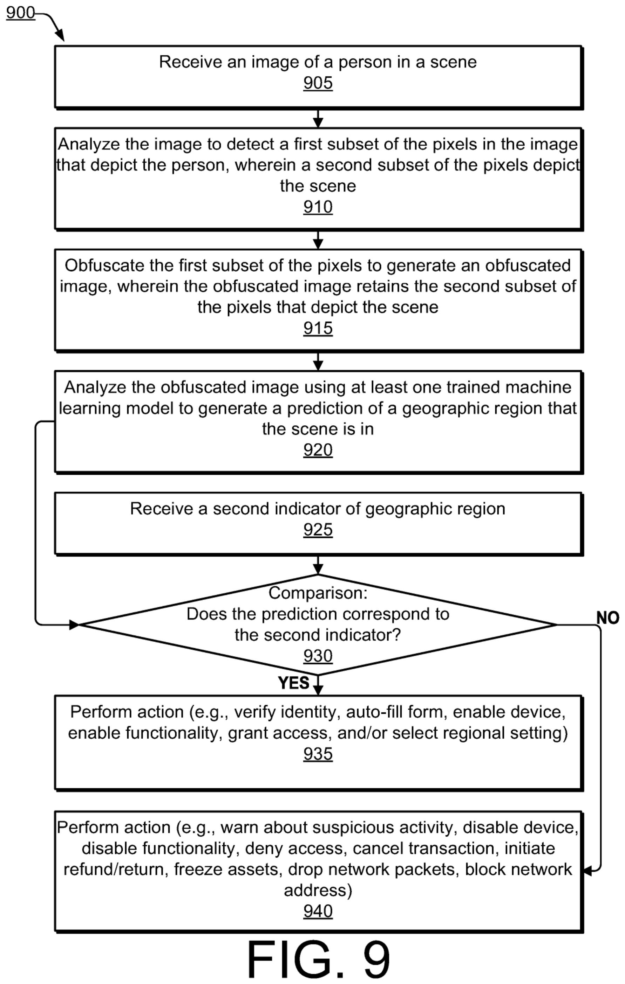

FIG. 9 is a flow diagram illustrating a process 900 for image analysis and/or processing. The process 900 can be performed by, and/or using, a content processing system. The content processing system can include, for instance, the content processing system that performs the process 100 of FIG. 1, the user device(s) 105, the platform server(s) 120, the analysis engine(s) 125, the AI model(s) 130, the analysis engine that performs the process 200, the obfuscation engine 210, the AI model(s) 230, the analysis engine that performs the process 600, the ML system 700, the ML engine 720, the ML model(s) 725, the feedback engine(s) 745, the content processing system that performs the process 800, the environment 1000 for application interface customization, the environment 1100, the system 1200, a system, an apparatus, a point of sale (POS) system or terminal, a transaction instrument reader device, a processor that performs instructions stored in a (optionally non-transitory) computer-readable storage medium, any subsystems or components of any of the above-listed systems, any other computing systems discussed herein, or a combination thereof.

At operation 905, the content processing system (or a subsystem thereof) is configured to, and can, receive an image of a person in a scene. The scene may be referred to as the environment or background. Examples of the image include the image 145, the image 205, the image 605, the media content 712, and/or the content of the process 800. Examples of the person include the user 190, the people in the image 145, the person in the image 205, the man in the image 605, the object in the media content 712, and/or the object in the content in the process 800. In some examples, the image may be a selfie image that the user captures of themselves. Operation 905 can be an example of operation 805, or vice versa.

At operation 910, the content processing system (or a subsystem thereof) is configured to, and can, analyze the image (e.g., via the analysis engine(s) 125, the obfuscation engine 210, the object detection 215, the segmentation 220, the object detection 732, and/or the segmentation 734) to detect a first subset of pixels in the image that depict the person. A second subset of the pixels in the image depict the scene. Operation 910 can be an example of operation 810, or vice versa.

In some examples, the person is in the foreground of the image, and the scene (e.g., environment) is in the background of the image. In some examples, the first subset of pixels in the image depicts the foreground of the image (e.g., including the person). In some examples, the second subset of pixels in the image depicts the background of the image (e.g., the scene and/or the environment, but not the person).

At operation 915, the content processing system (or a subsystem thereof) is configured to, and can, obfuscate the first subset of the pixels to generate an obfuscated image. The obfuscated image retains the second subset of the pixels that depict the scene. Operation 915 can be an example of operation 815, or vice versa.

At operation 920, the content processing system (or a subsystem thereof) is configured to, and can, analyze the obfuscated image using at least one trained machine learning model to generate a prediction of a geographic region that the scene is in. The geographic region is at least a portion of a continent. Operation 920 can be an example of operation 820, or vice versa.

At operation 925, the content processing system (or a subsystem thereof) is configured to, and can, receive a second indicator of geographic region (e.g., stated region 147, secondary indicator of region 714). For example, the second indicator of geographic region can be the stated region 147, other information in the user data 140, object information 710 other than the media content of FIG. 7, or a combination thereof. Note that operation 925 can happen before, during, or after any of operation 905, operation 910, operation 915, or operation 920.

At operation 930, the content processing system (or a subsystem thereof) is configured to, and can, perform a comparison to determine whether the prediction of the geographic region (generated in operation 920) corresponds to (e.g., matches or is similar to) the second indicator of geographic region (received in 925). If the comparison (of operation 930) determines that the prediction (generated in operation 920) corresponds to (e.g., matches or is similar to) the second indicator (received in operation 925), then operation 935 follows after operation 930. If the comparison (of operation 930) determines that the prediction (generated in operation 920) does not correspond to (e.g., conflicts with, is mismatched with, or is dissimilar from) the second indicator (received in operation 925), then operation 940 follows after operation 930. In some examples, regions can be judged (at operation 930) to correspond to one another if one region includes another, such as if one region is city and the other region is a state or country that includes that city. In some examples, regions can be judged (at operation 930) to correspond to one another if both regions are within a shared larger region (e.g., if the two regions are two different cities within the same state or country). In some examples, regions can be judged (at operation 930) to correspond to one another if one region is in proximity with the other (e.g., if one region is within a predetermined distance of the other).

At operation 935, the content processing system (or a subsystem thereof) is configured to, and can, use the correspondence (e.g., match or similarity) (from the comparison of operation 930) to verify an identity of the person, to auto-fill (e.g., auto-filling 640) a form (e.g., form 645) with the geographic region, enable or activate a device (e.g., as in decision 650), enable or activate a functionality in a device (e.g., as in decision 650), and/or to select a region-specific element (e.g., currency, price, language, and/or store location) (e.g., as in decision 660 and/or decision 665). Operation 935 can be an example of operation 825, or vice versa.

In some examples, the prediction of the geographic region can predict where the content was captured. In some examples, the content processing system can use metadata of the content as clues for generating the prediction of the geographic region. In some examples, the content processing system can treat the metadata of the content as a second indicator of geographic region (e.g., stated region 147, secondary indicator of region 714).

At operation 940, the content processing system (or a subsystem thereof) is configured to, and can, use the mismatch and/or conflict (from the comparison of operation 930) to cause a warning (e.g., warning 170) to surface (e.g., on a user device of the person or of another person such as a network administrator) about suspicious activity (e.g., potential fraud attempt), issue a warning (e.g., warning 170) to another system (e.g., a transaction system that determines whether to process a transaction involving the person) about suspicious activity (e.g., potential fraud attempt), disable or deactivate a device, disable or deactivate a functionality in a device, cancel a transaction, initiate a refund and/or return of a purchase, freeze assets for an account associated with the person, or a combination thereof. Operation 940 can be an example of operation 825, or vice versa.

While the process 900 is described as an example of the process 800 in which the content (of the process 800) is an image (of the process 900), and the object (of the process 800) is a person (of the process 900), it should be understood that the process 900 can be modified for other types of content (such as any of the types of content discussed with respect to the process 800) and/or other types of objects (such as any of the types of objects discussed with respect to the process 800).

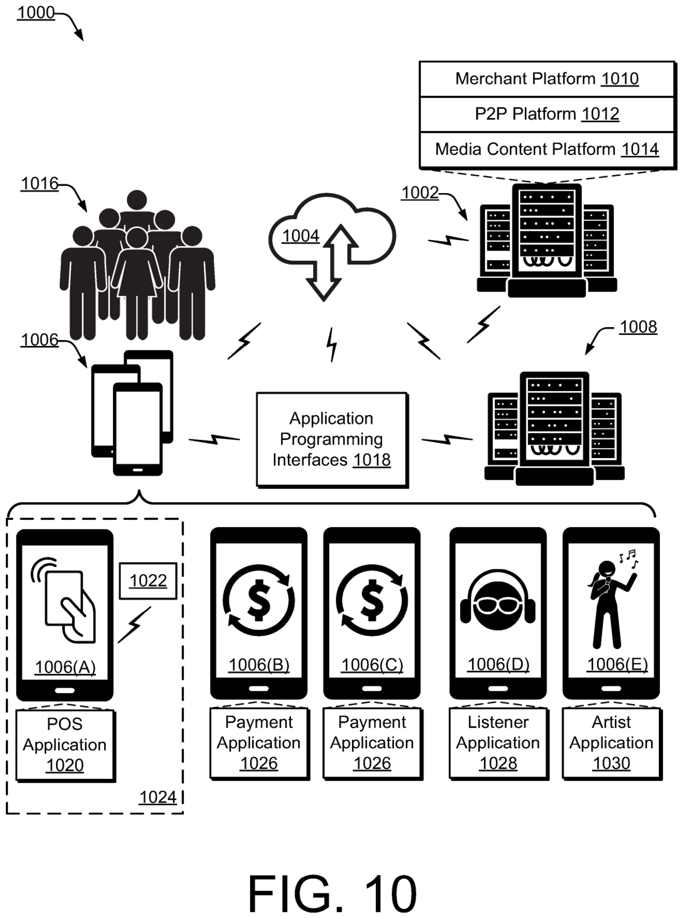

FIG. 10 illustrates an example environment 1000 for application interface customization. The environment 1000 includes server(s) 1002 that can communicate over a network 1004 with end user devices 1006 and/or server(s) 1008 associated with thirdparty service provider(s). In various examples, the end user devices 1006 may comprise one or more merchant devices 1006(A), one or more user devices 1006(B) and/or 1006(C) in a peer network, one or more content consumption devices 1006(D), one or more artist user devices 1006(E), combinations of these examples, or other categories of user devices. The server(s) 1002 can be associated with one or more service providers that can provide one or more services for the benefit of users 1016, as described below. For example, the server(s) 1002 may enable services of service providers such as in association with a merchant platform 1010 (which may further include a buyer platform), a peer-to-peer (P2P) payment platform 1012, a media content platform 1014, a combination of these platforms, or other platforms associated with other service providers. While services and features are referenced throughout in connection with a particular one of the merchant platform 1010, the P2P payment platform 1012, or the media content platform 1014, it should be understood that any of these platforms may perform the functionality described in relation to any of the other platforms. Actions attributed to the service provider(s) can be performed by the server(s) 1002.

In some examples, the end user devices 1006 can be examples of the device(s) 105, or vice versa. The merchant platform 1010, P2P platform 1012, and/or media content platform 1014 can be examples of the content processing system that performs the process 100, the platform server(s) 120, the analysis engine(s) 125, the AI model(s) 130, the analysis engine that performs the process 200, the obfuscation engine 210, the AI model(s) 230, the analysis engine that performs the process 600, the ML system 700, the ML engine 720, the ML model(s) 725, the feedback engine(s) 745, the content processing system that performs the process 800, the content processing system that performs the process 900, or a combination thereof. In some examples, individual ones of the end user devices 1006 can be operable by users 1016 (e.g., user 190). The users 1016 (individually referred to herein as "user 1016") can be referred to as miners, customers, buyers, merchants, sellers, borrowers, employees, employers, payors, payees, couriers, artists, musicians, listeners, fans, supervisors, hosts, audience members, and so on. The users 1016 can interact with the end user devices 1006 via user interfaces presented via the end user devices 1006. In at least one example, a user interface can be presented via a web browser, or the like. Alternatively or additionally, a user interface can be presented via an application, such as a mobile application or desktop application, which can be provided by the merchant platform 1010, the P2P payment platform 1012, and/or the media content platform 1014, or which can be an otherwise dedicated application. In some examples, individual end user devices 1006 can have an instance or versioned instance of an application, which can be downloaded from an application store, for example, which can present the user interface(s) described herein.

In at least one example, the users 1016 can include merchants that can operate the seller device(s) 1006(A) that are configured for use by merchants. For the purpose of this discussion, a "merchant" can be any entity that offers items (e.g., goods or services) for purchase or other means of acquisition (e.g., rent, borrow, barter, etc.). The merchants can offer items for purchase or other means of acquisition via brick-and-mortar stores, mobile stores (e.g., pop-up shops, food trucks, etc.), online stores, event venues, combinations of the foregoing, and so forth. In some examples, at least some of the merchants can be associated with the same entity but can have different merchant locations and/or can have franchise/franchisee relationships.

In additional or alternative examples, the merchants can be different merchants. For the purpose of this discussion, "different merchants" can refer to two or more unrelated merchants. "Different merchants" therefore can refer to two or more merchants that are different legal entities (e.g., natural persons and/or corporate persons) that do not share accounting, employees, branding, etc. "Different merchants," as used herein, have different names, employer identification numbers (EIN)s, lines of business (in some examples), inventories (or at least portions thereof), and/or the like. Thus, the use of the term "different merchants" does not refer to a merchant with various merchant locations or franchise/franchisee relationships. Such merchants-with various merchant locations or franchise/franchisee relationships-can be referred to as merchants having different merchant locations and/or different commerce channels.

The seller device 1006(A) can have an instance of a point of sale ("POS") application 1020 stored thereon. The POS application 1020 can configure the seller device 1006(A) as a POS terminal, which enables the merchant to interact with one or more customers. In at least one example, interactions between the customers and the merchants that involve the exchange of funds (from the customers) for items or services (from the merchants) can be referred to as "transactions." In at least one example, the POS application 1020 can determine transaction data associated with the POS transactions. Transaction data can include payment information, which can be obtained from a reader device 1022 associated with the seller device 1006(A), user authentication data, purchase amount information, point-of-purchase information (e.g., item(s) purchased, date of purchase, time of purchase, subscription type, etc.), etc. The POS application 1020 can send transaction data to the server(s) 1002 such that the server(s) 1002 can track transactions of the customers, merchants, and/or the users 1016 over time. Furthermore, the POS application 1020 can present a UI to enable the merchant to interact with the POS application 1020 and/or the merchant platform 1010 via the POS application 1020.

In at least one example, the seller device 1006(A) can be a special-purpose computing device configured as a POS terminal (via the execution of the POS application 1020). In at least one example, the POS terminal may be connected to a reader device 1022, which is capable of accepting a variety of payment instruments, such as credit cards, debit cards, gift cards, short-range communication based payment instruments, and the like, as described below. In at least one example, the reader device 1022 can plug in to a port in the seller device 1006(A), such as a microphone port, a headphone port, an audio-jack, a data port, or other suitable port. In additional or alternative examples, the reader device 1022 can be coupled to the seller device 1006(A) via another wired or wireless connection, such as via Bluetooth^{®}, BLE, and so on. In some examples, the reader device 1022 can be a software solution executing on the POS terminal, e.g., a mobile phone. In some examples, the reader device 1022 can read information from alternative payment instruments including, but not limited to, wristbands and the like.

In some examples, the reader device 1022 may physically interact with payment instruments such as magnetic stripe payment cards, EMV payment cards, and/or short-range communication (e.g., near field communication (NFC), radio frequency identification (RFID), Bluetooth^{®}, Bluetooth^{®} low energy (BLE), etc.) payment instruments (e.g., cards, hardware wallets, fobs, or devices configured for tapping). The POS terminal may provide a rich user interface, communicate with the reader device 1022, and communicate with the merchant platform 1010, which can provide, among other services, a payment processing service. The server(s) 1002 associated with the merchant platform 1010 can communicate with server(s) 1008, as described below. In this manner, the POS terminal and reader device 1022 may collectively process transaction(s) between the merchants and customers. In some examples, multiple POS terminal(s) may be connected to a number of other devices, such as "secondary" terminals, e.g., back-of-the-house systems, printers, line-buster devices, reader devices, speakers, and the like, to allow for information from the secondary terminal to be shared between the primary POS terminal(s) and secondary terminal(s), for example via short-range communication technology. This kind of arrangement may continue operation in an offline-online scenario to allow one device (e.g., secondary terminal) to continue taking user input, and synchronize data with another device (e.g., primary terminal) when the primary or secondary terminal switches to online mode. In other examples, such data synchronization may happen periodically or at randomly selected time intervals.

While the POS terminal and the reader device 1022 of the POS system 1024 are shown as separate devices, in additional or alternative examples, the POS terminal and the reader device 1022 can be part of a single device. In some examples, the reader device 1022 can have a display integrated therein for presenting information to customers of a merchant. In additional or alternative examples, the POS terminal can have a display integrated therein for presenting information to the customers of the merchant. POS systems, such as the POS system 1024, may be mobile, such that POS terminals and reader devices may process transactions in disparate locations across the world. POS systems can be used for processing card-present transactions and card-not-present (CNP) transactions.

A card-present transaction is a transaction where both a customer and the customer's payment instrument are physically present at the time of the transaction. Card-present transactions may be contact or contactless transactions processed by swipes (e.g., by sliding a magnetic strip through a reader device), dips (e.g., by inserting an embedded microchip into a reader device), taps (e.g., by wirelessly, through Bluetooth, NFC or other short range technology hover or tap a payment instrument into a reader device), or any other interaction between a physical payment instrument (e.g., a card), or otherwise present payment instrument, and a reader device 1022, whereby the reader device 1022 is able to obtain payment data from the payment instrument.

A CNP transaction is a transaction where a card, or other payment instrument, is not physically present at the POS such that payment data is manually keyed in (e.g., by a merchant, customer, etc.), or payment data is required to be recalled from a card-on-file data store, to complete the transaction.

The POS system 1024, the server(s) 1002, and/or the server(s) 1008 may exchange payment information and transaction data to determine whether transactions are authorized. For example, the POS system 1024 may provide encrypted payment data, user authentication data, purchase amount information, point-of-purchase information, etc. (collectively, transaction data) to server(s) 1002 over the network(s) 1004. The server(s) 1002 may send the transaction data to the server(s) 1008.

For the purpose of this discussion, the "payment service providers" can be acquiring banks ("acquirer"), issuing banks ("issuer"), card payment networks, and the like. In an example, an acquirer is a bank or financial institution that processes payments (e.g., credit or debit card payments) and can assume risk on behalf of merchants(s). An acquirer can be a registered member of a card association (e.g., Visa^{®}, MasterCard^{®}), and can be part of a card payment network. In at least one example, the service provider can serve as an acquirer and connect directly with the card payment network.

The card payment network (e.g., the server(s) 1008 associated therewith) can forward the fund transfer request to an issuing bank (e.g., "issuer"). The issuer is a bank or financial institution that offers a financial account (e.g., credit or debit card account) to a user. The issuer (e.g., the server(s) 1008 associated therewith) can make a determination as to whether the customer has the capacity to absorb the relevant charge associated with the payment transaction. In at least one example, the merchant platform 1010 can serve as an issuer and/or can partner with an issuer. The transaction is either approved or rejected by the issuer and/or the card payment network (e.g., the server(s) 1008 associated therewith), and a payment authorization message is communicated from the issuer to the POS device via a path opposite of that described above, or via an alternate path.

The server(s) 1008 may send an authorization notification over the network(s) 1004 to the server(s) 1002, which may send the authorization notification to the POS system 1024 over the network(s) 1004 to indicate whether the transaction is authorized. The server(s) 1002 may also transmit additional information such as transaction identifiers to the POS system 1024. In one example, the server(s) 1002 may include a merchant application and/or other functional components for communicating with the POS system 1024 and/or the server(s) 1008 to authorize or decline transactions (e.g., the API 1018). In examples, the merchant platform 1010 can enable the merchants to receive cash payments, payment card payments, and/or electronic payments from customers for POS transactions and the service provider can process transactions on behalf of the merchants.

Based on the authentication notification that is received by the POS system 1024 from server(s) 1002, the merchant may indicate to the customer whether the transaction has been approved. In some examples, approval may be indicated at the POS system 1024, for example, at a display of the POS system 1024. In some cases, such as with a smart phone or watch operating as a short-range communication payment instrument, information about the approved transaction may be provided to the short-range communication payment instrument for presentation via a display of the smart phone or watch. In some examples, additional or alternative information can additionally be presented with the approved transaction notification including, but not limited to, receipts, special offers, coupons, or loyalty program information.

The merchant platform 1010 can provide, among other services, payment processing services, inventory management services, catalog management services, business banking services, financing services, lending services, reservation management services, web-development services, payroll services, employee management services, appointment services, loyalty tracking services, restaurant management services, order management services, fulfillment services, onboarding services, identity verification (IDV) services, media content (e.g., music, videos, etc.) management and/or subscription services, and so on. In some examples, the end user devices 1006 can access all of the services. In some cases, the end user devices 1006 can have gradated access to the services, which can be based on risk tolerance, IDV outputs, subscriptions, and so on. In at least one example, access to such services can be availed to the merchants via the POS application 1020. In additional or alternative examples, each service can be associated with its own access point (e.g., application, web browser, etc.).

As the merchant platform 1010 processes transactions on behalf of the merchants, the merchant platform 1010 can maintain accounts or balances for the merchants in one or more ledgers. For example, the merchant platform 1010 can analyze transaction data received for a transaction to determine an amount of funds owed to a merchant for the transaction and deposit funds into an account of the merchant. The account can have a stored balance, which can be managed by the merchant platform 1010. The account can be different from a conventional bank account at least because the stored balance is managed by a ledger of the merchant platform 1010 and the associated funds are accessible via various withdrawal channels including, but not limited to, scheduled deposit, same-day deposit, instant deposit, and a linked payment instrument.

A scheduled deposit can occur when the merchant platform 1010 transfers funds associated with a stored balance of the merchant to a bank account of the merchant that is held at a bank or other financial institution (e.g., associated with the server(s) 1008). Scheduled deposits can occur at a prearranged time after a POS transaction is funded, which can be a business day after the POS transaction occurred, or sooner or later. In some examples, the merchant can access funds prior to a scheduled deposit (e.g., same-day deposits and/or real-time deposits). Further, in at least one example, the merchant can have a payment instrument that is linked to the stored balance that enables the merchant to access the funds without first transferring the funds from the account managed by the merchant platform 1010 to the bank account of the merchant.

In at least one example, the merchant platform 1010 may provide inventory management services. That is, the merchant platform 1010 may provide inventory tracking and reporting. Inventory management services may enable the merchant to access and manage a database storing data associated with a quantity of each item that the merchant has available (i.e., an inventory). Furthermore, in at least one example, the merchant platform 1010 can provide catalog management services to enable the merchant to maintain a catalog, which can be a database storing data associated with items that the merchant has available for acquisition (i.e., catalog management services). The merchant platform 1010 can offer recommendations related to pricing of the items, placement of items on the catalog, and multi-party fulfillment of the inventory, to name a few examples.

In at least one example, the merchant platform 1010 can provide business banking services, which allow the merchant to track deposits (from payment processing and/or other sources of funds) into an account of the merchant, payroll payments from the account (e.g., payments to employees of the merchant), payments to other merchants (e.g., business-to-business) directly from the account or from a linked debit card, withdrawals made via scheduled deposit and/or real-time deposit, configure allocations among multiple balances or accounts (e.g., spending, saving, taxes, etc.), etc. Furthermore, the business banking services can enable the merchant to obtain a customized payment instrument (e.g., credit card), check how much money the merchant is earning (e.g., via presentation of available earned balance), understand where the money of the merchant is going (e.g., via deposit reports (which can include a breakdown of fees), spend reports, etc.), access/use earned money (e.g., via scheduled deposit, real-time deposit, linked payment instrument, etc.), have improved control of the money of the merchant (e.g., via management of deposit schedule, deposit speed, linked instruments, etc.), etc. Moreover, the business banking services can enable the merchants to visualize their cash flow to track their financial health, set aside money for upcoming obligations (e.g., savings), organize money around goals, etc.

In at least one example, the merchant platform 1010 can provide financing services and products, such as via business loans, consumer loans, fixed term loans, flexible term loans, and the like. In at least one example, the service provider can utilize one or more risk signals to determine whether to extend financing offers and/or terms associated with such financing offers. Such risk signals can be particular to an individual platform or service, as described herein, or can be based on aggregated data associated with multiple of the platforms or services. In at least one example, the merchant platform 1010 can provide financing services for offering and/or lending a loan to a borrower that is to be used for, in some instances, financing the borrower's short-term operational needs (e.g., a capital loan). Additionally or alternatively, the merchant platform 1010 can provide financing services for offering and/or lending a loan to a borrower that is to be used for, in some instances, financing the borrower's consumer purchase (e.g., a consumer loan). In at least one example, a borrower can submit a request for a loan to enable the borrower to purchase an item from a merchant. The merchant platform 1010 can generate the loan based at least in part on determining that the borrower purchased or intends to purchase the item from the merchant. Advances, loans, or other funds provided to a merchant or other user can be repaid via a variety of mechanisms. In some examples, loans can be repaid in installments (e.g., multiple payments over time), at a particular date, from a portion of incoming funds (e.g., payments processed for the merchant, tax refunds, direct deposits, etc.), or the like.

The merchant platform 1010 can provide web-development services, which enable users 1016 who are unfamiliar with HTML, XML, Javascript, CSS, or other web design tools to create and maintain functional websites. Further, in addition to websites, the web-development services can create and maintain other online omni-channel presences, such as social media posts for example. In some examples, the resulting web page(s) and/or other content items can be used for offering item(s) for sale via an online/e-commerce platform. In at least one example, the merchant platform 1010 can recommend and/or generate content items to supplement omni-channel presences of the merchants.

Furthermore, the merchant platform 1010 can provide payroll services to enable employers to pay employees for work performed on behalf of employers. In at least one example, the merchant platform 1010 can receive data that includes time worked by an employee (e.g., through imported timecards and/or POS interactions), sales made by the employee, gratuities received by the employee, and so forth. Based on such data, the merchant platform 1010 can make payroll payments to employee(s) on behalf of an employer via the payroll service. For instance, the merchant platform 1010 can facilitate the transfer of a total amount to be paid out for the payroll of an employee from the bank of the employer to the bank of the merchant platform 1010 to be used to make payroll payments. In at least one example, when the funds have been received at the bank of the merchant platform 1010, the merchant platform 1010 can pay the employee, such as by check or direct deposit.

Moreover, in at least one example, the merchant platform 1010 can provide employee management services for managing schedules of employees. Further, the merchant platform 1010 can provide appointment services for enabling users 1016 to set schedules for scheduling appointments and/or users 1016 to schedule appointments.

In some examples, the merchant platform 1010 can provide restaurant management services to enable users 1016 to make and/or manage reservations, to monitor front-of-house and/or back-of-house operations, and so on. In such examples, the seller device(s) 1006(A) and/or server(s) 1002 can be configured to communicate with one or more other computing devices, which can be located in the front-of-house (e.g., POS device(s)) and/or back-of-house (e.g., kitchen display system(s) (KDS)). In at least one example, the merchant platform 1010 can provide order management services and/or fulfillment services to enable restaurants (or other merchant types) to manage open tickets, split tickets, and so on and/or manage fulfillment services.

In some examples, the merchant platform 1010 can provide omni-channel fulfillment services. A fulfillment service includes item ordering and delivery services, such as via a courier. In some examples, the courier can be an unmanned aerial vehicle (e.g., a drone), an autonomous vehicle, or any other type of vehicle capable of receiving instructions for traveling between locations. For instance, if a customer places an order with a merchant and the merchant cannot fulfill the order because one or more items are out of stock or otherwise unavailable, the merchant platform 1010 can leverage other merchants and/or sales channels that are part of the merchant platform 1010 to fulfill the customer's order. That is, another merchant can provide the one or more items to fulfill the order of the customer. Furthermore, in some examples, another sales channel (e.g., online, brick-and-mortar, etc.) can be used to fulfill the order of the customer.

In some examples, the merchant platform 1010 can enable conversational commerce via conversational commerce services, which can use one or more machine learning mechanisms to analyze messages exchanged between two or more users 1016, voice inputs into a virtual assistant or the like, to determine intents of user(s) 1016. In some examples, the merchant platform 1010 can utilize determined intents to automate customer service, offer promotions, provide recommendations, or otherwise interact with customers in real-time. In at least one example, the merchant platform 1010 can integrate products and services, and payment mechanisms into a communication platform (e.g., messaging, etc.) to enable customers to make purchases, or otherwise transact, without having to call, email, or visit a web page or other channel of a merchant. That is, conversational commerce alleviates the need for customers to toggle back and forth between conversations and web pages to gather information and make purchases.

In at least one example, a user 1016 may be new to the merchant platform 1010 such that the user 1016 that has not registered (e.g., subscribed to receive access to one or more services offered by the merchant platform 1010) with the merchant platform 1010. The merchant platform 1010 can offer onboarding services for registering a potential user 1016 with the merchant platform 1010. In some examples, onboarding can involve presenting various questions, prompts, and the like to a potential user 1016 to obtain information that can be used to generate a profile for the potential user 1016. In at least one example, the merchant platform 1010 can provide limited or short-term access to its services prior to, or during, onboarding (e.g., a user of a peer-to-peer payment service can transfer and/or receive funds prior to being fully onboarded, a merchant can process payments prior to being fully onboarded, a user of a music streaming service can listen to music having advertisement breaks prior to being fully onboarded, etc.). In response to full or partial completion of onboarding, any limited or short-term access to services of the merchant platform 1010 can be transitioned to more permissive (e.g., less limited) or longer-term access to such services.

The merchant platform 1010 can be associated with IDV services, which can be used by the merchant platform 1010 for compliance purposes and/or can be offered as a service, for instance to third-party service providers (e.g., associated with the server(s) 1008). That is, the merchant platform 1010 can offer IDV services to verify the identity of users 1016 seeking to use or using their services. Identity verification may involve requesting a customer (or potential customer) to provide information that is used by compliance departments to prove that the information is associated with an identity of a real person or entity (e.g., an artist). In at least one example, the merchant platform 1010 can perform services for determining whether identifying information provided by a user 1016 accurately identifies the customer (or potential customer).

Techniques described herein can be configured to operate in both real-time/online and offline modes. "Online" modes refer to modes when devices are capable of communicating with the merchant platform 1010 while offline mode refers to modes when devices are unable to communicate with the server(s) 1008 due to network connectivity issue, for example. In such examples, devices may operate in "offline" mode where at least some payment data is stored (e.g., on the seller device(s) 1006(A)) and/or the server(s) 1002 until connectivity is restored and the payment data can be transmitted to the server(s) 1002 and/or the server(s) 1008 for processing.

In at least one example, the merchant platform 1010 can be associated with a hub, such as an order hub, an inventory hub, a fulfillment hub and so on, which can enable integration with one or more additional service providers (e.g., associated with the additional server(s) 1008). In some examples, such additional service providers can offer additional or alternative services and the service provider can provide an interface or other computer-readable instructions to integrate functionality of the service provider into the one or more additional service providers.

Turning now to the P2P functionality provided by the environment 1000, the P2P platform 1012 can provide a peer-to-peer payment service that enables peer-to-peer payments between two or more of the users 1016. Two or more of the users 1016 may be considered "peers" in a peer-to-peer interaction, such as a payment. In at least one example, the P2P platform 1012 can communicate with instances of a payment application 1026 (or other access point) installed on end user devices 1006 configured for operation by the users 1016. In an example, an instance of the payment application 1026 executing on a first user device 1006(B) operated by a payor (e.g., one of the users 1016) can send a request to the P2P platform 1012 to transfer an asset (e.g., fiat currency, non-fiat currency, digital assets such as non-fungible tokens (NFTs), cryptocurrency, securities, gift cards, and/or related assets) from the payor to a payee (e.g., a different one of the users 1016) via a peer-to-peer payment. In some examples, assets associated with an account of the payor are transferred to an account of the payee. In some examples, assets can be held at least temporarily in an account of the P2P platform 1012 prior to transferring the assets to the account of the payee.

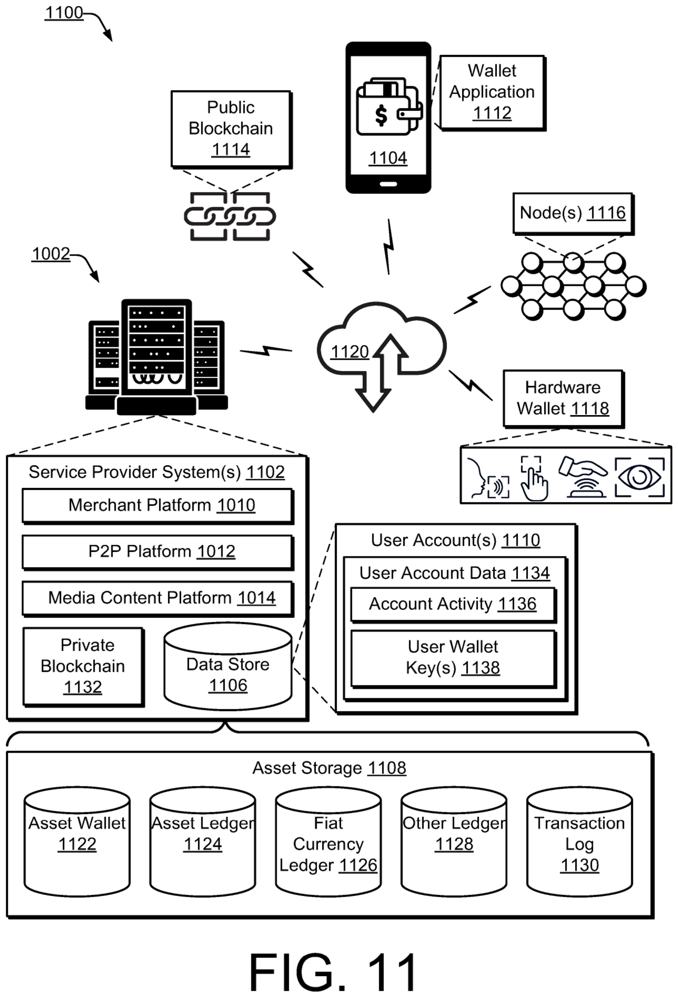

In some examples, the P2P platform 1012 can utilize a ledger system to track transfers of assets between users 1016. FIG. 11, below, provides additional details associated with such a ledger system. The ledger system can enable users 1016 to own fractional shares of assets that are not conventionally available. For instance, a user can own a fraction of a Bitcoin, an NFT, or a stock. Additional details are described herein.

In at least one example, the P2P platform 1012 can facilitate transfers and can send notifications related thereto to instances of the payment application 1026 executing on user device(s) of payee(s). As an example, the P2P platform 1012 can transfer assets from an account of a first user to an account of a second user and can send a notification to the user device 1006(B) of the second user for presentation via a user interface. The notification can indicate that a transfer is in process, a transfer is complete, or the like. In some examples, the P2P platform 1012 can send additional or alternative information to the instances of the payment application 1026 (e.g., low balance to the payor, current balance to the payor or the payee, etc.). In some examples, the payor and/or payee can be identified automatically, e.g., based on context, proximity, prior transaction history, and so on. In other examples, the payee can send a request for funds to the payor prior to the payor initiating the transfer of funds. In some embodiments, the P2P platform 1012 funds the request to payee on behalf of the payor, to speed up the transfer process and compensate for lags that may be attributed to the payor's financial network.

In some examples, the P2P platform 1012 can trigger the peer-to-peer payment process through identification of a "payment proxy" having a particular syntax. The payment proxy is useable in lieu of payment data. That is, payment data and a payment proxy can be linked to, or otherwise associated with, a user account of a user and either can be used for making payments. In an example, the syntax can include a monetary currency indicator prefixing one or more alphanumeric characters (e.g., $Cash). The currency indicator operates as the tagging mechanism that indicates to the server(s) 1002 to treat the inputs as a request from the payor to transfer assets, where detection of the syntax triggers a transfer of assets. The currency indicator can correspond to various currencies including but not limited to, dollar ($), euro (€), pound (£), rupee ( 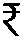 ), yuan (¥), etc. Although use of the dollar currency indicator ($) is used herein, it is to be understood that any currency symbol or other symbol could equally be used. In some examples, additional or alternative identifiers can be used to trigger the peer-to-peer payment process. For instance, email, telephone number, social media handles, artist or band names, and/or the like can be used to trigger and/or identify users of a peer-to-peer payment process.

In some examples, the peer-to-peer payment process can be initiated through instances of the payment application 1026 executing on the end user devices 1006. In at least some embodiments, the peer-to-peer process can be implemented within a landing page associated with a user and/or an identifier of a user. The term "landing page," as used here, refers to a virtual location identified by a personalized location address that is dedicated to collect payments on behalf of a recipient associated with the personalized location address. The personalized location address that identifies the landing page can be a uniform resource locator (URL), which can include a payment proxy discussed above. The P2P platform 1012 can generate the landing page to enable the recipient to conveniently receive one or more payments from one or more senders.

In some examples, the peer-to-peer payment process can be implemented within a forum. The term "forum," as used here, refers to a content provider's media channel (e.g., a social networking platform, a microblog, a blog, video sharing platform, a music sharing platform, etc.) that enables user interaction and engagement through streaming of content, comments, posts, messages on electronic bulletin boards, messages on a social networking platform, and/or any other types of messages. In some examples, the content provider can be the service provider as described with reference to FIG. 10 or a third-party service provider associated with the server(s) 1008. In examples where the content provider is a third-party service provider, the server(s) 1008 can be accessible via one or more APIs 1018 or other integrations. In some examples, "forum" may also refer to an application or webpage of an e-commerce or retail organization that offers products and/or services. Such websites can provide an online "form" to complete before or after the products or services are added to a virtual cart. Some of these fields may be configured to receive payment information, such as a payment proxy, in lieu of other kinds of payment mechanisms, such as credit cards, debit cards, prepaid cards, gift cards, virtual wallets, etc.

In some embodiments, the peer-to-peer process can be implemented within a communication application, such as a messaging application. The term "messaging application," as used here, refers to any messaging application that enables communication between users (e.g., sender and recipient of a message) over a wired or wireless communications network, through use of a communication message. The messaging application can be internal to the P2P platform 1012 (e.g., the P2P platform 1012 offers a chat or messaging service that is within the payment application or accessible via the payment application). In some examples, the messaging application can be external to the P2P platform 1012. (e.g., the messaging application is hosted by a third-party service provider associated with the server(s) 1008, which can be accessible via one or more of the APIs 1018 or other integrations). The messaging application can include, for example, a text messaging application for communication between phones (e.g., conventional mobile telephones or smartphones), or a cross-platform instant messaging application for smartphones and phones that use the Internet for communication.

Funds received from payments can be stored in stored balances that are linked to, or otherwise associated with, user accounts. In some examples, the P2P platform 1012 can enable users 1016 to perform banking transactions via instances of the payment application 1026. For example, users can configure direct deposits, recurring deposits, or other deposits (e.g., tax refunds, loans, etc.) for adding assets to their various ledgers/balances. In some examples, users can deposit physical cash via ATMs or other deposit sources, which can include merchants, such as those merchants that utilize the payment processing system described above. In some examples, the P2P platform 1012 can enable users to allocate funds between different accounts, sub-accounts, or balances (e.g., spending, saving, different assets, different currencies), etc. Further, users 1016 can configure bill pay, recurring payments, and/or the like using assets associated with their accounts. In some examples, the P2P platform 1012, with consent of the user, can track individual transactions made using the payment application and can utilize such transaction data to make personalized or customized recommendations, determine creditworthiness, generate tax documentation, and/or the like.

In addition to sending and/or receiving assets via peer-to-peer transactions, the P2P platform 1012 enables users to buy and/or sell assets via asset networks such as cryptocurrency networks, securities networks, and/or the like. In some examples, acquisition of such assets can be in whole or fractional shares. The ledger system described below with reference to FIG. 11 can enable such assets to be acquired in fractional shares and/or in real-time or near real-time (by delaying or omitting the need to buy/sell assets via asset networks or exchanges). In some examples, users can "gift" assets to other users, for example, by transferring cryptocurrency, stocks, or the like to one another.

In some examples, the P2P platform 1012 can enable users to link payment instruments to their user accounts. As a result, users can use their linked payment instruments to access funds in their accounts or balances. In some examples, the payment instrument can be a credit card, debit card, card linked to multiple accounts or balances via software or hardware, a fob or other object having payment data stored thereon, or the like. In some examples, the payment instrument can be a virtual payment instrument or a physical payment instrument. In some examples, the virtual payment instrument can be issued in real-time or for temporary usage. In some examples, the virtual payment instrument can have the same or different payment data as a corresponding physical payment instrument. Payment instruments can be customizable using a design user interface of the payment application. Such customization can enable users to select colors, stamps, images, text, or the like for surface(s) of their payment instruments. In some examples, users can draw or otherwise interact with the design user interface to personalize surface(s) of their payment instruments.

In some examples, users can associate incentives with their payment instruments. Incentives can be recommended to users based on user preferences (inferred or explicitly identified), geolocation, propensity to redeem, value, and/or the like. In some examples, incentives can be particular to individual merchants, types of merchants, types of transactions, and/or the like. In at least one example, when a user uses their payment instrument at a merchant or type of merchant associated with an incentive, or for a transaction type associated with an incentive, the P2P platform 1012 can automatically apply the incentive to the transaction. In some examples, users can gift other users "gift cards" that can be associated with payment instruments. That is, a user can transfer an amount of funds to another user and such funds can be associated with a condition (e.g., merchant, merchant type, transaction type, location, etc.) that, upon satisfaction, enables the amount of funds, or a portion thereof, to be applied to a transaction. In at least one example, when a user uses their payment instrument for a transaction that satisfies the condition, the P2P platform 1012 can automatically apply the amount of funds associated with the gift card to the transaction.

In some examples, users can configure their account such that when they use their payment instruments, the P2P platform 1012 can deposit an amount of funds into a savings account, investing account, bitcoin account, or the like.

In some examples, users can search for or browse other users, merchants, items, or the like via the payment application. In some examples, search results can be personalized and/or customized for the user (e.g., based on user data collected with consent of the user). In some examples, users can shop or otherwise purchase items from other users, merchants, or the like from within the payment application or via a deep link to a merchant application or website.

The P2P platform 1012 can offer primary and secondary accounts, wherein a primary account is a sponsor or other delegate of one or more secondary accounts. Such accounts can be useful for families, wherein a parent or other guardian is a sponsor or delegate to one or more child accounts, or where a child is a sponsor or delegate of an elderly parent's account. In some examples, primary accounts can establish limits on secondary accounts, such as spending limits, or the like. In some examples, the primary account owner is the user legally responsible for the account and their identity may be verifiable for secondary user accounts to perform certain transactions, such as buying/selling cryptocurrency or stocks. In some examples, one or more primary accounts and one or more secondary accounts can form a "group" with shared goals, such as saving, investing, or the like.

The P2P platform 1012 can present activity data via an activity user interface of the payment application. In some examples, activity can be presented by merchant, date, time, amount, or the like. In some examples, interactions between entities can be represented in conversational communications such that each interaction or transaction is represented as a message. In some examples, users can interact with individual messages and/or send/request funds from within such a conversational communication. In some examples, such conversational communications can represent conversations of a group of two or more users. Groups can be used to pool funds, obtain group discounts or incentives, or enable multiple users to participate in financial transactions together (e.g., group investing, group savings, etc.).

The P2P platform 1012 can offer a variety of financial training or learning opportunities. In some examples, such training or learning can be personalized for individual users, for example, based on user data and/or transaction data of the user that is obtained with consent of the user. In some examples, such user data and/or transaction data can be analyzed to make actionable recommendations with respect to optimizing financial health of users of the P2P platform 1012.

In some examples, components of the environment 1000 may be integrated to enable payments at the point-of-sale using assets associated with user accounts of the P2P platform 1012. As illustrated in the environment 1000, the components can communicate with one another via the network 1004, where one or more APIs 1018 or other functional components can be used to facilitate such communication.

In at least one example, an integration can enable a customer to participate in a transaction via their own computing device (e.g., user device 1006(B)) instead of interacting with a merchant device of a merchant, such as the seller device 1006(A). In such an example, the POS application 1020, associated with a payment processing platform and executable by the seller device 1006(A) of the merchant, can present a Quick Response (QR) code, or other code that can be used to identify a transaction (e.g., a transaction code), in association with a transaction between the customer and the merchant. The QR code, or other transaction code, can be provided to the POS application 1020 via an API 1018 associated with the peer-to-peer payment platform. In an example, the customer can utilize their own computing device, such as the user device 1006(B), to capture the QR code, or the other transaction code, and to provide an indication of the captured QR code, or other transaction code, to server(s) 1002.

Based at least in part on the integration of the peer-to-peer payment platform and the payment processing platform (e.g., via the API 1018), the server(s) 1002 of the merchant platform 1010 can exchange communications with a payment application 1026 associated with the P2P platform 1012 and/or the POS application 1020 to process payment for the transaction using a peer-to-peer payment where the customer is a first "peer" and the merchant is a second "peer."

Based at least in part on receiving an indication of which payment method a user (e.g., customer or merchant) intends to use for a transaction, techniques described herein utilize an integration between the P2P platform 1012 and merchant platform 1010 (which can be a first- or third-party integration) such that a QR code, or other transaction code, specific to the transaction can be used for providing transaction details, location details, customer details, or the like to a computing device of the customer, such as the user device 1006(B), to enable a contactless (peer-to-peer) payment for the transaction, and transferring funds from an account of the customer to an account of the merchant.

In at least one example, techniques described herein can offer improvements to conventional payment technologies at both brick-and-mortar points of sale and online points of sale. For example, at brick-and-mortar points of sale, techniques described herein can enable customers to "scan to pay," by using their computing devices to scan QR codes, or other transaction codes, encoded with data as described herein, to remit payments for transactions. In such a "scan to pay" example, a customer computing device, such as the user device 1006(B), can be specially configured as a buyer-facing device that can enable the customer to view cart building in near real-time, interact with a transaction during cart building using the customer computing device, authorize payment via the customer computing device, apply coupons or other incentives via the customer computing device, add gratuity, loyalty information, feedback, or the like via the customer computing device, etc. In another example, merchants can "scan for payment" such that a customer can present a QR code, or other transaction code, that can be linked to a payment instrument or stored balance. Funds associated with the payment instrument or stored balance can be used for payment of a transaction.

As described above, techniques described herein can offer improvements to conventional payment technologies at online points of sale, as well as brick-and-mortar points of sale. For example, multiple applications can be used in combination during checkout. That is, the POS application 1020 and the payment application 1026, as described herein, can process a payment transaction by routing information input via the merchant application to the payment application for completing a "frictionless" payment.

Returning to the "scan to pay" examples described herein, QR codes, or other transaction codes, can be presented in association with a merchant web page or ecommerce web page. In at least one example, techniques described herein can enable customers to "scan to pay," by using their computing devices to scan or otherwise capture QR codes, or other transaction codes, encoded with data, as described herein, to remit payments for online/ecommerce transactions. A customer computing device, such as the user device 1006(B), can be specially configured as a buyer-facing device having functionality similar to the functionality described above in the brick-and-mortar example.

In some examples, based at least in part on capturing the QR code, or other transaction code, the merchant platform 1010 can provide transaction data to the P2P platform 1012 for presentation via the payment application 1026 on the computing device of the customer, such as the user device 1006(B), to enable the customer to complete the transaction via their own computing device. In some examples, in response to receiving an indication that the QR code, or other transaction code, has been captured or otherwise interacted with via the customer computing device, the P2P platform 1012 can determine that the customer authorizes payment of the transaction using funds associated with a stored balance of the customer that is managed and/or maintained by the P2P platform 1012. Such authorization can be implicit such that the interaction with the transaction code can imply authorization of the customer. Alternatively or additionally, the P2P platform 1012 can request express authorization to process payment for the transaction using the funds associated with the stored balance and the customer can interact with the payment application to expressly authorize the settlement of the transaction. In some examples, such an authorization (implicit or express) can be provided prior to a transaction being complete and/or initialization of a conventional payment flow. That is, in some examples, such an authorization can be provided during cart building (e.g., adding item(s) to a virtual cart) and/or prior to payment selection. In some examples, such an authorization can be provided after payment is complete (e.g., via another payment instrument). Based at least in part on receiving an authorization to use funds associated with the stored balance (e.g., implicitly or explicitly) of the customer, the P2P platform 1012 can transfer funds from the stored balance of the customer to the merchant platform 1010. In at least one example, the merchant platform 1010 can deposit the funds, or a portion thereof, into a stored balance of the merchant that is managed and/or maintained by the merchant platform 1010. In such an example, the merchant platform 1010 can be a "peer" to the customer in a peer-to-peer transaction.

In some examples, techniques described herein can enable the customer to interact with the transaction after payment for the transaction has been settled. For example, in at least one example, the merchant platform 1010 can cause a total amount of a transaction to be presented via a user interface associated with the payment application 1026 such that the customer can provide gratuity, feedback, loyalty information, or the like, via an interaction with the user interface. In another example, the merchant platform 1010 can adjust a total amount of a transaction based on events during a shopping experience, such as adding or removing a charge to the total amount based on whether a media content item requested by the customer to be played during a shopping experience was in fact played. In some examples, because the customer has already authorized payment via the P2P platform 1012, if the customer inputs a tip and/or an event affecting the total amount of the transaction is triggered, the P2P platform 1012 can transfer additional funds, associated with the tip or event, to the merchant platform 1010. This pre-authorization (or maintained authorization) of sorts can enable faster, more efficient payment processing when the tip is received and/or the event initiates the trigger. Further, the customer can provide feedback and/or loyalty information via the user interface presented by the payment application, which can be associated with the transaction. Using the pre-authorization techniques described herein results in fewer data transmissions and thus, techniques described herein can conserve bandwidth and reduce network congestion. Moreover, as described above, funds associated with tips can be received faster and more efficiently than with conventional payment technologies.

In addition to the improvements described above, techniques described herein can provide enhanced security in payment processing. In some examples, if a camera, or other sensor, used to capture a QR code, or other transaction code, is integrated into a payment application 1026 (e.g., instead of a native camera, or other sensor), techniques described herein can utilize an indication of the QR code, or other transaction code, received from the payment application for two-factor authentication to enable more secure payments.

It should be noted that, while techniques described herein are directed to contactless payments using QR codes or other transaction codes, in additional or alternative examples, techniques described herein can be applicable for contact payments. That is, in some examples, a customer can swipe a payment instrument (e.g., a credit card, a debit card, or the like) via a reader device associated with a merchant device, dip a payment instrument into a reader device associated with a merchant computing device, tap a payment instrument with a reader device associated with a merchant computing device, or the like, to initiate the provisioning of transaction data to the customer computing device. In some examples, the payment instrument can be associated with the P2P platform 1012 as described herein (e.g., a debit card linked to a stored balance of a customer) such that when the payment instrument is caused to interact with a payment reader, the merchant platform 1010 can exchange communications with the P2P platform 1012 to authorize payment for a transaction and/or provision associated transaction data to a computing device of the customer associated with the transaction.

Turning now to media content functionality provided by the environment 1000, the media content platform 1014 can provide digital media to a content consumption device 1006(D) where playback may occur using "streaming." In examples, "streaming" media content involves encoding the media content and transmitting the encoded media content over the network 1004 to a media player or a media application executing on a device (e.g., via a speaker). The device then decodes and plays the media content while data is being received. In some cases, a buffer queues some of the data of the media content (e.g., audio data, video data, etc.) ahead of the media being played. During moments of network congestion, which leads to lower available bandwidth, less media content data is added to the buffer, which drains down as media content is being dequeued during streaming playback. However, during moments of high network bandwidth, the buffer is replenished, adding media content data to the buffer.

In at least one example, the media content platform 1014 can provide a digital media streaming service (e.g., subscription-based, non-subscription-based) that enables a content consumption device 1006(D) to stream and/or download digital media content via a listener application 1028 installed on the content consumption device 1006(D). For instance, the media content platform 1014 may comprise a digital audio streaming service (e.g., for music, podcasts, audiobooks, etc.), a digital video streaming service, and/or a streaming service that provides streaming of various different types of digital media content or multimedia. In such cases where digital media content items are downloaded and stored locally on the content consumption devices 1006(D), the listener application 1028 may verify access rights to the digital media content items at time intervals, for instance intermittently (e.g., when the content consumption device 1006(D) has a network connection with the media content platform 1014 via the network(s) 1004), and/or at regular intervals (e.g., daily, weekly, monthly, etc.). In examples, access rights to the digital media content items may be provided when a subscription to the media content platform 1014 is active, while access rights to the digital media content items may be withheld when the subscription to the media content platform 1014 is terminated. Enabling storage on the end user devices 1006 and subsequent access to digital media content items via the listener application 1028 provides the users 1016 with the ability to access the digital media content items "offline" such as when a connection to the media content platform 1014 via the network(s) 1004 is unavailable or unreliable.

In some examples, the media content platform 1014 may additionally or alternatively provide an artist management service that enables the users 1016 to manage aspects of artist business via an artist application 1030 installed on the artist device 1006(E), such as data analytics and management (e.g., listener data, consumer data, etc.), marketing, regulatory obligations, cash flow management, publishing, customer relationship management (CRM), social media, event coordination, industry communications, digital media content ingestion and storage, and so forth. In some cases, the users 1016 can have graduated access to the services, which can be based on a user type (e.g., artist, group member, personal manager, business manager, attorney, agent, etc.), risk tolerance, artist verification status, listener and/or viewer analytics (e.g., number of streams in a month), and so on. In some cases, multiple users 1016 may have access to a single user account via respective end user devices 1006, with the various users having different access privileges to services provided by the artist management service. In various scenarios, an artist can designate functions provided by the artist management service to different members of the team associated with the artist, thus granting the respective team members access to services suited to the skills of the individual team members.

In some cases, the artist application 1030 and the listener application 1028 may be distinct applications having differing user experiences and verification processes for access, such as illustrated in the environment 1000. For instance, the media content platform 1014 may request additional verification, such as a link to an artist website, a sample of an artist's work, a verified credential supplied by a third party, etc. to grant access to the artist application 1030 in addition to information requested to access the listener application 1028. Further, the artist application 1030 may provide the artist management services described herein, without the subscription-based digital media streaming services described herein, and vice versa. However, examples are also considered in which functionality provided by the artist application 1030 and the listener application 1028 partially or fully overlap, and/or where verification processes for access are substantially similar.

In at least some examples, the media content platform 1014 enables interaction between the users 1016 utilizing the listener application 1028 installed on the content consumption devices 1006(D), and the users 1016 utilizing the artist application 1030 installed on the artist end user devices 1006(E). For example, the media content platform 1014 may provide interconnectivity between the subscription-based digital media streaming service and the artist management service. Functionality provided by the media content platform 1014 in such instances may include a communication channel between one or more of the users 1016 (e.g., a listener, fan, music supervisor, publisher, etc.) utilizing the listener application 1028 and another user (e.g., an artist) of the users 1016 utilizing the artist application 1030. The communication channel may include, for instance, a messaging platform (also referred to as a "messaging application" herein), a live streaming platform, a videoconferencing or teleconferencing platform, and/or a combination of these.

Additionally, in some cases, the media content platform 1014 may facilitate a resource transfer between the listener application 1028 and the artist application 1030. In an example, the media content platform 1014 may direct a resource, such as a portion of a subscription fee paid by one of the users 1016 designated as a listener, to one or more of the users 1016 designated as artists based on a number of instances that the listening user consumed (e.g., streamed, downloaded, etc.) content created by respective ones of the artist users. Alternatively or additionally, the media content platform 1014 may direct a resource, such as funds, from an account associated with a listening user to an account associated with an artist user (or vice versa), in accordance with transfers between accounts as described herein. The media content platform 1014 may facilitate resource transfers in examples such as merchandise purchases, event ticket purchases, "tipping" an artist, payments for royalties or other fees, and so forth.

In some examples, the media content platform 1014 enables interaction between individual ones of the users 1016 with one another via the listener application 1028 installed on the content consumption device 1006(D) and other of the content consumption devices 1006(D) via a communication channel as described above. In an example, the listener application 1028 may provide functionality via a communication channel for a user to stream an individual digital media item, a playlist, or the like to an audience comprising other ones of the content consumption devices 1006(D). Alternatively or additionally, the communication channel may facilitate sharing of individual digital media items, playlists, user and/or artist profiles, and the like between the users 1016 via messages, uniform resource locators (URLs), quick response (QR) codes, and so forth.

In some cases, the media content platform 1014 enables interaction between individual ones of the users 1016 with one another via the artist application 1030 installed on the artist device 1006(E) and other of the artist end user devices 1006 via a communication channel as described above. In some instances, the media content platform 1014 may provide recommendations for a particular user indicating which of the other users 1016 to communicate with. Such a recommendation may be based on a similarity (or dissimilarity) of content created by two or more of the users 1016, an overlap (or lack thereof) of audience members of the users 1016, a geographic location of the users 1016, a coinciding event location of the users 1016, and so forth. In some examples, a user may input parameters for a desired connection via the artist application 1030, and the media content platform 1014 may filter which of the users 1016 to surface for recommendations to the user based on the input parameters. Alternatively or additionally, the media content platform 1014 may implement one or more machine learning models to filter which of the users 1016 to surface for recommendations to the user. The recommendations provided by the media content platform 1014 may be data driven and thus increase relevance of communications presented to the users 1016 and reduce unsolicited communications that may be received by the users 1016.

The media content platform 1014 may interact with the server(s) 1008 associated with the third-party service providers to, for instance, ingest digital media items, report digital media consumption data, pay royalties, and the like. In some examples, the server(s) 1008 may be accessible by the media content platform 1014 via one or more APIs 1018 or other integrations. In some cases, the third-party service provider may be a digital media content provider (e.g., a record label, a performance rights organization (PRO), an independent artist, etc.). In such cases, the media content platform 1014 may receive digital media content items from the server(s) 1008, along with metadata associated with the digital media content items. The metadata, in some instances, may indicate individual contributors to a digital media content item such as an artist or artists, a songwriter (e.g., a composer, lyricist, author, etc.), a producer (which may further include a co-producer, a mastering engineer, a mixing engineer, a recording engineer, an arranger, a programmer, etc.), a musician (e.g., instrumentalist, vocalist, etc.), a visual artist, and so forth, with an indication of the role of the individual contributor. Alternatively or additionally, the metadata may indicate information such as release date, track title, track duration, clean or explicit version, jurisdiction information, and the like. The media content platform 1014 may use the metadata to associate the digital media content item as being created by a particular user, to provide search results to the users 1016, to generate playlists, and so forth. Further, the media content platform 1014 may provide payments (e.g., royalties) to the third-party service provider based on a number of streams and/or downloads of individual digital media content items by the users 1016 via the listener application 1028.

Techniques described herein are directed to services provided via a distributed system of end user devices 1006 that are in communication with server(s) 1002 of the service provider. That is, techniques described herein are directed to a specific implementation-or, a practical application-of utilizing a distributed system of end user devices 1006 that are in communication with server(s) 1002 of the merchant platform 1010, the P2P platform 1012, and/or the media content platform 1014 to perform a variety of services, as described above. The unconventional configuration of the distributed system described herein enables the server(s) 1002 that are remotely-located from end-users (e.g., users 1016) to intelligently offer services based on aggregated data associated with the end-users, such as the users 1016 (e.g., data associated with multiple, different merchants and/or multiple, different buyers; data associated with multiple different listeners and/or multiple different artists, etc.), in some examples, in near-real time. Accordingly, techniques described herein are directed to a particular arrangement of elements that offer technical improvements over conventional techniques for performing payment processing services, P2P payment services, media content services, and the like. For small business owners and artists in particular, the business environment is typically fragmented and relies on unrelated tools and programs, making it difficult for an owner or an artist to manually consolidate and view such data. The techniques described herein constantly or periodically monitor disparate and distinct user accounts, e.g., accounts within the control of the merchant platform 1010, the P2P platform 1012, and/or the media content platform 1014, and those outside of the control of these service providers, to track the standing (payables, receivables, payroll, invoices, appointments, capital, balances, collaborations, etc.) of the users 1016. The techniques herein provide a consolidated view of a user's cash flow, predict needs, preemptively offer recommendations or services, such as capital, coupons, etc., and/or enable money movement between disparate accounts (merchant's, another merchant's, or even payment service's) in a frictionless and transparent manner.

As described herein, artificial intelligence, machine learning, and the like can be used to dynamically make determinations, recommendations, and the like, thereby adding intelligence and context-awareness to an otherwise one-size-fits-all scheme for providing payment processing services, P2P payment services, media content services, and/or additional or alternative services described herein. In some implementations, the distributed system is capable of applying the intelligence derived from an existing user base to a new user, thereby making the onboarding experience for the new user personalized and frictionless when compared to traditional onboarding methods. Further, models or algorithms that are used to implement techniques described herein may be retrained over time to improve outcomes for subsequent scenarios based on outcomes of previous scenarios. Thus, techniques described herein improve existing technological processes.

As described above, various graphical user interfaces (GUIs) can be presented to facilitate techniques described herein. Some of the techniques described herein are directed to user interface features presented via GUIs to improve interaction between users 1016 and end user devices 1006. Furthermore, such features are changed dynamically based on the profiles of the users involved interacting with the GUIs. As such, techniques described herein are directed to improvements to computing systems.

The merchant platform 1010, the P2P platform 1012, and/or the media content platform 1014 are capable of providing additional or alternative services, and the services described above are offered as a sampling of services. In at least one example, the merchant platform 1010, the P2P platform 1012, and/or the media content platform 1014 can exchange data with the server(s) 1008 associated with third-party service providers. Such third-party service providers can provide information that enables the merchant platform 1010, the P2P platform 1012, and/or the media content platform 1014 to provide services, such as those described above. In additional or alternative examples, such third-party service providers can access services of the merchant platform 1010, the P2P platform 1012, and/or the media content platform 1014. That is, in some examples, the third-party service providers can be subscribers, or otherwise access, services of the merchant platform 1010, the P2P platform 1012, and/or the media content platform 1014.

FIG. 11 illustrates an example environment 1100 including a service provider system 1102 which may be associated with the server(s) 1002 of FIG. 10. The environment 1100 may also include a user device 1104, which may correspond to any of the end user devices 1006 described in relation to FIG. 10. In examples, the service provider system 1102 may include one or a combination of the merchant platform 1010, the P2P platform 1012, or the media content platform 1014, as well as one or more data store(s) 1106 that can store assets in an asset storage 1108, as well as data in user account(s) 1110. In some examples, the environment 1100 may also include a public blockchain 1114, one or more nodes 1116, and/or a hardware wallet 1118. The service provider system 1102, the user device 1104, public blockchain 1114, the node(s) 1116, and the hardware wallet 1118 may be connected and able to communicate via one or more networks 1120, which may have the same or similar functionality described in relation to the network 1004 of FIG. 10.

In some examples, user account(s) 1110 can include merchant account(s), customer account(s), media content subscriber account(s), artist account(s), and so forth. In at least one example, the asset storage 1108 can be used to record whether individual assets are registered to a user account 1110. For example, the asset storage 1108 can include asset wallet(s) 1122 for storing records of assets owned by the service provider system 1102, such as cryptocurrency, securities, NFTs, or the like, and communicating with one or more asset networks, such as cryptocurrency networks, NFT networks, securities networks, or the like. In some examples, the asset network can be a first-party network or a third-party network, such as a cryptocurrency exchange or the stock market. In examples where the asset network is a third-party network, the server(s) 1008 of FIG. 10 can be associated therewith.

The asset wallet 1122 can be associated with one or more addresses and can vary addresses used to acquire assets (e.g., from the asset network(s)) so that its holdings are represented under a variety of addresses on the asset network. In examples where the service provider system 1102 has holdings of cryptocurrency (e.g., in the asset wallet 1122), a user can acquire cryptocurrency directly from the service provider system 1102. In some examples, the service provider system 1102 can include logic for buying and selling cryptocurrency to maintain a desired level of cryptocurrency. In some examples, the desired level can be based on a volume of transactions over a period of time, balances of collective cryptocurrency ledgers, exchange rates, or trends in changing of exchange rates such that the cryptocurrency is trending towards gaining or losing value with respect to the fiat currency. In some scenarios, the buying and selling of cryptocurrency, and therefore the associated updating of the public ledger of an asset network can be separate from a customer-merchant transaction or a peer-to-peer transaction, and therefore not necessarily time-sensitive. This can enable batching transactions to reduce computational resources and/or costs. The service provider system 1102 can provide the same or similar functionality for securities or other assets.

The asset storage 1108 may contain ledgers that store records of assignments of assets to users 1016. Specifically, the asset storage 1108 may include asset ledger 1124, fiat currency ledger 1126, and/or other ledger(s) 1128, which can be used to record transfers of assets between users 1016 and/or one or more third-parties (e.g., merchant network(s), payment card network(s), ACH network(s), equities network(s), the asset network, securities networks, etc.). In doing so, the asset storage 1108 can maintain a running balance of assets managed by the service provider system 1102. The ledger(s) of the asset storage 1108 can further indicate some of the running balance for individual ledger(s) stored in the asset storage 1108 are assigned or registered to one or more user account(s) 1110.

In at least one example, the asset storage 1108 can include transaction logs 1130, which can include, as transaction data, records of past transactions involving the service provider system 1102 and/or the user account 1110. In some examples, the data store(s) 1106 can store a private blockchain 1132. A private blockchain 1132 can function to record sender addresses, recipient addresses, public keys, values of cryptocurrency transferred, and/or can be used to verify ownership of cryptocurrency tokens to be transferred. In some examples, the service provider system 1102 can record transactions involving cryptocurrency until the number of transactions has exceeded a determined limit (e.g., number of transactions, storage space allocation, etc.). Based at least in part on determining that the limit has been reached, the service provider system 1102 can publish the transactions in the private blockchain 1132 to the public blockchain 1114 (e.g., associated with the asset network), where miners can verify the transactions and record the transactions to blocks on the public blockchain 1114. In at least one example, the service provider system 1102 can participate as miner(s) at least for transactions to which the respective platform is a party to, to be posted to the public blockchain 1114.

In some cases, the data store(s) 1106 can store and/or manage multiple user accounts, an example of which is described in relation to the user account 1110. In at least one example, the user account 1110 can include user account data 1134, which can include, but is not limited to, data associated with user identifying information (e.g., name, phone number, address, artist or band name, verified credentials, etc.), user identifier(s) (e.g., alphanumeric identifiers, etc.), user preferences (e.g., learned or user-specified), purchase history data (e.g., identifying one or more items purchased (and respective item information), subscription tier information, etc.), linked payment sources (e.g., bank account(s), stored balance(s), etc.), payment instruments used to purchase one or more items, returns associated with one or more orders, statuses of one or more orders (e.g., preparing, packaging, in transit, delivered, etc.), etc.), appointments data (e.g., previous appointments, upcoming (scheduled) appointments, timing of appointments, lengths of appointments, etc.), payroll data (e.g., employers, payroll frequency, payroll amounts, etc.), reservations data (e.g., previous reservations, upcoming (scheduled) reservations, reservation duration, interactions associated with such reservations, etc.), inventory data, user service data, loyalty data (e.g., loyalty account numbers, rewards redeemed, rewards available, etc.), risk indicator(s) (e.g., level(s) of risk), etc.

In at least one example, the user account data 1134 can include account activity 1136 and user wallet key(s) 1138. In some examples, the user wallet key(s) 1138 can include a public-private key-pair and a respective address associated with the asset network or other asset networks. In some examples, the user wallet key(s) 1138 may include one or more key pairs, which can be unique to the asset network or other asset networks.

In addition to the user account data 1134, the user account 1110 can include ledger(s) for account(s) managed by the service provider system 1102, for the user. For example, the user account 1110 may include an asset ledger 1124, a fiat currency ledger 1126, and/or one or more other ledgers 1128. The ledger(s) can indicate that a corresponding user utilizes the service provider system 1102 to manage corresponding accounts (e.g., a cryptocurrency account, a securities account, a fiat currency account, an artist account, etc.). It should be noted that in some examples, the ledger(s) can be logical ledger(s) and the data can be represented in a single database. In some examples, individual ones of the ledger(s), or portions thereof, can be maintained by the service provider system 1102.

In some examples, the asset ledger 1124 can store a balance for each of one or more cryptocurrencies (e.g., Bitcoin, Ethereum, Litecoin, etc.) registered to the user account 1110. In at least one example, the asset ledger 1124 can further record transactions of cryptocurrency assets associated with the user account 1110. For example, the user account 1110 can receive cryptocurrency from the asset network using the user wallet key(s) 1138. In some examples, the user wallet key(s) 1138 may be generated for the user upon request. User wallet key(s) 1138 can be requested by the user in order to send, exchange, or otherwise control the balance of cryptocurrency held by the service provider system 1102 (e.g., in the asset wallet 1122) and registered to the user. In some examples, the user wallet key(s) 1138 may not be generated until a user account requires such. This on-the-fly wallet key generation provides enhanced security features for users, reducing the number of access points to a user account's balance and, therefore, limiting exposure to external threats.

Each account ledger can reflect a positive balance when funds are added to the corresponding account. An account can be funded by transferring currency in the form associated with the account from an external account (e.g., transferring a value of cryptocurrency to the service provider system 1102 and the value is credited as a balance in asset ledger 1124), by purchasing currency in the form associated with the account using currency in a different form (e.g., buying a value of cryptocurrency from the service provider system 1102 using a value of fiat currency reflected in fiat currency ledger 12391226, and crediting the value of cryptocurrency in asset ledger 1124), or by conducting a transaction with another user (customer or merchant) of the service provider system 1102 wherein the account receives incoming currency (which can be in the form associated with the account or a different form, in which the incoming currency may be converted to the form associated with the account).

With specific reference to funding a cryptocurrency account, a user may have a balance of cryptocurrency stored in another cryptocurrency wallet. In some examples, the other cryptocurrency wallet can be associated with a third-party unrelated to the service provider system 1102 (i.e., an external account). Such a transaction can request that the user to transfer an amount of the cryptocurrency in a message signed by user's private key to an address provided by the service provider system 1102. In at least one example, the transaction can be sent to miners to bundle the transaction into a block of transactions and to verify the authenticity of the transactions in the block. Once a miner has verified the block, the block is written to the public blockchain 1114 where the service provider system 1102 can then verify that the transaction has been confirmed and can credit the user's asset ledger 1124 with the transferred amount. When an account is funded by transferring cryptocurrency from a third-party cryptocurrency wallet, an update can be made to the public blockchain 1114. In some cases, this update of the public blockchain 1114 need not take place at a time-critical moment, such as when a transaction is being processed by a merchant in store or online.

In some examples, a user can purchase cryptocurrency to fund their cryptocurrency account. In some examples, the user can purchase cryptocurrency through services offered by the service provider system 1102. As described above, in some examples, the service provider system 1102 can acquire cryptocurrency from a third-party source. In examples where the service provider system 1102 has its own cryptocurrency assets, cryptocurrency transferred in a transaction (e.g., data with address provided for receipt of transaction and a balance of cryptocurrency transferred in the transaction) can be stored in an asset wallet 1122 associated with the service provider system 1102. In at least one example, the service provider system 1102 can credit the asset ledger 1124 of the user. Additionally, while the service provider system 1102 recognizes that the user retains the value of the transferred cryptocurrency through crediting the asset ledger 1124, an inspection of the blockchain will show the cryptocurrency as having been transferred to the service provider system 1102. In some examples, the asset wallet 1122 can be associated with many different addresses. In such examples, an inspection of the blockchain may not necessarily associate all cryptocurrency stored in asset wallet 1122 as belonging to the same entity. The presence of a private ledger used for real-time transactions and maintained by the service provider system 1102, combined with updates to the public ledger at other times, allows for extremely fast transactions using cryptocurrency to be achieved. In some examples, the "private ledger" can refer to the asset ledger 1124, which in some examples, can utilize the private blockchain 1132, as described herein. The "public ledger" can correspond to the public blockchain 1114 associated with the asset network.

In at least one example, an asset ledger 1124, fiat currency ledger 1126, or the like associated with the user account 1110 can be credited when conducting a transaction with another user (customer or merchant) wherein the user receives incoming currency. In some examples, a user can receive cryptocurrency in the form of payment for a transaction with another user. In at least one example, such cryptocurrency can be used to fund the asset ledger 1124. In some examples, a user can receive fiat currency or another currency in the form of payment for a transaction with another user. In at least one example, at least a portion of such funds can be converted into cryptocurrency by the service provider system 1102 and used to fund the asset ledger 1124 of the user.

In examples, a user can also have an account in U.S. dollars, which can be tracked, for example, via the fiat currency ledger 1126. Such an account can be funded by transferring money from a bank account at a third-party bank to an account maintained by the service provider system 1102 as is conventionally known. In some examples, a user can receive fiat currency in the form of payment for a transaction with another user. In such examples, at least a portion of such funds can be used to fund the fiat currency ledger 1126.

In some examples, a user can have one or more internal payment cards registered with the service provider system 1102. Internal payment cards can be linked to one or more of the accounts associated with the user account 1110. In some embodiments, options with respect to internal payment cards can be adjusted and managed using an application (e.g., the payment application 1026, a wallet application 1112, etc.).

In at least one example, the user account 1110 can be associated with the asset wallet accessible via a wallet application 1112 of the user device 1104, or a stored balance for use in payment transactions, peer-to-peer transactions, payroll payments, etc. In at least one example, the asset wallet 1122 can store data indicating an address provided for receipt of a cryptocurrency transaction. In at least one example, the balance of the asset wallet 1122 can be based at least in part on a balance of the asset ledger 1124. In at least one example, funds availed via the asset wallet 1122 can be stored in the asset wallet 1122. Funds availed via the asset wallet 1122 can be tracked via the asset ledger 1124. The asset wallet 1122, however, can be associated with additional cryptocurrency funds.

In at least one example, when the service provider system 1102 includes a private blockchain 1132 for recording and validating cryptocurrency transactions, the asset wallet 1122 can be used instead of, or in addition to, the asset ledger 1124. For example, a merchant can provide the address of the asset wallet 1122 for receiving payments. In an example where a customer is paying in cryptocurrency and the customer has their own cryptocurrency wallet account associated with the service provider system 1102, the customer can send a message signed by its private key including its wallet address (i.e., of the customer) and identifying the cryptocurrency and value to be transferred to the merchant's asset wallet 1122. The service provider system 1102 can complete the transaction by reducing the cryptocurrency balance in the customer's cryptocurrency wallet and increasing the cryptocurrency balance in the merchant's asset wallet 1122. In addition to recording the transaction in the respective cryptocurrency wallets, the transaction can be recorded in the private blockchain 1132 and the transaction can be confirmed. A user can perform a similar transaction with cryptocurrency in a peer-to-peer transaction as described above.

While the asset ledger 1124 and/or asset wallet 1122 are each described above with reference to cryptocurrency, the asset ledger 1124 and/or asset wallet 1122 can alternatively be used in association with securities. In some examples, different ledgers and/or wallets can be used for different types of assets. That is, in some examples, a user can have multiple asset ledgers and/or asset wallets for tracking cryptocurrency, securities, or the like.

It should be noted that user(s) having accounts managed by the service provider system 1102 is an aspect of the technology disclosed that enables technical advantages of increased processing speed and improved security.

The description of the environment 1100 above generally relates to a centralized service provider system 1102 that at least partially facilitates storing and managing assets in the data store 1106. However, the environment 1100 may also facilitate decentralized storage and management of assets alternatively or in addition to centralized storage and management as described above. For instance, the environment 1100 may include a decentralized platform implemented using a plurality of nodes (e.g., web nodes), an example of which is illustrated as node 1116. The node 1116 is representative of a computer or other device tasked with validating transactions and/or maintaining a copy of a blockchain ledger, such as a ledger associated with the public blockchain 1114. The decentralized platform may be implemented via the environment 1100 through use of decentralized identifiers and verifiable credentials that are stored and managed by user devices 1104. A decentralized identifier is configured as a self-owned identifier that supports decentralized authentication and routing. A self-owned identifier in a blockchain network is a unique identifier that is owned and controlled by an individual entity on the blockchain, as contrasted with an entity controlled by a centralized authority (e.g., the service provider system 1102). The decentralized identity referenced by a decentralized identifier gives an entity control over what data can be accessed, stored, modified, and so forth by other entities, such as the service provider system 1102.

The node 1116, as representative of one of a plurality of decentralized nodes (e.g., decentralized web nodes), supports data storage and relays that allows entities, service provider systems, individuals, organizations and so forth to send, store, and receive encrypted or public messages and data. The node 1116 is universally addressable and is "crawlable" using data addressing in relation to the decentralized identifiers. The node 1116 is also configured to support decentralized replication of data across the nodes that is consistent across multiple nodes over time through continued data communication between the nodes in the decentralized platform. The node 1116 is configurable to support secure encryption through use of a cryptographic key associated with an individual's decentralized identifier and support semantic discovery to discover different forms of published data.

Verifiable credentials are an open standard for digital credentials, and employ a data format for cryptographic presentation and verification of claims. A verifiable credential represents an indication of trust of a piece of information related to an entity. For example, a verifiable credential indicates that the issuer of the verifiable credential trusts the holder of the verifiable credential; the holder trusts a verifier of the verifiable credential; and that the verifier trusts the issuer. Verifiable credentials may be issued by anyone, about anything, and can be presented to and verified by everyone granted access to the verifiable credential. Accordingly, a user of the user device 1104 may be an issuer, a holder, and/or a verifier, as can the service provider system 1102.

In some examples, the user device 1104 may implement a wallet application 1112 configured to manage decentralized identifiers and/or verifiable credentials. For instance, the wallet application 1112 may provide a user interface for implementation of access controls to various data associated with the decentralized identifier by the service provider system 1102, to other user devices, and so forth. Additionally, the wallet application 1112 may be configured to provide functionality for resource transfers (e.g., cryptocurrency, fiat currency, etc.) with the service provider system 1102, other user devices, and the like, based on techniques described herein.

In some examples, the hardware wallet 1118 may store cryptocurrency assets in combination with the wallet application 1112 and the service provider system 1102. For instance, the hardware wallet 1118, the wallet application 1112, and the service provider system 1102 may each store a respective, different private key, where a transaction with the cryptocurrency assets is signed by at least two of the three private keys. The user interface provided by the wallet application 1112 may allow a user to request a transaction. The wallet application 1112 may then sign the transaction with the private key of the wallet application 1112, have either the hardware wallet 1118 or the service provider system 1102 use a second of the three private keys to sign the transaction, and then provide the transaction with two signatures to the public blockchain 1114 for processing.

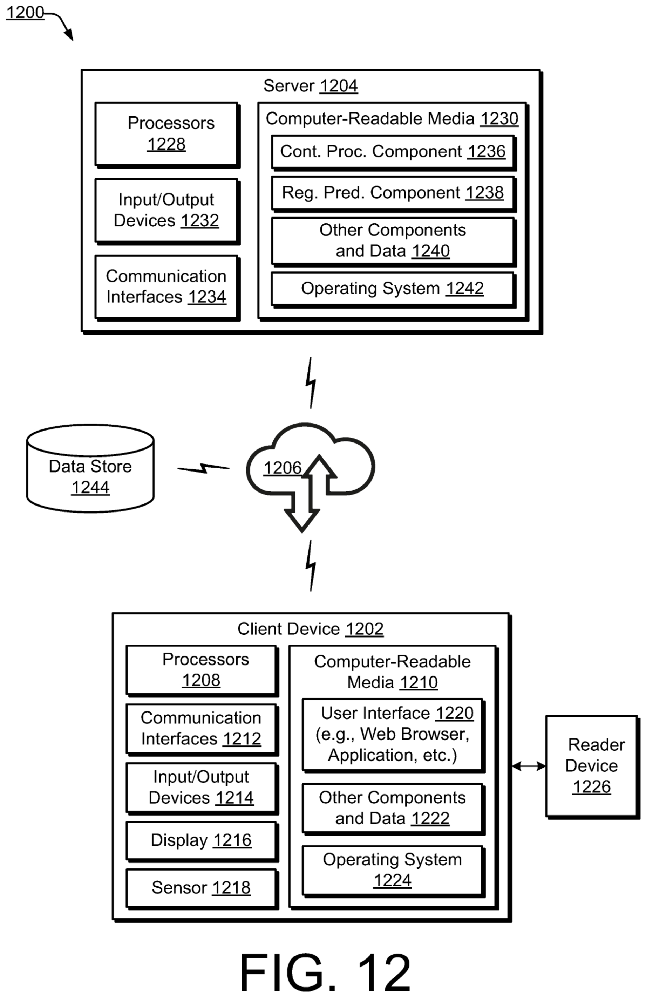

FIG. 12 depicts an illustrative block diagram illustrating a system 1200 for performing techniques described herein. The system 1200 includes a user device 1202, that communicates with server computing device(s) (e.g., server(s) 1204) via network(s) 1206 (e.g., the Internet, cable network(s), cellular network(s), cloud network(s), wireless network(s) (e.g., Wi-Fi) and wired network(s), as well as close-range communications such as Bluetooth^{®}, Bluetooth^{®} low energy (BLE), and the like). While a single user device 1202 is illustrated, in additional or alternate examples, the system 1200 can have multiple user devices, as described above with reference to FIG. 10.

In some examples, the client device 1202 and/or the server 1204 can include the content processing system that performs the process 100, the user device(s) 105, the platform server(s) 120, the analysis engine(s) 125, the AI model(s) 130, the analysis engine that performs the process 200, the obfuscation engine 210, the AI model(s) 230, the analysis engine that performs the process 600, the ML system 700, the ML engine 720, the ML model(s) 725, the feedback engine(s) 745, the content processing system that performs the process 800, the content processing system that performs the process 900, or a combination thereof.. The user interface 1220 can be associated with the receipt of the user data 140, the output of the region prediction 150 and/or the warning 170, the receiving of the image 205, the receiving of the prompt(s) 240, the output of the region prediction 235, the output of the region prediction 305, the output of the region prediction 405, the form 645, the functionality 655, the decision 660, the decision 665, the alert 742, the indicator of operation 825, any of the features of operation 935, any of the features of operation 940, any other user interface or user interface functionality discussed herein, or a combination thereof.

In at least one example, the user device 1202 can be any suitable type of computing device, e.g., portable, semi-portable, semi-stationary, or stationary. Some examples of the user device 1202 can include, but are not limited to, a tablet computing device, a smart phone or mobile communication device, a laptop, a netbook or other portable computer or semi-portable computer, a desktop computing device, a terminal computing device or other semi-stationary or stationary computing device, a dedicated device, a wearable computing device or other body-mounted computing device, an augmented reality device, a virtual reality device, a speaker device, an automobile or other vehicle type, an Internet of Things (IoT) device, etc. That is, the user device 1202 can be any computing device capable of sending communications and performing the functions according to the techniques described herein. The user device 1202 can include devices, e.g., payment card readers, or components capable of accepting payments, as described below. The user device 1202 may be representative of, and provide functionality for, the user devices 1006 described in relation to FIG. 10.

In the illustrated example, the user device 1202 includes one or more processors 1208, one or more computer-readable media 1210, one or more communication interface(s) 1212, one or more input/output (I/O) devices 1214, a display 1216, sensor(s) 1218, one or more encoders 1246, and one or more decoders 1248.

In at least one example, each processor 1208 can itself comprise one or more processors or processing cores. For example, the processor(s) 1208 can be implemented as one or more microprocessors, microcomputers, microcontrollers, digital signal processors, central processing units, state machines, logic circuitries, and/or any devices that manipulate signals based on operational instructions. In some examples, the processor(s) 1208 can be one or more hardware processors and/or logic circuits of any suitable type specifically programmed or configured to execute the algorithms and processes described herein. The processor(s) 1208 can be configured to fetch and execute computer-readable processor-executable instructions stored in the computer-readable media 1210.

Depending on the configuration of the user device 1202, the computer-readable media 1210 can be an example of tangible (optionally non-transitory) computer storage media and can include volatile and nonvolatile memory and/or removable and non-removable media implemented in any type of technology for storage of information such as computer-readable processor-executable instructions, data structures, program components or other data. The computer-readable media 1210 can include, but is not limited to, RAM, ROM, EEPROM, flash memory, solid-state storage, magnetic disk storage, optical storage, and/or other computer-readable media technology. Further, in some examples, the user device 1202 can access external storage, such as RAID storage systems, storage arrays, network attached storage, storage area networks, cloud storage, or any other medium that can be used to store information and that can be accessed by the processor(s) 1208 directly or through another computing device or network. Accordingly, the computer-readable media 1210 can be computer storage media able to store instructions, components or components that can be executed by the processor(s) 1208. Further, when mentioned, non-transitory computer-readable media exclude media such as energy, carrier signals, electromagnetic waves, and signals per se.

The computer-readable media 1210 can be used to store and maintain any number of functional components that are executable by the processor(s) 1208. In some implementations, these functional components comprise instructions or programs that are executable by the processor(s) 1208 and that, when executed, implement operational logic for performing the actions and services attributed above to the user device 1202. Functional components stored in the computer-readable media 1210 can include a user interface 1220 to enable users to interact with the user device 1202, and thus the server(s) 1204 and/or other networked devices. In some examples, the user interface 1220 can include a UI associated with a mining application used to perform, control, and/or monitor the mining operations discussed herein, as performed using the mining ASIC(s) of the hashboard(s) discussed herein. In at least one example, a user can interact with the user interface via touch input, spoken input, gesture, or any other type of input. The word "input" is also used to describe "contextual" input that may not be directly provided by the user via the user interface 1220. For example, user's interactions with the user interface 1220 are analyzed using, e.g., natural language processing techniques, user movement tracking techniques, eye tracking techniques, etc. to determine context or intent of the user, which may be treated in a manner similar to "direct" user input.

Depending on the type of the user device 1202, the computer-readable media 1210 can also optionally include other functional components and data, such as other components and data 1222, which can include programs, drivers, etc., and the data used or generated by the functional components. In addition, the computer-readable media 1210 can also store data, data structures and the like, that are used by the functional components. Further, the user device 1202 can include many other logical, programmatic and physical components, of which those described are merely examples that are related to the discussion herein.

In at least one example, the computer-readable media 1210 can include additional functional components, such as an operating system 1224 for controlling and managing various functions of the user device 1202 and for enabling user interactions.

The communication interface(s) 1212 can include one or more interfaces and hardware components for enabling communication with various other devices, such as over the network(s) 1206 or directly. For example, communication interface(s) 1212 can enable communication through one or more network(s) 1206, which can include, but are not limited any type of network known in the art, such as a local area network or a wide area network, such as the Internet, and can include a wireless network, such as a cellular network, a cloud network, a local wireless network, such as Wi-Fi and/or close-range wireless communications, such as Bluetooth^{®}, BLE, NFC, RFID, a wired network, or any other such network, or any combination thereof. Accordingly, network(s) 1206 can include both wired and/or wireless communication technologies, including Bluetooth^{®}, BLE, Wi-Fi and cellular communication technologies, as well as wired or fiber optic technologies. Components used for such communications can depend at least in part upon the type of network, the environment selected, or both. Protocols for communicating over such networks are well known and will not be discussed herein in detail.

Embodiments of the disclosure may be provided to users through a cloud computing infrastructure. Cloud computing refers to the provision of scalable computing resources as a service over a network, to enable convenient, on-demand network access to a shared pool of configurable computing resources that can be rapidly provisioned and released with minimal management effort or service provider interaction. Thus, cloud computing allows a user to access virtual computing resources (e.g., storage, data, applications, and even complete virtualized computing systems) in "the cloud," without regard for the underlying physical systems (or locations of those systems) used to provide the computing resources.

The user device 1202 can further include one or more input/output (I/O) devices 1214. The I/O devices 1214 can include speakers, a microphone, a camera, and various user controls (e.g., buttons, a joystick, a keyboard, a keypad, etc.), a haptic output device, and so forth. The I/O devices 1214 can also include attachments that leverage the accessories (audio-jack, USB-C, Bluetooth, etc.) to connect with the user device 1202.

In at least one example, user device 1202 can include a display 1216. Depending on the type of computing device(s) used as the user device 1202, the display 1216 can employ any suitable display technology. For example, the display 1216 can be a liquid crystal display, a plasma display, a light emitting diode display, an OLED (organic light-emitting diode) display, an electronic paper display, or any other suitable type of display able to present digital content thereon. In at least one example, the display 1216 can be an augmented reality display, a virtual reality display, or any other display able to present and/or project digital content. In some examples, the display 1216 can have a touch sensor associated with the display 1216 to provide a touchscreen display configured to receive touch inputs for enabling interaction with a graphic interface presented on the display 1216. Accordingly, implementations herein are not limited to any particular display technology. In some examples, the user device 1202 may not include the display 1216, and information can be presented by other means, such as aurally, haptically, etc.

In addition, the user device 1202 can include sensor(s) 1218. The sensor(s) 1218 can include a global positioning system ("GPS") device able to indicate location information. Further, the sensor(s) 1218 can include, but are not limited to, an accelerometer, gyroscope, compass, proximity sensor, camera, microphone, and/or a switch.

In some examples, the GPS device can be used to identify a location of a user. In at least one example, the location of the user can be used by the merchant platform 1010, the P2P platform 1012, and/or the media content platform 1014, described above, to provide one or more services. That is, in some examples, the service provider can implement geofencing to provide particular services to users by the merchant platform 1010, the P2P platform 1012, and/or the media content platform 1014.

In examples, the user device 1202 includes a codec system, which may comprise an encoder 1246 and/or a decoder 1248. The encoder 1246 is configured to encode a data stream or signal from an analog signal (e.g., an analog audio signal, an analog video signal, etc.) to a digital signal for transmission or storage. The decoder 1248 is configured to convert the digital signal back to an analog signal, such as for playback or editing. In some cases, the encoder 1246 may be configured to encode the data stream or analog signal in an encrypted format, and the decoder 1248 may accordingly be configured to decrypt the digital signal as part of the decoding process (e.g., using a cryptographic key). Additionally, in some examples, the encoder 1246 may compress data to reduce transmission bandwidth and/or storage space for the digital signal. One example of a compression codec system is a lossless codec, in which the digital data stream is a compressed format of the original data stream, but retains the information present in the original data stream. Another example of a compression codec system is a lossy codec which reduces the quality of the digital data stream but can increase the compression of the data stream relative to lossless codec systems. The codec system comprising the encoder 1246 and/or the decoder 1248 may be specialized to accomplish various different objectives, such as to preserve motion, preserve color, minimize latency, maintain fidelity, minimize bit-rate, optimize for different output device types, maintain synchronization of audio and video (e.g., using a metadata synchronization data stream), and so on. Although not explicitly illustrated in the example system 1200, the server 1204 may include an encoder 1246 and/or a decoder 1248 as well.

Additionally, the user device 1202 can include various other components that are not shown, examples of which include removable storage, a power source, such as a battery and power control unit, a barcode scanner, a printer, a cash drawer, and so forth.

In addition, as described in relation to FIG. 10, the user device 1202 can include, be connectable to, or otherwise be coupled to a reader device 1226, for reading payment instruments and/or identifiers associated with payment objects. The reader device 1226 can include a read head for reading a magnetic strip of a payment card, and further can include encryption technology for encrypting the information read from the magnetic strip. Additionally or alternatively, the reader device 1226 can be an EMV payment reader, which in some examples, can be embedded in the user device 1202. Moreover, numerous other types of readers can be employed with the user device 1202 herein, depending on the type and configuration of the user device 1202.

The reader device 1226 may be a portable magnetic stripe card reader, optical scanner, smartcard (card with an embedded IC chip) reader (e.g., an EMV-compliant card reader or short-range communication-enabled reader), RFID reader, or the like, configured to detect and obtain data from various types of payment instruments. Accordingly, the reader device 1226 may include hardware implementation, such as slots, magnetic tracks, and rails with one or more sensors or electrical contacts to facilitate detection and acceptance of a payment instrument. That is, the reader device 1226 may include hardware implementations to enable the reader device 1226 to interact with a payment instrument via a swipe, a dip , or a tap to obtain payment data associated with a customer. Additionally or optionally, the reader device 1226 may also include a biometric sensor to receive and process biometric characteristics and process them as payment instruments, given that such biometric characteristics are registered with the payment service and connected to a financial account with a bank server. The reader device 1226 may include processing unit(s), computer-readable media, a reader chip, a transaction chip, a timer, a clock, a network interface, a power supply, and so on. That is, the reader device 1226 may include any of the computing components described herein with reference to the user device 1202 to implement the functionality provided by the reader device 1226.

In examples, the reader device 1226 includes a reader chip, which may perform functionality to control the power supply, among other functionality of the reader device 1226. The power supply may include one or more power supplies such as a physical connection to AC power or a battery. Power supply may include power conversion circuitry for converting AC power and generating a plurality of DC voltages for use by components of reader device 1226. When power supply includes a battery, the battery may be charged via a physical power connection, via inductive charging, or via any other suitable method.

The reader device 1226 may also include a transaction chip that may perform functionalities relating to processing of payment transactions, interfacing with payment instruments, cryptography, and other payment-specific functionality. That is, the transaction chip may access payment data associated with a payment instrument and may provide the payment data to a POS terminal, as described above. The payment data may include, but is not limited to, a name of the customer, an address of the customer, a type (e.g., credit, debit, etc.) of a payment instrument, a number associated with the payment instrument, a verification value (e.g., PIN Verification Key Indicator (PVKI), PIN Verification Value (PVV), Card Verification Value (CVV), Card Verification Code (CVC), etc.) associated with the payment instrument, an expiration data associated with the payment instrument, a primary account number (PAN) corresponding to the customer (which may or may not match the number associated with the payment instrument), restrictions on what types of charges/debts may be made, etc. The transaction chip may encrypt the payment data upon receiving the payment data.

It should be understood that in some examples, the reader chip may have its own processing unit(s) and computer-readable media and/or the transaction chip may have its own processing unit(s) and computer-readable media. In other examples, the functionalities of reader chip and transaction chip may be embodied in a single chip or a plurality of chips, each including any suitable combination of processing units and computer-readable media to collectively perform the functionalities of reader chip and transaction chip as described herein.

While the user device 1202, which can be a POS terminal, and the reader device 1226 are shown as separate devices, in additional or alternative examples, the user device 1202 and the reader device 1226 can be part of a single device, which may be a battery-operated device. In some examples, the reader device 1226 can have a display integrated therewith, which can be in addition to (or as an alternative of) the display 1216 associated with the user device 1202.

The server(s) 1204 can include one or more servers or other types of computing devices that can be embodied in any number of ways. For example, in the example of a server, the components, other functional components, and data can be implemented on a single server, a cluster of servers, a server farm or data center, a cloud-hosted computing service, a cloud-hosted storage service, and so forth, although other computer architectures can additionally or alternatively be used.

Further, while the figures illustrate the components and data of the server(s) 1204 as being present in a single location, these components and data can alternatively be distributed across different computing devices and different locations in any manner. Consequently, the functions can be implemented by one or more server computing devices, with the various functionality described above distributed in various ways across the different computing devices. Multiple server(s) 1204 can be located together or separately, and organized, for example, as virtual servers, server banks and/or server farms. The described functionality can be provided by the servers of a single merchant or enterprise, or can be provided by the servers and/or services of multiple different customers or enterprises.

In the illustrated example, the server(s) 1204 can include one or more processors 1228, one or more computer-readable media 1230, one or more I/O devices 1232, and one or more communication interfaces 1234. Each processor 1228 can be a single processing unit or a number of processing units, and can include single or multiple computing units or multiple processing cores. The processor(s) 1228 can be implemented as one or more microprocessors, microcomputers, microcontrollers, digital signal processors, central processing units, state machines, logic circuitries, and/or any devices that manipulate signals based on operational instructions. For example, the processor(s) 1228 can be one or more hardware processors and/or logic circuits of any suitable type specifically programmed or configured to execute the algorithms and processes described herein. The processor(s) 1228 can be configured to fetch and execute computer-readable instructions stored in the computer-readable media 1230, which can program the processor(s) 1228 to perform the functions described herein.

The computer-readable media 1230 can include volatile and nonvolatile memory and/or removable and non-removable media implemented in any type of technology for storage of information, such as computer-readable instructions, data structures, program components, or other data. Such computer-readable media 1230 can include, but is not limited to, RAM, ROM, EEPROM, flash memory or other memory technology, optical storage, solid state storage, magnetic tape, magnetic disk storage, RAID storage systems, storage arrays, network attached storage, storage area networks, cloud storage, or any other medium that can be used to store the desired information and that can be accessed by a computing device. Depending on the configuration of the server(s) 1204, the computer-readable media 1230 can be a type of computer-readable storage media and/or can be a tangible (optionally non-transitory) media to the extent that when mentioned, non-transitory computer-readable media exclude media such as energy, carrier signals, electromagnetic waves, and signals per se.

The computer-readable media 1230 can be used to store any number of functional components that are executable by the processor(s) 1228. In many implementations, these functional components comprise instructions or programs that are executable by the processors 1228 and that, when executed, specifically configure the one or more processors 1228 to perform the actions attributed above to the merchant platform 1010, the P2P platform 1012, and/or the media content platform 1014. Functional components stored in the computer-readable media 1230 can optionally include a content processing component 1236, a region prediction component 1238, and one or more other components and data 1240. The computer-readable media 1230 can additionally include an operating system 1242 for controlling and managing various functions of the server(s) 1204.

The content processing component 1236 can manage aspect(s) of content processing, for instance as discussed with respect to the analysis engine(s) 125, the AI model(s) 130, the obfuscation engine 210, the object detection 215, the segmentation 220, the obfuscation (e.g., masking), the object detection 732, the segmentation 734, the generation of the obfuscated media content 736, other content processing operations discussed herein, or a combination thereof.

The region prediction component 1238 can manage aspect(s) of analyzing content (e.g., obfuscated content) to perform region prediction, as in the analysis engine(s) 125, the AI model(s) 130, the region prediction 150, the AI model(s) 230, the region prediction 235, the region prediction 305, the region prediction 405, the region prediction 635, the auto-filling 640, the decision 650, the decision 660, the decision 665, the region prediction 738, the generation of the identity confidence score 740, the generation of the alert 742, any other operations related to region prediction discussed herein, or a combination thereof.

The payment component can be configured to receive transaction data from POS systems. The payment component can transmit requests (e.g., authorization, capture, settlement, etc.) to payment service server computing device(s) to facilitate POS transactions between merchants and customers. The payment component can communicate the successes or failures of the POS transactions to the POS systems.

The training component can be configured to train models using machine-learning mechanisms, as well as retrain the models to improve outputs provided by the models based on feedback received over time. For example, a machine-learning mechanism can analyze training data to train a data model that generates an output, which can be a recommendation, a score, and/or another indication. Machine-learning mechanisms can include, but are not limited to supervised learning algorithms (e.g., artificial neural networks, Bayesian statistics, support vector machines, decision trees, classifiers, k-nearest neighbor, etc.), unsupervised learning algorithms (e.g., artificial neural networks, association rule learning, hierarchical clustering, cluster analysis, etc.), semi-supervised learning algorithms, deep learning algorithms, etc.), statistical models, etc. In at least one example, machine-trained data models can be stored in a datastore associated with the user device(s) 1202 and/or the server(s) 1204 for use at a time after the data models have been trained (e.g., at runtime).

The one or more "components" referenced herein may be implemented as more components or as fewer components, and functions described for the components may be redistributed depending on the details of the implementation. The term "component," as used herein, refers broadly to software stored on (optionally non-transitory) storage medium (e.g., volatile or non-volatile memory for a computing device), hardware, or firmware (or any combination thereof) components. Modules are typically functional such that they may generate useful data or other output using specified input(s). A component may or may not be self-contained. An application program (also called an "application") may include one or more components, or a component may include one or more application programs that can be accessed over a network or downloaded as software onto a device (e.g., executable code causing the device to perform an action). An application program (also called an "application") may include one or more components, or a component may include one or more application programs. In additional and/or alternative examples, the component(s) may be implemented as computer-readable instructions, various data structures, and so forth via at least one processing unit to configure the computing device(s) described herein to execute instructions and to perform operations as described herein.

In some examples, a component may include one or more application programming interfaces (APIs) to perform some or all of its functionality (e.g., operations). In at least one example, a software developer kit (SDK) can be provided by the service provider to allow third-party developers to include service provider functionality and/or avail service provider services in association with their own third-party applications. Additionally or alternatively, in some examples, the service provider can utilize a SDK to integrate third-party service provider functionality into its applications. That is, API(s) and/or SDK(s) can enable third-party developers to customize how their respective third-party applications interact with the service provider or vice versa.

The communication interface(s) 1234 can include one or more interfaces and hardware components for enabling communication with various other devices, such as over the network(s) 1206 or directly. For example, communication interface(s) 1234 can enable communication through one or more network(s) 1206, which can include, but are not limited any type of network known in the art, as described herein.

The server(s) 1204 can further be equipped with various I/O devices 1232. Such I/O devices 1232 can include a display, various user interface controls (e.g., buttons, joystick, keyboard, mouse, touch screen, biometric or sensory input devices, etc.), audio speakers, connection ports and so forth.

In at least one example, the system 1200 can include a datastore 1244 that can be configured to store data that is accessible, manageable, and updatable. In some examples, the datastore 1244 can be integrated with the user device 1202 and/or the server(s) 1204. In other examples, as shown in FIG. 12, the datastore 1244 can be located remotely from the server(s) 1204 and can be accessible to the server(s) 1204. The datastore 1244 can comprise multiple databases and/or servers connected locally and/or remotely via the network(s) 1206. In at least one example, the datastore 1244 can store user profiles, which can include merchant profiles, customer profiles, artist profiles, and so on.

Merchant profiles can store, or otherwise be associated with, data associated with merchants. For instance, a merchant profile can store, or otherwise be associated with, information about a merchant (e.g., name of the merchant, geographic location of the merchant, operating hours of the merchant, employee information, etc.), a merchant category classification (MCC), item(s) offered for sale by the merchant, hardware (e.g., device type) used by the merchant, transaction data associated with the merchant (e.g., transactions conducted by the merchant, payment data associated with the transactions, items associated with the transactions, descriptions of items associated with the transactions, itemized and/or total spends of each of the transactions, parties to the transactions, dates, times, and/or locations associated with the transactions, etc.), loan information associated with the merchant (e.g., previous loans made to the merchant, previous defaults on said loans, etc.), risk information associated with the merchant (e.g., indications of risk, instances of fraud, chargebacks, etc.), appointments information (e.g., previous appointments, upcoming (scheduled) appointments, timing of appointments, lengths of appointments, etc.), payroll information (e.g., employees, payroll frequency, payroll amounts, etc.), employee information, reservations data (e.g., previous reservations, upcoming (scheduled) reservations, interactions associated with such reservations, etc.), inventory data, customer service data, etc. The merchant profile can securely store bank account information as provided by the merchant. Further, the merchant profile can store payment information associated with a payment instrument linked to a stored balance of the merchant, such as a stored balance maintained in a ledger by the service provider.

Customer profiles can store customer data including, but not limited to, customer information (e.g., name, phone number, address, banking information, etc.), customer preferences (e.g., learned or customer-specified), purchase history data (e.g., identifying one or more items purchased (and respective item information), payment instruments used to purchase one or more items, returns associated with one or more orders, statuses of one or more orders (e.g., preparing, packaging, in transit, delivered, etc.), etc.), appointments data (e.g., previous appointments, upcoming (scheduled) appointments, timing of appointments, lengths of appointments, etc.), payroll data (e.g., employers, payroll frequency, payroll amounts, etc.), reservations data (e.g., previous reservations, upcoming (scheduled) reservations, reservation duration, interactions associated with such reservations, etc.), inventory data, customer service data, media content consumption data (e.g., number of streams of media content and by which artists, direct artist payouts, playlists generated or "favorited," durations of listening and/or watching individual media content items, actions performed while consuming media content (e.g., skips, repeats, volume changes, etc.), locations at which media content is consumed, devices used to consume media content, activities during which media content is consumed, etc.), etc.

Artist profiles can store data including, but not limited to, artist information (e.g., artist's performance or stage name, band name, artist's legal name, record label, phone number, address, social media handles, website address, banking information, etc.), artist preferences (e.g., learned or artist-specified), media content (and/or associated data) at least partially attributed to the artist (e.g., songs, videos, artists in a same genre or having shared listeners, etc.), event data (e.g., tour dates, appearance dates, appointments, etc.), financial data (e.g., advance data, recoupment data, royalty data, payouts data, etc.), payroll data (e.g., employees, contractors, venues, payroll frequency, etc.), listening data (e.g., number of streams on media content platform(s), listening trends, etc.), fan data (number of followers on media content platform(s), number of followers on social media platform(s), etc.), reservations data (e.g., venue reservations, studio recording reservations, previous reservations, upcoming (scheduled) reservations, reservation duration, interactions associated with such reservations, etc.), inventory data (e.g., merchandise inventory), customer service data, and so forth.

Furthermore, in at least one example, the datastore 1244 can store inventory database(s) and/or catalog database(s). As described above, an inventory can store data associated with a quantity of each item that a merchant has available to the merchant. Furthermore, a catalog can store data associated with items that a merchant has available for acquisition. The datastore 1244 can store additional or alternative types of data as described herein.

The phrases "in some examples," "according to various examples," "in the examples shown," "in one example," "in other examples," "various examples," "some examples," and the like generally mean the particular feature, structure, or characteristic following the phrase is included in at least one example of the present invention, and may be included in more than one example of the present invention. In addition, such phrases do not necessarily refer to the same examples or to different examples.

If the specification states a component or feature "can," "may," "could," or "might" be included or have a characteristic, that particular component or feature is not required to be included or have the characteristic.

Further, the aforementioned description is directed to devices and applications that are related to payment technology. However, it will be understood, that the technology can be extended to any device and application. Moreover, techniques described herein can be configured to operate irrespective of the kind of payment object reader, POS terminal, web applications, mobile applications, POS topologies, payment cards, computer networks, and environments.

Various figures included herein are flowcharts showing example methods involving techniques as described herein. The methods illustrated are described with reference to components described in the figures for convenience and ease of understanding. However, the methods illustrated are not limited to being performed using components described in the figures and such components are not limited to performing the methods illustrated herein.

Furthermore, the methods described above are illustrated as collections of blocks in logical flow graphs, which represent sequences of operations that can be implemented in hardware, software, or a combination thereof. In the context of software, the blocks represent computer-executable instructions stored on one or more computer-readable storage media that, when executed by processor(s), perform the recited operations. Generally, computer-executable instructions include routines, programs, objects, components, data structures, and the like that perform particular functions or implement particular abstract data types. The order in which the operations are described is not intended to be construed as a limitation, and any number of the described blocks can be combined in any order and/or in parallel to implement the processes. In some embodiments, one or more blocks of the process can be omitted entirely. Moreover, the methods can be combined in whole or in part with each other or with other methods.

Illustrative aspects of the disclosure include:
Aspect 1. A computer-implemented method for image processing, the computer-implemented method comprising: receiving an image of an object in a scene, wherein the image includes a plurality of pixels; analyzing the image to detect pixels representing the object within the plurality of pixels of the image, wherein the pixels depicting the object are a first subset of the plurality of pixels of the image, wherein a second subset of the plurality of pixels of the image represent the scene; masking the pixels representing the object to generate a masked image, wherein the masked image retains the second subset of the plurality of pixels that represent the scene; analyzing the masked image using at least one trained machine learning model to generate a prediction of a geographic region that the scene is in, wherein the geographic region is at least a portion of a continent; and associating an indicator of the prediction of the geographic region with an identifier of the object in a data structure.
Aspect 2. The computer-implemented method of Aspect 1, wherein the object includes at least a portion of a person.
Aspect 3. The computer-implemented method of any of Aspects 1 or 2, further comprising: receiving further information indicating a level of accuracy of the prediction of the geographic region; and updating the at least one trained machine learning model based on the further information to improve an accuracy of the trained machine learning model at geographic region prediction.
Aspect 4. The computer-implemented method of any of Aspects 1 to 3, further comprising: comparing the prediction of the geographic region with a second indicator of geographic region of the object to identify a conflict between the prediction and the second indicator; and associating an indicator of the conflict with the identifier of the object in the data structure.
Aspect 5. A computer-implemented method comprising: receiving content, wherein the content includes a representation of an object in a scene; analyzing the content to detect a first portion of the content that represents the object, wherein a second portion of the content represents the scene; obfuscating the first portion of the content to generate obfuscated content, wherein the obfuscated content retains the second portion of the content that represents the scene; analyzing the obfuscated content using at least one artificial intelligence model to generate a prediction of a geographic region that the scene is in, wherein the geographic region is at least a portion of a continent; and outputting an indicator of the prediction of the geographic region.
Aspect 6. The computer-implemented method of Aspect 5, wherein the object includes at least a portion of a person.
Aspect 7. The computer-implemented method of any of Aspects 5 or 6, wherein the object includes personally identifiable information (PII) associated with a person.
Aspect 8. The computer-implemented method of any of Aspects 5 to 7, wherein the at least one artificial intelligence model includes at least one trained machine learning model, further comprising: receiving further information indicating a level of accuracy of the prediction of the geographic region; and updating the at least one trained machine learning model based on the further information to improve an accuracy of the trained machine learning model at geographic region prediction.
Aspect 9. The computer-implemented method of any of Aspects 5 to 8, wherein analyzing the content to detect the first portion of the content that represents the object includes processing the content using a second artificial intelligence model that detects the first portion of the content that represents the object.
Aspect 10. The computer-implemented method of Aspect 9, wherein the second artificial intelligence model includes a second trained machine learning model, further comprising: receiving further information indicating a level of accuracy of the detection of the first portion; and updating the second trained machine learning model based on the further information to improve an accuracy of the second trained machine learning model at object detection.
Aspect 11. The computer-implemented method of any of Aspects 5 to 10, wherein obfuscating the first portion of the content includes masking the first portion of the content.
Aspect 12. The computer-implemented method of any of Aspects 5 to 11, wherein obfuscating the first portion of the content includes at least one of blurring the first portion of the content or pixelating the first portion of the content.
Aspect 13. The computer-implemented method of any of Aspects 5 to 12, wherein obfuscating the first portion of the content includes interpolating based on the second portion of the content to replace the first portion of the content.
Aspect 14. The computer-implemented method of any of Aspects 5 to 13, further comprising: comparing the prediction of the geographic region with a second indicator of geographic region of the object to identify a conflict between the prediction and the second indicator, wherein the indicator of the prediction of the geographic region is an indicator of the conflict.
Aspect 15. The computer-implemented method of Aspect 14, further comprising: automatically disabling access to at least one of an asset or a function of a device in response to identifying the conflict.
Aspect 16. The computer-implemented method of any of Aspects 5 to 15, further comprising: processing the prediction of the geographic region and a second indicator of geographic region of the object using a second artificial intelligence model to determine a level of confidence in an identity of a user, wherein the object is the user; and using the level of confidence in the identity of the user for at least one of a fraud check, an identity verification, or a transaction authorization.
Aspect 17. The computer-implemented method of Aspect 16, wherein the second artificial intelligence model includes a second trained machine learning model, further comprising: receiving further information about the identity of the user; and updating the second trained machine learning model based on the further information to improve an accuracy of the second trained machine learning model at identity determination.
Aspect 18. The computer-implemented method of any of Aspects 5 to 17, wherein outputting the indicator of the prediction of the geographic region includes associating the indicator of the prediction of the geographic region with an identifier of the object in a data structure.
Aspect 19. The computer-implemented method of any of Aspects 5 to 18, wherein outputting the indicator of the prediction of the geographic region includes using the prediction of the geographic region to make a decision, wherein the decision includes at least one of a decision for which region to input for a region field of a form, a decision whether a functionality of a device is to be enabled, a decision as to what currency to use in association with a transaction, a decision as to what price to use in association with a transaction, a decision as to what language to use for a string of text, or a decision as to which of a set of locations to select.
Aspect 20. A system comprising: a memory that stores instructions; and a processor coupled to the memory, wherein execution of the instructions by the processor causes the processor to: receive content, wherein the content includes a representation of an object in a scene; analyze the content to detect a first portion of the content that represents the object, wherein a second portion of the content represents the scene; obfuscate the first portion of the content to generate obfuscated content, wherein the obfuscated content retains the second portion of the content that represents the scene; analyze the obfuscated content using at least one artificial intelligence model to generate a prediction of a geographic region that the scene is in, wherein the geographic region is at least a portion of a continent; and output an indicator of the prediction of the geographic region.
Aspect 20A. A system comprising: a memory that stores instructions; and one or more processors coupled to the memory, wherein execution of the instructions by the one or more processors causes the one or more processors to perform operations according to any of Aspects 1 to 20.
Aspect 21. A (optionally non-transitory) computer-readable medium having stored thereon instructions that, when executed by one or more processors, cause the one or more processors to perform operations according to any of Aspects 1 to 20.
Aspect 22. An apparatus for sensor data processing, the apparatus comprising one or more means for performing operations according to any of Aspects 1 to 20.

## Claims

1. A computer-implemented method comprising:
receiving content, wherein the content includes a representation of an object in a scene;
analyzing the content to detect a first portion of the content that represents the object, wherein a second portion of the content represents the scene;
obfuscating the first portion of the content to generate obfuscated content, wherein the obfuscated content retains the second portion of the content that represents the scene;
analyzing the obfuscated content using at least one artificial intelligence model to generate a prediction of a geographic region that the scene is in, wherein the geographic region is at least a portion of a continent; and
outputting an indicator of the prediction of the geographic region.

2. The computer-implemented method of claim 1, wherein the object includes at least a portion of a person.

3. The computer-implemented method of claim 1 or claim 2, wherein the object includes personally identifiable information (PII) associated with a person.

4. The computer-implemented method of any of claims 1 to 3, wherein the at least one artificial intelligence model includes at least one trained machine learning model, further comprising:
receiving further information indicating a level of accuracy of the prediction of the geographic region; and
updating the at least one trained machine learning model based on the further information to improve an accuracy of the trained machine learning model at geographic region prediction.

5. The computer-implemented method of any of claims 1 to 4, wherein analyzing the content to detect the first portion of the content that represents the object includes processing the content using a second artificial intelligence model that detects the first portion of the content that represents the object.

6. The computer-implemented method of claim 5, wherein the second artificial intelligence model includes a second trained machine learning model, further comprising:
receiving further information indicating a level of accuracy of the detection of the first portion; and
updating the second trained machine learning model based on the further information to improve an accuracy of the second trained machine learning model at object detection.

7. The computer-implemented method of any of claims 1 to 6, wherein obfuscating the first portion of the content includes one or more of: masking the first portion of the content; blurring the first portion of the content; or pixelating the first portion of the content.

8. The computer-implemented method of any of claims 1 to 7, wherein obfuscating the first portion of the content includes interpolating based on the second portion of the content to replace the first portion of the content.

9. The computer-implemented method of any of claims 1 to 8, further comprising:
comparing the prediction of the geographic region with a second indicator of geographic region of the object to identify a conflict between the prediction and the second indicator, wherein the indicator of the prediction of the geographic region is an indicator of the conflict.

10. The computer-implemented method of claim 9, further comprising:
automatically disabling access to at least one of an asset or a function of a device in response to identifying the conflict.

11. The computer-implemented method of any of claims 1 to 10, further comprising:
processing the prediction of the geographic region and a second indicator of geographic region of the object using a second artificial intelligence model to determine a level of confidence in an identity of a user, wherein the object is the user; and
using the level of confidence in the identity of the user for at least one of a fraud check, an identity verification, or a transaction authorization.

12. The computer-implemented method of claim 11, wherein the second artificial intelligence model includes a second trained machine learning model, further comprising:
receiving further information about the identity of the user; and
updating the second trained machine learning model based on the further information to improve an accuracy of the second trained machine learning model at identity determination.

13. The computer-implemented method of any of claims 1 to 12, wherein outputting the indicator of the prediction of the geographic region includes associating the indicator of the prediction of the geographic region with an identifier of the object in a data structure, and/or, wherein outputting the indicator of the prediction of the geographic region includes using the prediction of the geographic region to make a decision, wherein the decision includes at least one of a decision for which region to input for a region field of a form, a decision whether a functionality of a device is to be enabled, a decision as to what currency to use in association with a transaction, a decision as to what price to use in association with a transaction, a decision as to what language to use for a string of text, or a decision as to which of a set of locations to select.

14. A system comprising:
a memory that stores instructions; and
a processor coupled to the memory, wherein execution of the instructions by the processor causes the processor to:
receive content, wherein the content includes a representation of an object in a scene;
analyze the content to detect a first portion of the content that represents the object, wherein a second portion of the content represents the scene;
obfuscate the first portion of the content to generate obfuscated content, wherein the obfuscated content retains the second portion of the content that represents the scene;
analyze the obfuscated content using at least one artificial intelligence model to generate a prediction of a geographic region that the scene is in, wherein the geographic region is at least a portion of a continent; and
output an indicator of the prediction of the geographic region.

15. A computer-implemented method for image processing, the computer-implemented method comprising:
receiving an image of an object in a scene, wherein the image includes a plurality of pixels;
analyzing the image to detect pixels representing the object within the plurality of pixels of the image, wherein the pixels depicting the object are a first subset of the plurality of pixels of the image, wherein a second subset of the plurality of pixels of the image represent the scene;
masking the pixels representing the object to generate a masked image, wherein the masked image retains the second subset of the plurality of pixels that represent the scene;
analyzing the masked image using at least one trained machine learning model to generate a prediction of a geographic region that the scene is in, wherein the geographic region is at least a portion of a continent; and
associating an indicator of the prediction of the geographic region with an identifier of the object in a data structure.
